(19) Europäisches Patentamt
European Patent Office
Office européen des brevets

(11) EP 3 724 291 B1

(12) # FASCICULE DE BREVET EUROPEEN

(45) Date de publication et mention de la délivrance du brevet:
**18.09.2024 Bulletin 2024/38**

(21) Numéro de dépôt: **18833928.7**

(22) Date de dépôt: **13.12.2018**

(51) Classification Internationale des Brevets (IPC):
***C09J 171/02*** *(2006.01)* ***C09J 175/08*** *(2006.01)*
***C09J 7/38*** *(2018.01)*

(52) Classification Coopérative des Brevets (CPC):
(C-Sets disponibles)
**C09J 171/02; C08G 18/48; C08G 18/755; C08G 18/758; C08G 18/7621; C08G 18/7642; C08G 18/7671; C08G 18/837; C09J 7/38; C09J 175/08; C09J 201/10;** C08G 2170/20; C09J 2471/00; C09J 2475/00 (Cont.)

(86) Numéro de dépôt international:
**PCT/FR2018/053261**

(87) Numéro de publication internationale:
**WO 2019/115952 (20.06.2019 Gazette 2019/25)**

(54) **COMPOSITION ADHESIVE MULTICOMPOSANTE ET SES UTILISATIONS**

MEHRKOMPONENTEN-HAFTZUSAMMENSETZUNG UND VERWENDUNG DAVON

ADHESIVE MULTICOMPONENT COMPOSITION AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2017 FR 1762126**

(43) Date de publication de la demande:
**21.10.2020 Bulletin 2020/43**

(73) Titulaire: **Bostik SA**
**92700 Colombes (FR)**

(72) Inventeurs:
- **LAFERTE, Olivier**
  **60280 VENETTE (FR)**
- **GARNIER, Claire**
  **60280 VENETTE (FR)**
- **GUILLOTTE, Régis**
  **60280 VENETTE (FR)**
- **BORDAT, Jean-Marie**
  **60280 VENETTE (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 2 336 208** **EP-A1- 2 878 364**
**EP-A1- 2 886 201** **EP-A1- 2 889 349**
**EP-B1- 2 336 208** **WO-A1-2018/078271**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08G 18/10, C08G 18/289**

## Description

### DOMAINE DE L'INVENTION

La présente invention a pour objet une composition adhésive multicomposante, et l'utilisation de ladite composition adhésive pour la préparation d'article auto-adhésif.

La présente invention concerne également un procédé d'application à chaud de ladite composition.

### ARRIERE-PLAN TECHNIQUE

Les compositions adhésives thermofusibles sensibles à la pression (également dénommés compositions de colles auto-adhésives ou encore, en anglais, "Hot-Melt Pressure Sensitive Adhésives" compositions ou HMPSA) sont des compositions conférant au support qui en est revêtu un pouvoir collant immédiat à température ambiante (souvent désigné sous le terme de "tack"), lequel permet avantageusement son adhésion instantanée à un substrat sous l'effet d'une pression légère et brève. Les HMPSA sont largement utilisés pour la fabrication d'articles auto-adhésifs, tels que par exemple d'étiquettes auto-adhésives qui sont fixées sur des articles à des fins de présentation d'informations (telles que code barre, dénomination, prix) et/ou à des fins décoratives, que ce soit lors de collages définitifs ou temporaires. Les HMPSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; la fixation et le maintien d'éléments divers tels que panneaux, briques, objets protubérants, dans la construction de bâtiments ou d'édifices ; la fixation et le maintien de parties métalliques ou plastiques ou en verre, plates ou ayant des profils spécifiques, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs à double face dans le domaine du bâtiment.

En vue de la fabrication d'articles auto-adhésifs (par exemple d'étiquettes et/ou rubans auto-adhésifs), les HMPSA sont souvent appliqués par des procédés d'enduction en continu sur la totalité de la surface d'une couche support (le cas échéant imprimable) de grandes dimensions, à raison d'une quantité (généralement exprimée en $g/m^2$) et désignée ci-après par le terme de "grammage". La couche support est constituée de papier ou de film constitué d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueurs déterminées avec découpe ou pré-découpe de formes particulières utiles à leur utilisation finale, comme par exemple pour l'assemblage de pièces de taille variable et de forme variable, dans l'industrie de.l'électronique, que ce soit pour des applications industrielles ou par le grand public.

Les HMPSA permettent avantageusement, en raison de leur pégosité (« tack » en anglais) élevée à température ambiante, une prise ou accroche rapide de l'article auto-adhésif (par exemple étiquette et/ou ruban auto-adhésifs) sur le substrat à revêtir (par exemple, s'agissant d'étiquettes, sur des bouteilles ou bien, s'agissant de rubans, sur des cartons d'emballage à mettre en forme).

Dans certaines applications, on cherche à obtenir des collages ayant une résistance mécanique élevée, à température ambiante ou à températures élevées. Les compositions thermofusibles peuvent être réticulées par différentes technologies. L'émission de radiation de type Ultra-violet (UV) ou Electron Beam (EB) sont bien connues pour former des liaisons covalentes qui permettent de lier les molécules ou les chaînes polymériques entre elles, et provoquer ainsi une meilleure résistance du matériau auto-adhésif. D'autres systèmes dits « chimiquement réactifs » sont connus, qui vont permettre de créer des liaisons covalentes au sein du matériau adhésif : par réactions radicalaires, ou par voie de catalyse cationique, d'addition, de condensation... Par exemple, il est connu d'utiliser des polymères silylés dans les HMPSA, qui par hydrolyse et condensation des fonctions réactives silanes, vont avantageusement permettre la formation de ponts de type siloxane entre les composés.

L'enduction de tels systèmes dits « chimiquement réactifs » s'accompagne typiquement d'une étape de réticulation des fonctions réactives, généralement réalisée dans un four. Le temps de réticulation nécessaire pour obtenir les propriétés d'adhésion est un paramètre particulièrement important sur le plan de la production industrielle des articles auto-adhésifs. En effet, dans le cas par exemple des systèmes réticulables contenant des polymères silylés, il détermine le dimensionnement du four, ainsi que le temps de séjour correspondant de la couche support enduite, qui va conditionner la consommation énergétique, et donc la productivité du procédé dans son ensemble.

EP2 889 349 décrit une composition adhésive monocomposante comprenant au moins un polymère silylé, au moins une résine tackifiante, et au moins un catalyseur de réticulation. EP2886201 concerne un procédé d'application d'une composition adhésive comprenant de 20% à 85% en poids de prépolymère silylé, de 15% à 80% en poids d'au moins une résine tackifiante, et de 0,01% à 3% en poids d'au moins un catalyseur de réticulation.

Il existe donc un besoin pour de nouvelles compositions adhésives conduisant à des temps de réticulation plus rapides, et donc permettant de préparer des articles auto-adhésifs sur des lignes de production présentant des vitesses de lignes plus élevées.

Il existe également un besoin pour de nouvelles compositions adhésives permettant de préparer des articles auto-adhésifs avec une cadence de production industrielle élevée, tout en présentant de bonnes propriétés d'adhésion après réticulation.

Il existe également un besoin pour de nouvelles compositions adhésives qui conduisent à des articles auto-adhésifs n'ayant pas de défauts optiques et/ou physiques.

## DESCRIPTION DE L'INVENTION

La présente invention concerne une composition adhésive multicomposante, de préférence thermofusible sensible à la pression, comprenant :

- une composition A comprenant :
  - au moins un polymère silylé comprenant au moins un groupe alkoxysilane hydrolysable ;
  - au moins une résine tackifiante ;
- une composition B comprenant :
  - au moins un catalyseur ;
  - au moins un composé C choisi parmi :
    - un composé C1 ayant une masse moléculaire moyenne en nombre allant de 300 g/mol à 500 000 g/mol; et
    - un composé C2 ayant une tension de vapeur à 20°C supérieure ou égale à 0,08 kPa ;
    - et leurs mélanges ;

le ratio massique composition A : composition B allant de 99,98 : 0,02 à 60 : 40, de préférence de 99,95 : 0,05 à 60 : 40, et préférentiellement de 99,95 : 0,05 à 80 : 20, et encore plus préférentiellement de 99,95 : 0,05 à 90 : 10 ; la teneur totale en catalyseur allant de 0,01 % à 10%, de préférence de 0,01 % à 5% en poids par rapport au poids total de ladite composition adhésive.

De préférence, la composition selon l'invention est une composition bicomposante.

Dans la présente demande, les viscosités indiquées sont mesurées à l'aide d'un viscosimètre Brookfield cône plan CAP2000+.

## Composition A

### 1. *Polymère silylé*

Le polymère silylé comprend au moins un groupe alkoxysilane hydrolysable, de préférence terminal, et de préférence au moins deux groupes alkoxysilane hydrolysables, préférentiellement terminaux.

Le polymère silylé peut être un polymère comprenant au moins un, de préférence au moins deux groupes de formule (I), en particulier terminal (aux) :

$$-Si(R^4)_p(OR^5)_{3-p} \qquad (I)$$

dans laquelle :

- $R^4$ et $R^5$, identiques ou différents, représentent chacun un radical alkyl linéaire ou ramifié comprenant de 1 à 4 atomes de carbone;
- p est un nombre entier égal à 0, 1 ou 2.

Lorsque p = 2, les groupes $R^4$ peuvent être identiques ou différents.
Lorsque p = 1 ou p = 0, les groupes $R^5$ peuvent être identiques ou différents.
Selon l'invention, le polymère silylé comprenant au moins un groupe alkoxysilane hydrolysable, de préférence au moins deux, peut posséder une chaîne principale polyéther, une chaîne principale polyester, une chaîne principale polyester-polyéther-polyester, une chaîne principale polyéther-polyester-polyéther, une chaîne principale polyoléfine, une chaîne principale polycaprolactone, une chaîne principale polyacrylate, une chaîne principale polycarbonate, une chaîne principale polyéther-polycarbonate, une chaîne principale polyester-polycarbonate, une chaîne principale polyacétal, une chaîne principale polyester-polyamide, une chaîne principale polythioéther, une chaîne principale polyuréthane, une chaîne principale polyester-polyuréthane, une chaîne principale polyéther-polyuréthane, une chaîne principale polyéther-polyester-polyuréthane, une chaîne principale polyoléfine-polyuréthane, une chaîne principale polyéther-polyoléfine-polyuréthane.
De préférence, les polymères silylés comportant au moins un groupe alkoxysilane hydrolysable sont choisis parmi les polyéther-polyuréthane silylés, les polyéthers silylés, les polyester silylés, les polyester-polyuréthane silylés, et leurs mélanges.
Le polymère silylé peut avoir une masse moléculaire moyenne en nombre allant de 500 à 50 000 g/mol, de préférence allant de 700 à 30 000 g/mol, avantageusement de 1 000 à 25 000 g/mol, en particulier de 1 000 à 21 000 g/mol.
La masse moléculaire moyenne en nombre des polymères silylés peut être mesurée par des méthodes bien connues de l'homme du métier, par exemple par chromatographie d'exclusion stérique en utilisant des étalons de type polystyrène.
Selon un mode de réalisation, le polymère silylé comportant au moins un groupe alkoxysilane hydrolysable est choisi parmi les polymères de formules (II), (III), (IV), ou (V) telles que définies ci-dessous, et leurs mélanges :

$$(R^5O)_{3-p}(R^4)_pSi\text{-}R^0\text{-}[OR^2]_n\text{-}R^0\text{-}Si(R^4)p(OR^5)_{3-p} \qquad (II)$$

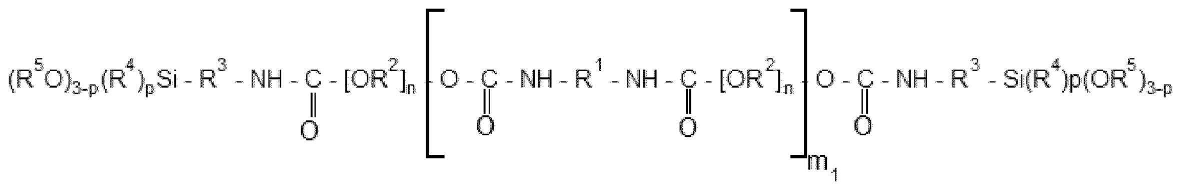

(III)

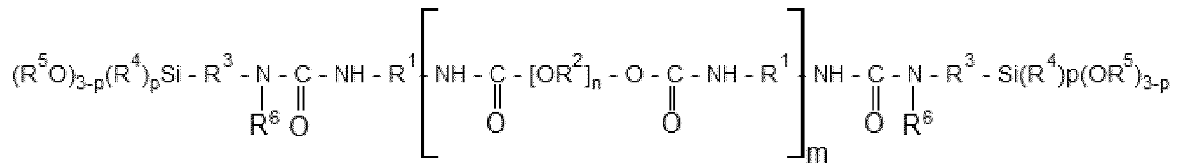

(IV)

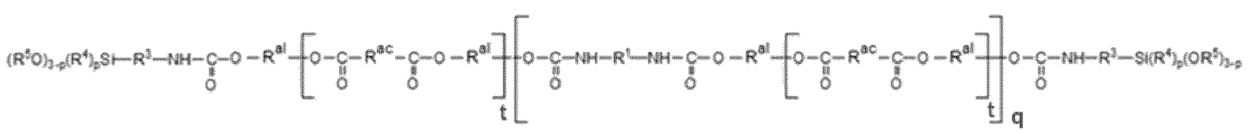

(V)

dans lesquelles :

- $R^1$ représente un radical divalent hydrocarboné comprenant de 5 à 15 atomes de carbone qui peut être aromatique ou aliphatique, linéaire, ramifié ou cyclique,
- $R^0$ représente un radical divalent alkylène linéaire ou ramifié comprenant de 3 à 6 atomes de carbone,
- $R^3$ représente un radical divalent alkylène linéaire ou ramifié comprenant de 1 à 6 atomes de carbone, de préférence $R^3$ représentant méthylène ou n-propylène,
- $R^2$ représente un radical divalent alkylène linéaire ou ramifié comprenant de 2 à 4 atomes de carbone,
- $R^4$ et $R^5$, identiques ou différents, représentent chacun un radical alkyle linéaire ou ramifié comprenant de 1 à 4 atomes de carbone,
- $R^6$ représente un atome d'hydrogène, un radical phényle, un radical alkyle linéaire, ramifié ou cyclique comprenant de 1 à 6 atomes de carbone, ou un radical 2-succinate de formule :

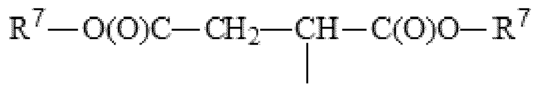

dans laquelle $R^7$ est un radical alkyle linéaire ou ramifié comprenant de 1 à 6 atomes de carbone,
- n est un nombre entier tel que la masse moléculaire moyenne en nombre du bloc polyéther de formule $-[OR^2]_n-$ va de 300 g/mol à 40 000 g/mol dans les polymères de formules (II), (III) et (IV),
- $m_1$ est zéro ou un nombre entier,
- n et $m_1$ sont tels que la masse moléculaire moyenne en nombre du polymère de formule (III) va de 500 g/mol à 50 000 g/mol, de préférence de 700 g/mol à 20 000 g/mol,
- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1,
- $R^{al}$ représente un radical hydrocarboné divalent issu d'un diol par remplacement de chacun des deux groupes hydroxyles par une valence libre;
- $R^{ac}$ représente un radical hydrocarboné divalent issu d'un acide dicarboxylique par remplacement de chacun des deux groupes carboxyles -COOH par une valence libre;
- t est un nombre tel que le polyester diol de formule (VI) :

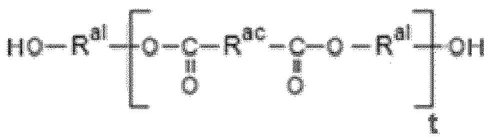

(VI)

a un indice d'hydroxyle $I_{OH}$ compris entre 4 et 60 mg KOH/g ;
- q est un nombre entier différent de zéro,
- t et q sont tels que la masse moléculaire moyenne en nombre du polymère de formule (V) est comprise entre 400 g/mol et 50 000 g/mol.

De préférence, le radical $R^1$ des formules (II), (III), (IV) et (V) est choisi parmi l'un des radicaux divalents suivants dont les formules ci-dessous font apparaître les 2 valences libres :

- a) le radical divalent dérivé de l'isophorone diisocyanate (IPDI) :

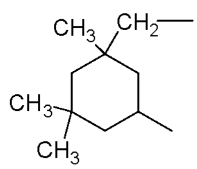

- b) le radical divalent dérivé des 4,4'- et 2,4'-dicyclohexylméthane diisocyanate (HMDI)

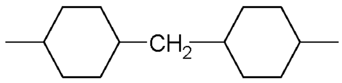

ou

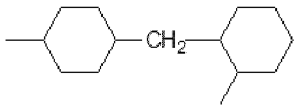

- c) le radical dérivé des 2,4- et 2,6-toluène diisocyanate (TDI)

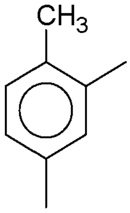

ou

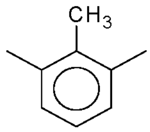

- d) le radical dérivé des 4,4'- et 2,4'-diphénylméthane diisocyanate (MDI)

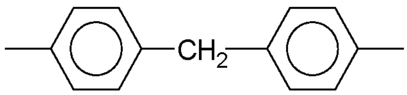

ou

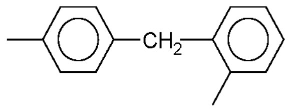

- e) le radical dérivé du m-xylylène diisocyanate (m-XDI)

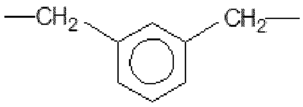

- f) le radical dérivé de l'hexamethylène diisocyanate (HDI)

$-(CH_2)_6-$

De préférence, le radical $R^1$ des formules (II), (III), (IV) et (V) est le radical divalent dérivé de l'isophorone diisocyanate ou du xylylène diisocyanate.

Les polymères de formule (III) peuvent être obtenus selon un procédé décrit dans les documents EP 2336208 et WO 2009/106699.

Parmi les polymères répondant à la formule (III), on peut par exemple citer :

- GENIOSIL ® STP-E10 (disponible auprès de WACKER) : polyéther comprenant deux groupes (I) de type diméthoxy ($m_1$ égal à 0, p égal à 1 et $R^4$ et $R^5$ représentent un groupement méthyle) présentant une masse moléculaire moyenne en nombre d'environ 8 889 g/mol où $R^3$ représente un groupement méthylène;
- GENIOSIL ® STP-E30 (disponible auprès de WACKER) : polyéther comprenant deux groupes de formule (I) de type diméthoxy ($m_1$ égal à 0, p égal à 1 et $R^4$ et $R^5$ représentent un groupement méthyle) présentant une masse moléculaire moyenne en nombre d'environ 14 493 g/mol où $R^3$ représente un groupement méthylène;
- SPUR+ ® 1050MM (disponible auprès de MOMENTIVE) : polyéther-polyuréthane comprenant deux groupes de formule (I) de type triméthoxy ($m_1$ différent de 0, p égal à 0 et $R^5$ représente un groupement méthyle) présentant une masse moléculaire moyenne en nombre d'environ 16 393 g/mol où $R^3$ représente un groupement n-propylène ;
- SPUR+ ® Y-19116 (disponible auprès de MOMENTIVE) : polyéther-polyuréthane comprenant deux groupes de formule (I) de type triméthoxy ($m_1$ différent de 0 et $R^5$ représente un groupement méthyle) présentant une masse moléculaire moyenne en nombre allant de 15 000 à 17 000 g/mol où $R^3$ représente un groupement n-propylène ;
- DESMOSEAL ® S XP 2636 (disponible auprès de BAYER) : polyéther comprenant deux groupes de formule (I) de type triméthoxy ($m_1$ égal à 0, p égal à 0 et $R^5$ représente un groupement méthyle) présentant une masse moléculaire moyenne en nombre d'environ 15 038 g/mol où $R^3$ représente un groupement n-propylène.

Les polymères de formule (II) peuvent être obtenus par hydrosilylation de polyéther diallyléther selon un procédé

décrit par exemple dans le document EP1829928.

Parmi les polymères répondant à la formule (II), on peut citer :

- le MS POLYMER™ S303H (disponible auprès de KANEKA) correspondant à un polyéther comprenant deux groupes de formule (I) de type diméthoxy (p est égal à 1 et $R^4$ représente un groupement méthyle) ayant une masse moléculaire moyenne en nombre d'environ 22 000 g/mol et une viscosité de 12,5 Pa.s à 23°C ;
- le MS POLYMER™ S227 (disponible auprès de KANEKA) correspondant à un polyéther comprenant deux groupes de formule (I) de type diméthoxy (p est égal à 1, $R^5$ et $R^4$ représentent chacun un groupement méthyle) ayant une masse moléculaire moyenne en nombre d'environ 27 000 g/mol, et une viscosité de 34 Pa.s à 23°C.

Les polymères de formule (IV) peuvent être obtenus selon le procédé suivant :

a) réaction d'un polyéther polyol de formule suivante :

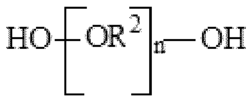

avec un excès stoechiométrique de diisocyanate de formule suivante: $NCO-R^1-NCO$ pour former un bloc polyuréthane-polyéther ayant au moins deux groupes terminaux -NCO, ledit bloc comprenant de préférence de 1,5% à 1,9% en poids de groupement -NCO, et puis

b) réaction entre un bloc obtenu à l'étape précédente avec une quantité stoechiométrique ou un léger excès d'une $\alpha$-, $\beta$- ou $\gamma$-aminosilane ayant la formule suivante :

$$(R^5O)_{3-p}(R^4)_pSi-R^3-NHR^6$$

Un tel procédé est par exemple décrit dans WO 2013/136108.

Parmi les polymères répondant à la formule (IV), on peut par exemple citer :

- le SPUR+ 1015 LM (disponible auprès de MOMENTIVE) correspondant à un polyéther-polyuréthane comprenant deux groupes de formule (I) de type triméthoxy (p est égal à 0, $R^5$ représente un groupement méthyle) ayant une masse moléculaire en nombre d'environ 25 000 g/mol et une viscosité de 50 Pa à 23°C.

Les polymères de formule (V) peuvent être ceux décrits dans la demande EP 2 865 694. Ils peuvent être préparés selon le procédé décrit dans cette demande.

Selon un mode de réalisation, le polymère de formule (V) est un polymère de formule (V-A) dans laquelle :

- $R^{al}$ représente un radical hydrocarboné divalent qui est dérivé d'un alcool gras dimérisé par remplacement de chacun des 2 groupes hydroxyle par une valence libre, ledit alcool ayant un indice d'hydroxyle $I_{OH}$ compris entre 200 et 220 mg KOH/g ; et
- $R^{ac}$ représente un radical hydrocarboné divalent qui est dérivé d'un acide gras dimérisé par remplacement de chacun des 2 groupes carboxyles -COOH par une valence libre, ledit acide ayant un indice d'acide $I_A$ compris entre 190 et 200 mg KOH/g.

De préférence, dans le polymère de formule (V-A), t est un nombre tel que le polyester diol de formule (VI) :

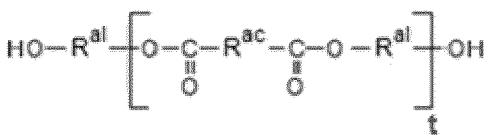

(VI)

a un indice d'hydroxyle $I_{OH}$ compris entre 45 et 55 mg KOH/g.

Les polymères de formule (V-A) peuvent être obtenus selon le procédé décrit dans la demande EP 2 865 728 (en particulier aux pages 5 à 9).

De préférence, les polymères de formule (V-A) ont une masse moléculaire moyenne en nombre allant de 900 à 15 000 g/mol.

Selon un mode de réalisation, le polymère de formule (V) est un polymère de formule (V-B) dans laquelle :

- $R^{al}$ représente un radical hydrocarboné divalent issu d'un diol saturé, par remplacement de chacun des deux groupes hydroxyles par une valence libre, ledit diol ayant un indice d'hydroxyle $I_{OH}$ supérieur à 220 mg KOH/g ; et
- $R^{ac}$ représente un radical hydrocarboné divalent issu d'un acide dicarboxylique saturé, par remplacement de chacun des deux groupes carboxyles -COOH par une valence libre, ledit acide ayant un indice d'acide $I_A$ supérieur à 200 mg KOH/g.

De préférence, dans le polymère de formule (V-B), t est un nombre tel que le polyester diol de formule (VI) :

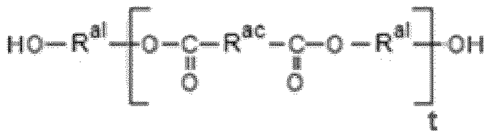

(VI)

a un indice d'hydroxyle $I_{OH}$ compris entre 4 et 24 mg KOH/g, en particulier entre 9 et 24 mg KOH/g.

Les polymères de formule (V-B) peuvent être obtenus par un procédé qui comprend plusieurs étapes séquentielles :

1ère étape : Préparation d'un polyester de formule (VI) ayant un indice hydroxyle $I_{OH}$ compris entre 4 et 24 mg KOH/g

Le polyester de formule (VI) peut être préparé par une réaction de polycondensation entre :

- (i) au moins un acide dicarboxylique saturé ayant un indice d'acide $I_A$ supérieur à 200 mg KOH/g ; et
- (ii) au moins un diol saturé ayant un indice d'hydroxyle $I_{OH}$ supérieur à 220 mg KOH/g ; à condition, de préférence, qu'au moins un acide dicarboxylique saturé de la composition (A-1-1) ou au moins un diol saturé de la composition (A-1-2) soit ramifié.

Dans le présent texte :

- l'indice d'acide $I_A$ d'un acide dicarboxylique est le nombre de fonction carboxylique par gramme d'acide, ledit nombre étant exprimé sous la forme d'équivalent en milligrammes de KOH nécessaire pour neutraliser l'acidité de 1 gramme de d'acide, déterminé par titrimétrie, ledit nombre étant relié à la masse moléculaire moyenne en nombre M dudit acide par la relation suivante :

$$I_A = (56,1 \times 2 \times 1000) / M$$

- l'indice hydroxyle $I_{OH}$ d'un diol est le nombre de fonctions hydroxyle par gramme de diol, ledit nombre étant exprimé sous la forme d'équivalent en milligrammes de KOH utilisé dans le dosage des fonctions hydroxyles, déterminé par titrimétrie selon la norme ISO 14900:2001, ledit nombre étant relié à la masse moléculaire moyenne en nombre M' dudit diol par la relation :

$$I_{OH} = (56,1 \times 2 \times 1000)/ M'$$

De préférence, l'(les) acide(s) dicarboxylique(s) saturé(s) a (ont) un indice d'acide $I_A$ supérieur ou égal à 300 mg KOH/g, de préférence supérieur ou égal à 400 mg KOH/g, préférentiellement supérieur ou égal à 500 mg KOH/g, en particulier supérieur ou égal à 700 mg KOH/g, et avantageusement supérieur ou égal à 800 mg KOH/g. De préférence, l'(les) acide(s) dicarboxylique(s) saturé(s) a (ont) un indice d'acide $I_A$ égal à 555 mg KOH/g ou égal à 768 mg KOH/g.

L'acide dicarboxylique peut être linéaire ou ramifié, de préférence linéaire, aliphatique ou cycloaliphatique.

L'acide dicarboxylique selon l'invention peut être choisi dans le groupe constitué de l'acide malonique, de l'acide succinique, de l'acide fumarique, de l'acide glutarique, de l'acide adipique, de l'acide 1,3- ou 1,4-cyclohexane dicarboxylique, de l'acide 3-méthyl-1,5-pentanedicarboxylique, de l'acide 1,10-décanedicarboxylique, de l'acide 1,12-dodécanedicarboxylique, de l'acide 1,18-octadécanedicarboxylique, de l'acide méthyltétrahydrophthalique, de l'acide hexahydrophthalique, de l'acide tétrahydrophthalique, de l'acide azélaique, de l'acide sébacique et de leurs mélanges. De préférence, l'acide dicarboxylique est l'acide adipique ou l'acide sébacique.

De préférence, le(s) diol(s) saturé(s) a(ont) un indice d'hydroxyle $I_{OH}$ supérieur ou égal à 500 mg KOH/g, de préférence supérieur ou égal à 700 mg KOH/g, encore plus préférentiellement supérieur ou égal à 900 mg KOH/g. De préférence, le(s) diol(s) saturé(s) de la composition (A-1-2) a (ont) un indice d'hydroxyle $I_{OH}$ égal à 950 mg KOH/g, ou égal à 1078 mg KOH/g, ou égal à 1808 mg KOH/g.

Le diol mis en oeuvre peut être aromatique ou aliphatique (de préférence aliphatique), linéaire ou ramifié, de préférence ramifié.

Le diol selon l'invention peut être choisi dans le groupe constitué de l'éthylène glycol (CAS : 107-21-1), du diéthylène glycol, du triéthylène glycol, du tétraéthylène glycol, du 1,2-propanediol, du dipropylène glycol, du tripropylène glycol, du tétrapropylène glycol, du 1,6-hexanediol, du 3-éthyl-2-méthyl-1,5-pentanediol, du 2-éthyl-3-propyl-1,5-pentanediol, du 2,4-diméthyl-3-éthyl-1,5-pentanediol, du 2-éthyl-4-méthyl-3-propyl-1,5-pentadiol, du 2,3-diéthyl-4-méthyl-1,5-pentanediol, du 3-éthyl-2,2,4-triméthyl-1,5-pentadiol, 2,2-diméthyl-4-éthyl-3-propyl-1,5-pentanediol, 2-méthyl-2-propyl-1,5-pentanediol, du 2,4-diméthyl-3-éthyl-2-propyl-1,5-pentanediol, du 2,3-dipropyl-4-éthyl-2-méthyl-1,5-pentanediol, du 2-butyl-2-éthyl-1,5-pentanediol, du 2-butyl-2,3-diéthyl-4-méthyl-1,5-pentanediol, du 2-butyl-2,4-diéthyl-3-propyl-1,5-pentanediol, du 3-butyl-2-propyl-1,5-pentanediol, du 2-méthyl-1,5-pentanediol (CAS: 42856-62-2), du 3-méthyl-1,5-pentanediol (MPD, CAS : 4457-71-0), du 2,2-diméthyl-1,3-pentanediol (CAS : 2157-31-5), du 2,2-diméthyl-1,5-pentanediol (CAS : 3121-82-2), du 3,3-diméthyl-1,5-pentanediol (CAS : 53120-74-4), du 2,3-diméthyl-1,5-pentanediol (CAS : 81554-20-3), du 2,2-diméthyl-1,3-propanediol (Néopentylglycol - NPG, CAS : 126-30-7), du 2,2-diethyl-1,3-propanediol (CAS : 115-76-4), du 2-méthyl-2-propyl-1,3-propanediol (CAS : 78-26-2), du 2-butyl-2-éthyl-1,3-propanediol (CAS : 115-84-4), du 2-méthyl-1,3-propanediol (CAS : 2163-42-0), du 2-benzyloxy-1,3-propanediol (CAS : 14690-00-7), du 2,2-dibenzyl-1,3-propanediol (CAS : 31952-16-6), du 2,2-dibutyl-1,3-propanediol (CAS : 24765-57-9), du 2,2-diisobutyl-1,3-propanediol, du 2,4-diéthyl-1,5-pentanediol, du 2-éthyl-1,6-hexanediol (CAS : 15208-19-2), du 2,5-diméthyl-1,6-hexanediol (CAS : 49623-11-2), du 5-méthyl-2-(1-methylethyl)-1,3-hexanediol (CAS: 80220-07-1), du 1,4-diméthyl-1,4-butanediol, du 1,5-hexanediol (CAS : 928-40-5), du 3-méthyl-1,6-hexanediol (CAS : 4089-71-8), du 3-tert-butyl-1,6-hexanediol (CAS : 82111-97-5), du 1,3-heptanediol (CAS : 23433-04-7), du 1,2-octanediol (CAS : 1117-86-8), du 1,3-octanediol (CAS : 23433-05-8), du 2,2,7,7-tétraméthyl-1,8-octanediol (CAS: 27143-31-3), du 2-méthyl-1,8-octanediol (CAS : 109359-36-6), du 2,6-diméthyl-1,8-octanediol (CAS : 75656-41-6), du 1,7-octanediol (CAS : 3207-95-2), du 4,4,5,5-tétraméthyl-3,6-dioxa-1,8-octanediol (CAS: 76779-60-7), du 2,2,8,8-tétraméthyl-1,9-Nonanediol (CAS : 85018-58-2), du 1,2-nonanediol (CAS : 42789-13-9), du 2,8-diméthyl-1,9-nonanediol (CAS : 40326-00-9), du 1,5-nonanediol (CAS : 13686-96-9), du 2,9-diméthyl-2,9-dipropyl-1,10-décanediol (CAS: 85018-64-0), du 2,9-dibutyl-2,9-diméthyl-1,10-decanediol (CAS : 85018-65-1), du 2,9-diméthyl-2,9-dipropyl-1,10-décanediol (CAS : 85018-64-0), du 2,9-diéthyl-2,9-diméthyl-1,10-décanediol (CAS: 85018-63-9), du 2,2,9,9-tétraméthyl-1,10-decanediol (CAS: 35449-36-6), du 2-nonyl-1,10-décanediol (CAS: 48074-20-0), du 1,9-décanediol (CAS : 128705-94-2), du 2,2,6,6,10,10-hexaméthyl-4,8-dioxa-1,11-undécanediol (CAS : 112548-49-9), du 1-phényl-1,11-undécanediol (CAS : 109217-58-5), du 2-octyl-1,11-undécanediol (CAS: 48074-21-1), du 2,10-diéthyl-2,10-diméthyl-1,11-undécanediol (CAS : 85018-66-2), du 2,2,10,10-tétramethyl-1,11-undécanediol (CAS : 35449-37-7), du 1-phényl-1,11-undécanediol (CAS: 109217-58-5), du 1,2-undécanediol (CAS: 13006-29-6), du 1,2-dodécanediol (CAS : 1119-87-5), du 2,11-dodécanediol (CAS : 33666-71-6), du 2,11-diéthyl-2,11-diméthyl-1,12-dodécanediol (CAS: 85018-68-4), du 2,11-diméthyl-2,11-dipropyl-1,12-dodécanediol (CAS: 85018-69-5), du 2,11-dibutyl-2,11-diméthyl-1,12-dodécanediol (CAS : 85018-70-8), du 2,2,11,11-tétraméthyl-1,12-dodécanediol (CAS: 5658-47-9), du 1,11-dodécanediol (CAS: 80158-99-2), du 11-méthyl-1,7-dodécanediol (CAS : 62870-49-9), du 1,4-dodécanediol (CAS: 38146-95-1), du 1,3-dodécanediol (CAS : 39516-24-0), du 1,10-dodécanediol (CAS : 39516-27-3), du 2,11-diméthyl-2,11-dodécanediol (CAS : 22092-59-7), du 1,5-dodécanediol (CAS : 20999-41-1), du 6,7-dodécanediol (CAS : 91635-53-9), et de leurs mélanges.

De préférence, le diol est choisi dans le groupe constitué de l'éthylène glycol (CAS : 107-21-1), du 1,6-hexanediol, du 3-méthyl-1,5-pentanediol (MPD, CAS : 4457-71-0), du 2,2-diméthyl-1,3-propanediol (Néopentylglycol - NPG, CAS : 126-30-7), et de leurs mélanges.

De préférence, le polyester de formule (VI) est obtenu par réaction de polycondensation entre:

- l'acide adipique ; et
- un mélange du néopentyl glycol, de l'éthylène glycol, et du 1,6-hexanediol ; ou entre :
- l'acide adipique ; et
- le 3-méthyl-1,5-pentanediol.

De préférence, le polyester diol de formule (VI) a un indice d'hydroxyle $I_{OH}$ compris entre 4 et 24 mg KOH/g, préférentiellement entre 7 et 24 mg KOH/g, de préférence entre 7 et 20 mg KOH/g, et en particulier entre 9 et 19 mg KOH/g. De préférence, l'indice d'hydroxyle $I_{OH}$ est compris entre 9 et 24 mg KOH/g.

Le polyester diol de formule (VI) peut avoir une température de transition vitreuse $T_g$ inférieure à 0°C, de préférence inférieure ou égale à -20°C, de préférence inférieure ou égale à -40°C, préférentiellement inférieure ou égale à -50°C, en particulier inférieure ou égale à - 60°C, par exemple inférieure ou égale à -64°C.

Le polyester diol de formule (VI) peut avoir une masse moléculaire moyenne en nombre supérieure ou égale à 5 500 g/mol, de préférence supérieure ou égale à 6 000 g/mol, en particulier strictement supérieure à 6 000 g/mol, préférentiellement supérieure ou égale à 8 000 g/mol, en particulier supérieure ou égale à 9 000 g/mol, par exemple supérieure ou égale à 10 000 g/mol, avantageusement supérieure ou égale 12 000 g/mol, et en particulier supérieure ou égale 18 000 g/mol.

La masse moléculaire moyenne en nombre du polyester diol de formule (VI) peut être déterminée à partir de son $I_{OH}$ et de sa fonctionnalité.

Parmi les polyesters diols amorphes de formule (VI), on peut par exemple citer le DYNACOLL ® 7250 commercialisé par EVONIK (polyester polyol ayant une viscosité de 180 Pa.s à 23°C, une masse moléculaire moyenne en nombre Mn égale à 5 500 g/mol, et une $T_g$ égale à -50°C), le KURARAY ® P-6010 commercialisé par KURARAY (polyester polyol ayant une viscosité de 68 Pa.s à 23°C, une masse moléculaire moyenne en nombre égale à 6 000 g/mol, et une $T_g$ égale à -64°C), ou le KURARAY ® P-10010 commercialisé par KURARAY (polyester polyol ayant une viscosité de 687 Pa.s à 23°C, une masse moléculaire moyenne en nombre égale à 10 000 g/mol).

2ème étape : préparation du polymère de formule (V)

Selon une première variante, le(s) polyester(s) (VI) susmentionné(s) peu(ven)t être mis en réaction avec l'isocyanatosilane de formule (VII) :

$$NCO\text{-}R^3\text{-}Si(R^4)_p(OR^5)_{3-p} \qquad (VII)$$

à raison d'une quantité correspondant à un rapport équivalent molaire des nombres de fonctions NCO/OH comprise entre 0,90 et 1,05 et de préférence égal à environ 1.

Cette étape est en particulier conduite dans des conditions anhydres, de manière à éviter l'hydrolyse des groupes alkoxysilanes. Un domaine de température typique pour la mise en oeuvre de cette étape réactionnelle est de 30°C à 120°C, et plus particulièrement de 60°C à 105°C.

Les isocyanatosilanes de formule (VII) susmentionnée sont largement disponibles dans le commerce. On peut notamment citer le SILQUEST ® A-LINK 35 soit le (3-isocyanatopropyl)triméthoxysilane) disponible auprès de MOMENTIVE, le SILQUEST ® A-LINK 25 soit le (3-isocyanatopropyl)triéthoxysilane) disponible auprès de MOMENTIVE, le (3-isocyanatopropyl)méthyldiméthoxysilane disponible auprès de GELEST, le GENIOSIL ® XL 42 soit le (3-isocyanatométhyl)méthyldiméthoxysilane disponible auprès de WACKER et le GENIOSIL ® XL 43 soit le (3-isocyanatométhyl)triméthoxysilane disponible auprès de WACKER.

Selon une seconde variante, la composition (A) peut être obtenue en deux étapes à partir de la composition (A-1) :

- a) réaction du(des) polyester polyol(s) de formule (VI) avec un diisocyanate de formule $NCO\text{-}R^1\text{-}NCO$ dans des quantités correspondant à un rapport équivalent molaire des nombres de fonctions NCO/OH compris entre 0,3 et 0,7 et de préférence égal à environ 0,5, pour former un bloc polyester-polyuréthane ;
- b) réaction entre un bloc obtenu à l'étape précédente avec l'isocyanatosilane de formule suivante $NCO\text{-}R^3\text{-}Si(R^4)_p(OR^5)_{3-p}$, à raison d'une quantité correspondant à un rapport équivalent molaire des nombres de fonctions NCO/OH comprise entre 0,90 et 1,05 et de préférence égal à environ 1.

Les isocyanatosilanes peuvent être ceux mentionnés ci-dessus.

De préférence, le polymère silylé selon l'invention est un polymère de formule (III) dans laquelle :

- $m_1$ est un nombre entier égal à 0,
- p = 1,
- $R^4$ et $R^5$ représentent chacun un radical méthyle,
- $R^3$ représente un radical divalent méthylène,
- la masse moléculaire moyenne en nombre dudit polymère va de 5 000 à 30 000 g/mol, préférentiellement de 10 000 à 20 000 g/mol, en particulier de 14 000 g/mol à 15 000 g/mol.

De préférence, le polymère silylé selon l'invention est un polymère de formule (III) dans laquelle :

- $m_1$ est un nombre entier différent de 0,

- p = 0,
- $R^3$ représente un radical divalent propylène,
- $R^5$ représente un radical méthyle,
- la masse moléculaire moyenne en nombre dudit polymère va de 5 000 à 30 000 g/mol, préférentiellement de 10 000 à 30 000 g/mol, en particulier de 15 000 à 25 000 g/mol.

De préférence, le polymère silylé selon l'invention est un polymère de formule (V) dans laquelle :

- q est un nombre entier différent de 0,
- p = 0,
- $R^3$ représente un radical divalent propylène
- $R^5$ représente un radical méthyle,
- la masse moléculaire moyenne en nombre dudit polymère va de 5 000 à 30 000 g/mol, préférentiellement de 10 000 à 30 000 g/mol, en particulier de 15 000 à 25 000 g/mol.

Selon un mode de réalisation, la composition A susmentionnée comprend de 3% à 90% en poids, de préférence de 5% à 80% en poids, préférentiellement de 10% à 70% en poids, avantageusement de 20% à 60% en poids d'au moins un polymère silylé comprenant au moins un groupement alkoxysilane, de préférence choisi parmi les polymères de formules (II), (III), (IV), (V) ou (VI) susmentionnées et leurs mélanges, par rapport au poids total de ladite composition A.
Selon un mode de réalisation, la composition adhésive multicomposante selon l'invention comprend de 3% à 90% en poids, de préférence de 5% à 80% en poids, préférentiellement de 10% à 70% en poids, avantageusement de 20% à 60% en poids d'au moins un polymère silylé comprenant au moins un groupement alkoxysilane, de préférence choisi parmi les polymères de formules (II), (III), (IV), (V) ou (VI) susmentionnées et leurs mélanges, par rapport au poids total de ladite composition adhésive.

## 2. *Résine tackifiante*

La ou les résines tackifiantes utilisables dans la composition adhésive selon l'invention peut(peuvent) être toute(s) résine(s) compatible(s) avec le(s) polymère(s) silylé(s).
Par "résine tackifiante compatible", on entend une résine tackifiante qui, lorsqu'elle est mélangée dans les proportions 50%/50% en poids avec le(s) polymère(s) silylé(s), donne un mélange substantiellement homogène (pas de déphasage observé visuellement).
Les résines tackifiantes sont avantageusement choisies parmi :

- (i) les résines obtenues par polymérisation d'hydrocarbures terpéniques et de phénols, en présence de catalyseur(s) de Friedel-Crafts ;
- (ii) les résines obtenues par un procédé comprenant la polymérisation d'alpha-méthyl styrène, et éventuellement en présence de phénols ;
- (iii) les colophanes d'origine naturelle ou modifiées (telles que par exemple la colophane extraite de la gomme de pins, la colophane de bois extraite des racines de l'arbre) et leurs dérivés hydrogénés, dimérisés, polymérisés ou estérifiés par des monoalcools ou des polyols (comme par exemple le glycérol ou le pentaérythritol) ;
- (iv) les résines acryliques ayant en particulier une viscosité à 100°C inférieure à 100 Pa.s ;
- (v) les résines terpéniques ;
- (vi) les copolymères à base de terpènes naturels, tels que par exemple le styrène/terpène, l'alpha-méthyl styrène/terpène et le vinyl toluène/terpène ; et
- (viii) leurs mélanges.

De telles résines sont disponibles commercialement, et parmi celles de type (i), (ii), (iii) ou (iv), on peut citer par exemple les produits suivants :

- résine de type (i) : DERTOPHENE ® 1510 disponible auprès de la société DRT possédant une masse moyenne moléculaire en nombre $M_n$ d'environ 870 Da ; DERTOPHENE ® H150 disponible auprès de la société DRT possédant une masse moyenne moléculaire en nombre $M_n$ d'environ 630 Da ; SYLVAREZ ® TP 95 disponible auprès de la société ARIZONA CHEMICAL ayant une masse moléculaire moyenne en nombre d'environ 1200 Da ;

- résine de type (ii) : CLEARTACK ® W100 disponible auprès de la société CRAY VALLEY, obtenue par polymérisation d'alpha-méthyl styrène sans action de phénols, ayant une masse moléculaire moyenne en nombre de 900 Da ; SYLVAREZ ® 510 qui est disponible auprès de la société ARIZONA CHEMICAL ayant une masse moléculaire

moyenne en nombre d'environ 1740 Da, dont le procédé d'obtention comprend l'ajout de phénols ;

- résine de type (iii) : SYLVALITE ® RE 100 qui est un ester de colophane et de pentaérythritol disponible auprès de la société ARIZONA CHEMICAL, et dont la masse moléculaire moyenne en nombre est d'environ 1700 Da.

Selon un mode de réalisation préféré, la résine tackifiante est choisie parmi les résines de type (i).

La résine tackifiante présente de préférence une masse moléculaire moyenne en nombre allant de 100 à 6 000 g/mol, de préférence de 300 à 4 000 g/mol, préférentiellement de 500 à 2 000 g/mol.

Les masses moléculaires moyennes en nombre des résines tackifiantes peuvent être mesurées selon des méthodes bien connues de l'homme du métier, par exemple par chromatographie d'exclusion stérique en utilisant un étalon de type polystyrène.

La résine tackifiante peut avoir un indice hydroxyle $I_{OH}$ allant de 10 à 300 mg KOH/g, de préférence allant de 100 à 200 mg KOH/g, préférentiellement allant de 140 à 160 mg KOH/g. En particulier, la résine tackifiante a un indice hydroxyle valant 145 mg KOH/g.

L'indice hydroxyle de la résine tackifiante représente le nombre de fonctions hydroxyles par gramme de résine tackifiante, et est exprimée sous la forme du nombre équivalent de milligrammes de potasse par gramme de résine tackifiante (mg KOH/g) pour le dosage des fonctions hydroxyles.

La composition A susmentionnée peut comprendre de 15% à 80%, de préférence de 20% à 70%, préférentiellement de 25% à 70%, en particulier de 30% à 60%, avantageusement de 40% à 60% en poids d'au moins une résine tackifiante.

La teneur en résine(s) tackifiante(s) peut représenter de 15% à 80%, de préférence de 20% à 70%, préférentiellement de 25% à 70%, en particulier de 30% à 60%, avantageusement de 40% à 60% en poids de la composition adhésive multicomposante.

*3. **Autre additifs***

La composition A susmentionnée peut comprendre au moins un autre additif, par exemple choisi dans le groupe constitué des plastifiants, des solvants, des pigments, des colorants, des promoteurs d'adhérence, des absorbeurs d'humidité, des stabilisants UV, des antioxydants, des paillettes, des matériaux fluorescents, des additifs rhéologiques, des charges, des agents ignifugeants, des cires, et de leurs mélanges.

La charge peut être choisie parmi les charges organiques, les charges inorganiques et leurs mélanges.

A titre de charge(s) organique(s), on peut utiliser n'importe quelle(s) charge(s) organique(s) et notamment polymérique(s) typiquement utilisée(s) dans le domaine des adhésifs. On peut utiliser par exemple du polychlorure de vinyle (PVC), une(des) polyoléfine(s), du caoutchouc, de l'éthylène vinyl acétate (EVA), des fibres aramides telles que par exemple le KEVLAR ®, des microsphères creuses en polymère thermoplastique expansibles ou non expansibles (tel que par exemple des microsphères creuses en chlorure de vinylidène/acrylonitrile), un(des) polymère(s) thermoplastique(s) choisi(s) parmi ceux utilisés dans la préparation de HMPSA, tels que l'éthylène vinyl acétate (EVA), ou des copolymères blocs styréniques (tels que SIS, SBS, SIBS, SEBS, SEPS, et leurs dérivés greffés avec par exemple de l'anhydride maléïque).

La charge peut être un agent d'expansion (également appelé agent gonflant).

La charge peut être sous forme de billes creuses, c'est-à-dire contenant un gaz, ou de billes susceptibles d'être expansées et former des billes creuses, c'est-à-dire contenant du vide ou un gaz.

De préférence, la charge est une charge inorganique.

Selon un mode de réalisation, la charge est choisie parmi le sable, la silice précipitée et/ou pyrogénée, les zéolithes, les billes de verre, le verre, le quartz, la barite, l'alumine, le mica, le talc, les carbonates de métaux alcalins ou alcalino-terreux (par exemple le carbonate de calcium).

La ou les charges représente(nt) de préférence de 0% à 15% en poids, de préférence de 0% à 10%, préférentiellement de 0% à 5% en poids, du poids total de la composition A.

Selon un mode de réalisation, la composition A ne comprend pas de charge.

La composition A peut comprendre au moins un agent plastifiant. La teneur totale en plastifiant(s) dans la composition A peut aller de 0% à 30% en poids, de préférence de 1% à 30% en poids, voire par exemple de 1% à 15% en poids par rapport au poids total de ladite composition A.

A titre d'exemple d'agent plastifiant utilisable, on peut utiliser n'importe quel agent plastifiant habituellement utilisé dans le domaine des adhésifs, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexyldicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le di-isobutyl phtalate, le dioctyle phtalate,

le dicyclohexyl phtalate, le diisooctyle phtalate, le diisododécyle phtalate, le dibenzyle phtalate ou le butylbenzyle phtalate.

Parmi les benzoates, on peut par exemple citer : le néopentylglycol dibenzoate (par exemple disponible sous la dénomination UNIPLEX ® 512 auprès de LANXESS), le dipropylèneglycol dibenzoate (par exemple disponible sous la dénomination BENZOFLEX ® 9-88SG auprès de EASTMAN), un mélange de diéthylène glycol dibenzoate et de dipropylène glycol dibenzoate (par exemple disponible sous la dénomination K-FLEX ® 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ® 2088 auprès de EASTMAN).

Parmi les esters de pentaérythritol, on peut par exemple citer le tétravalérate de pentaérythritol (par exemple disponible sous la dénomination PEVALEN™ auprès de la société PESTORP).

Parmi les cyclohexanedicarboxylates, on peut par exemple citer le diisononyl 1,2-cyclohexanedicarboxylate (par exemple disponible sous la dénomination HEXAMOLL DINCH ® auprès de BASF).

La composition A peut comprendre au moins un agent de rhéologie.

A titre d'exemple d'agent(s) de rhéologie utilisable(s), on peut citer n'importe quel agent de rhéologie habituellement utilisé dans le domaine des adhésifs.

De préférence, on utilise un ou plusieurs agents de rhéologie choisis parmi les agents thixotropiques, et plus préférentiellement parmi:

- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6 ;
- la silice pyrogénée ;
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172 ;
- les cires d'amides micronisées, tel que le CRAYVALLAC ® SL, le CRAYVALLAC ® SLX, le CRAYVALLAC ® SLT commercialisées par ARKEMA.

La teneur totale en agent(s) de rhéologie(s) pouvant être utilisée peut varier de 0% à 30% en poids, de préférence de 0,1% à 20 % en poids, plus préférentiellement de 1% à 10% en poids par rapport au poids total de la composition A.

Lorsqu'un pigment est présent dans la composition A, sa teneur est de préférence inférieure ou égale à 3% en poids, de préférence encore inférieure ou égale à 2% en poids, par rapport au poids total de la composition. Lorsqu'il est présent, le pigment peut par exemple représenter de 0,1% à 3% en poids ou de 0,4% à 2% en poids du poids total de la composition A.

Les pigments peuvent être des pigments organiques ou inorganiques.

Par exemple, le pigment est $TiO_2$, en particulier le KRONOS ® 2059 commercialisé par la société KRONOS.

L'absorbeur d'humidité, s'il est présent, peut être par exemple choisi parmi les dérivés alkoxysilane hydrolysables, non polymériques, de masse moléculaire inférieure à 500 g/mol, de préférence choisi parmi les dérivés de triméthoxysilane et de triéthoxysilane. Un tel agent peut typiquement prolonger la durée de conservation de la composition durant le stockage et le transport avant son utilisation. On peut par exemple citer le gamma-métacryloxypropyltriméthoxysilane (par exemple disponible sous la dénomination commerciale SILQUEST ® A-174 auprès de la société MOMENTIVE), le méthacryloxyméthyltriméthoxysilane (par exemple disponible sous la dénomination GENIOSIL ® XL33 auprès de WACKER), le vinyltriméthoxysilane, l'isooctyltriméthoxysilane, ou le phényltriméthoxysilane.

La teneur en absorbeur d'humidité est de préférence inférieure ou égale à 3% en poids, de préférence encore inférieure ou égale à 2% en poids par rapport au poids total de la composition A. Lorsqu'il est présent, l'absorbeur d'humidité peut par exemple représenter de 0,1% à 3% en poids ou de 1% à 2% en poids par rapport au poids total de la composition A.

La composition A peut comprendre une quantité de 0,1% à 3%, de préférence de 1% à 3% en poids, d'au moins un stabilisant UV ou antioxydant. Ces composés sont typiquement introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV.

On peut par exemple citer l'IRGANOX ® 1010, l'IRGANOX ® B561, l'IRGANOX ® 245, l'IRGAFOS ® 168 commercialisés par BASF.

Selon un mode de réalisation, la composition A susmentionnée est substantiellement dépourvue de co-catalyseur, à savoir que la teneur totale en co-catalyseur(s) dans la composition A est inférieure ou égale à 1 000 ppm, de préférence inférieure ou égale à 500 ppm, préférentiellement inférieure ou égale à 200 ppm, avantageusement inférieure ou égale à 100 ppm, voire inférieure ou égale à 50 ppm. De préférence, la teneur en co-catalyseur dans la composition A est égale à 0 ppm.

Dans le cadre de l'invention, il est fait usage de l'expression « co-catalyseur », pour faire référence à un catalyseur autre que celui de la composition B. Le(s) co-catalyseur(s) peuvent être de nature identique ou différente du catalyseur de la composition B.

La composition A peut contenir des composants qui peuvent servir à un système de réticulation autre que celle induite par les fonctions silanes entre elles. Il peut par exemple s'agir de composants comprenant des fonctions acryliques ou époxydes. Pour les besoins de cette réticulation alternative, ces composants peuvent entrer en réaction avec d'autres composants contenus dans la composition B.

La composition A peut être préparée par mélange de l'ensemble des composants de ladite composition A, quel que soit l'ordre d'incorporation des différents composants. Plusieurs composants de la composition A peuvent être mélangés ensemble, puis mélangés ensuite avec d'autre(s) composant(s) de ladite composition A.

Le mélange peut être réalisé à une température allant de 23°C à 200°C.

## Composition B

### 1. ***Catalyseur***

Le catalyseur est typiquement un catalyseur de réticulation.

Le catalyseur de la composition B peut être choisi dans le groupe constitué des amines, des composés organo-métalliques, des acides et de leurs dérivés, et de leurs mélanges.

Il peut s'agir d'un mélange de catalyseurs d'une même famille (par exemple un mélange de plusieurs amines), ou un mélange de catalyseurs de différentes familles (par exemple un mélange d'une amine et d'un composé organo-métallique).

Dans le cadre de l'invention, on entend par « composés organo-métalliques », des composés comprenant un radical organique et au moins un métal.

Dans le cadre de l'invention, on entend par « radical organique », un radical comprenant au moins un atome de carbone.

Les composés organo-métalliques peuvent comprendre les composés organométalliques (composés comprenant au moins une liaison covalente métal-carbone), les alcoolates métalliques, les carboxylates métalliques, et les complexes de coordination métalliques avec un (des) ligand(s) organique(s).

A titre d'exemple de ligand organique, on peut citer l'acétylacétonate et les oximes.

L'atome métallique des composés organo-métalliques peut être tout atome métallique connu de l'homme du métier, et peut en particulier être choisi parmi l'étain, l'aluminium, le zinc, le cobalt, le fer, le nickel, le bismuth, le titane, ou le zirconium. Les composés organo-métalliques peuvent d'ailleurs comprendre plusieurs atomes métalliques.

Les composés organométalliques (composés comprenant au moins une liaison covalente métal-carbone) peuvent être des carboxylates de composés organométalliques.

Les composés organométalliques peuvent être choisis dans le groupe constitué du dilaurate de dibutyle étain (DBTL), du diacétate de dibutyle étain, du diéthylhexanoate de dibutyle étain, du dinéodécanoate de dioctyle étain (par exemple disponible sous la dénomination TIB KAT® 223 auprès de la société TIB CHEMICALS), du dioléate de dibutyle étain, du benzylmaléate de dibutyle étain, du diacétate de diphényle étain, et de leurs mélanges.

Les alcoolates métalliques peuvent être choisis dans le groupe constitué du tétrabutanolate de titane, du tétraisopropylate de titane, du tétrabutanolate de zirconium, du tétratisopropylate de zirconium, et de leurs mélanges.

Les carboxylates métalliques peuvent être choisis dans le groupe constitué du 2-éthylcaproate de zinc, du diacétate de zinc, du dinéodécanoate de zinc, du diundécénoate de zinc, du diméthacrylate de zinc, de l'acétylacétonate de cobalt, du diacétate de cobalt, de l'acétylacétonate de fer, du diacétate de fer, de l'acétylacétonate de nickel, du diacétate de nickel, de l'acétate de bismuth, du trioctanoate de bismuth, du dinéodécanoate de bismuth, du dinéodécanoate de zinc et de bismuth, et de leurs mélanges.

Les complexes de coordination métalliques avec un(des) ligand(s) organique(s) peuvent être choisis dans le groupe constitué de l'acétylacétonate de zinc, de l'acétylacétonate de titane (par exemple disponible commercialement sous la dénomination TYZOR ® AA75 auprès de la société DORF KETAL), du tétraacétylacétonate de titane, du trisacétylacétonate d'aluminium, des chélates d'aluminium tel que par exemple le mono-acétylacetonate bis-(éthylacétoacétate) (par exemple disponible commercialement sous la dénomination K-KAT ® 5218 auprès de la société KING INDUSTRIES), du tétraacétylacétonate de zirconium, du diisopropoxybis(éthylacétonato)titane, et de leurs mélanges.

Les amines peuvent être des amines primaires, des amines secondaires ou des amines tertiaires.

Les amines peuvent être des aminosilanes, tels que par exemple l'aminopropyltriméthoxysilane, le N-(2-aminoéthyl)-3-aminopropyltriméthoxysilane, l'aminopropyltriéthoxysilane, le N-(2-aminoéthyl)-3-aminopropyltriéthoxysilane, le bis(gamma-triméthoxysilylpropyl)amine, le N-éthyl-gamma-aminoisobutyltriméthoxysilane, ou le N-phényl-gamma-aminopropyltriméthoxysilane.

De préférence, le catalyseur n'est pas un aminosilane.

De préférence, les amines sont choisies dans le groupe constitué de la triéthylamine, de la tributylamine, de la tétraméthylguanidine, du 1,8-diazabicyclo[5.4.0]-7-undécène, du 1,4-diazabicyclo[2.2.2]octane, du 1,5-diazabicyclo[4.3.0]non-5-ène, de la N,N-bis(N,N-diméthyl-2-aminoéthyl)méthylamine, de la N,N-diméthylcyclohexaylamine, de la N,N-diméthylphénylamine, de la N-éthylmorpholine, et de leurs mélanges.

Les catalyseurs acides peuvent être choisis parmi les catalyseurs acides organiques, les catalyseurs acides inorganiques, et leurs mélanges.

Parmi les catalyseurs acides inorganiques, on peut par exemple citer l'acide phosphorique ou orthophosphorique, l'acide phosphoreux, l'acide hypophosphoreux, ou l'acide sulfurique.

De préférence, les catalyseurs acides organiques ont un pKa inférieur ou égal à 6, de préférence inférieur ou égal à 4, avantageusement inférieur ou égal à 2, avantageusement inférieur ou égal à 0.

Les catalyseurs acides organiques peuvent être choisis parmi les acides sulfoniques, les acides carboxyliques, les organophosphates acides, les organophosphonates acides, les acides phosphoniques, et leurs mélanges.

Les acides sulfoniques peuvent être aliphatiques ou aromatiques, éventuellement substitués (par exemple substitués par au moins un substituant choisi parmi les halogènes (tels que le fluor), les hydroxyles, les alkyles, les amines, et leurs mélanges), et peuvent être mono- ou disulfoniques.

Les acides sulfoniques peuvent être choisis parmi les acides N-alkylaminoalkylsulfoniques et les acides N,N-dialkylaminoalkylsulfoniques (zwitterions), tels que par exemple l'acide 2-(N-Morpholino)éthanesulfonique, l'acide 3-(N-morpholino)propanesulfonique, l'acide 4-[N-morpholino]butanesulfonique, l'acide 1,4-pipérazinediéthanesulfonique, l'acide N-2-hydroxyéthylpipérazine-N'-2-éthanesulfonique, l'acide 2-(N-morpholino)éthanesulfonique, l'acide N -Morpholinométhanesulfonique, l'acide N-(2-hydroxyéthyl)pipérazine-N'-méthanesulfonique, l'acide pipérazine-N,N'-bis(méthanesulfonique), l'acide cyclohexylaminométhanesulfonique, l'acide N-[tris(hydroxyméthyl)méthyl]-aminométhanesulfonique, l'acide N,N-bis(2-hydroxyéthyl)aminométhanesulfonique ; l'acide para-toluène sulfonique ; l'acide benzène sulfonique ; l'acide méthanesulfonique ; l'acide dodécylbenzène sulfonique ; l'acide dodécylbenzène disulfonique ; l'acide dinonylnaphtalène disulfonique ; l'acide dinonylnaphtalène sulfonique ; l'acide trifluorométhylsulfonique ; et leurs mélanges.

En particulier, les acides sulfoniques sont choisis parmi l'acide para-toluène sulfonique, l'acide benzène sulfonique, l'acide méthanesulfonique, l'acide dodécylbenzène sulfonique, l'acide dodécylbenzène disulfonique, l'acide dinonylnaphtalène disulfonique, l'acide dinonylnaphtalène sulfonique, l'acide trifluorométhylsulfonique, et leurs mélanges.

Parmi les catalyseurs acides carboxyliques, on peut par exemple citer l'acide malonique, l'acide succinique, l'acide maléïque, l'acide oxalique, l'acide acétique, l'acide lactique, l'acide benzoïque, l'acide citrique, l'acide glycolique, et leurs mélanges.

Dans le cadre de l'invention, et sauf mention contraire, on entend par «organophosphate acide », un ester de l'acide phosphorique comprenant au moins un radical

-OH. Par exemple, le phosphate de méthyle est un organophosphate acide comprenant deux radicaux -OH et a la structure suivante :

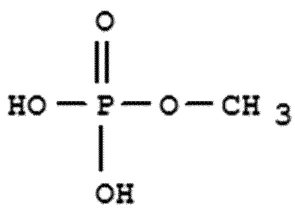

En particulier, les organophosphates acides ont la formule suivante :

$$(RO)_g\text{-}(P{=}O)\text{-}(OH)_h$$

dans laquelle :

- R est un radical organique, en particulier un radical choisi parmi les alkyles en C1-C22, linéaire ou ramifiés, les cycloalkyles, les aryles, et leurs mélanges (lesdits groupes alkyles, cycloalkyles et aryles étant éventuellement substitués); et
- g et h sont des nombres entiers, avec g + h = 3 et h = 1 ou 2.

Les organophosphates acides, peuvent par exemple être choisis dans le groupe constitué des mono- ou dialkyle phosphates acides en C1-C22 et de leurs mélanges, tel que par exemple le phosphate de butyle, le phosphate de

dibutyle, le phosphate de di-(2-éthylhexyle), le phosphate de 2-éthylhexyle et leurs mélanges ; des phosphates de mono-, ou diaryle, et de leurs mélanges, tel que par exemple le phosphate de monophényle, le phosphate de diphényle et leurs mélanges ; des alkyle-phényle phosphates ; et de leurs mélanges.

Dans le cadre de l'invention, et sauf mention contraire, on entend par «organophosphonate acide», un composé phosphoré ayant la formule générale suivante :

R'-(P=O)-(OH)(OR")

dans laquelle R' et R" sont des radicaux organiques, de préférence choisis indépendamment l'un de l'autre, parmi les alkyles en C1-C22, linéaire ou ramifiés, les cycloalkyles, les aryles, et leurs mélanges (lesdits groupes alkyles, cycloalkyles et aryles étant éventuellement substitués).

Parmi les organophosphonates acides, on peut par exemple citer les mono alkyle phosphonates acides en C1-C22.

Dans le cadre de l'invention, et sauf mention contraire, on entend par « acide phosphonique», un composé phosphoré ayant la formule générale suivante :

$R'''-(P=O)-(OH)_2$

dans laquelle R‴ est un radical organique, de préférence choisi parmi les alkyles en C1-C22, linéaire ou ramifiés, les cycloalkyles, les aryles, et leurs mélanges (lesdits groupes alkyles, cycloalkyles et aryles étant éventuellement substitués).

Parmi les acides phophoniques, on peut par exemple citer les acides N-alkylaminoalkylphosphoniques (zwitterions), les acides N,N-dialkylaminoalkylphosphoniques (zwitterions), les alkylphosphoniques en C1-C20 tels que par exemple l'acide méthylphosphonique, l'acide ethyl phosphonique, l'acide propylphosphonique, l'acide butylphosphonique, l'acide t-butylphosphonique, l'acide isobutylphosphonique, l'acide hexylphosphonique, l'acide ethyl-2-hexylphosphonique et homologues supérieurs linéaires ou ramifiés, l'acide benzylphosphonique, l'acide phénylphosphonique, l'acide toluylphosphonique, l'acide xylylphosphonique.

A titre de catalyseurs acides organiques, on peut par exemple citer le NACURE ® 155 (acide dinonylnaphtalène disulfonique, à 55% de matière active dans l'isobutanol) commercialisé par KING INDUSTRIES, le NACURE ® 1051 (acide dinonylnaphtalène sulfonique, à 50% de matière active dans le 2-butoxyéthanol) commercialisé par KING INDUSTRIES, le NACURE ® 5076 (acide dodécylbenzène sulfonique, à 70% de matière active dans l'isopropanol) commercialisé par KING INDUSTRIES, le K-CURE ® 1040 (acide para-toluène sulfonique, à 40% de matière active dans l'isopropanol) commercialisé par KING INDUSTRIES, le NACURE ® 4000 (mélange de mono et dialkyle phosphates acides, 100% de matière active) commercialisé par KING INDUSTRIES.

Les dérivés d'acide selon l'invention, peuvent être des anhydrides d'acide, des esters d'acide, des sels d'ammonium d'acide, l'acide étant tel que décrit ci-dessus.

Les dérivés d'acide sont en particulier des acides dits « bloqués » ou encore « latents » qui permettent avantageusement de libérer l'acide par activation thermique (par exemple à une température allant de 70°C à 170°C, de préférence à une température allant de 90°C à 120°C) ou par hydrolyse, ou par photoactivation, de préférence par activation thermique. L'acide bloqué permet avantageusement de libérer l'acide qui est l'entité ayant l'activité catalytique. Par exemple, le sel d'ammonium formé entre l'amino méthyl propanol et l'acide para-toluène sulfonique est un acide bloqué (dérivé d'acide) qui par activation thermique libère l'acide para-toluène sulfonique.

Les dérivés d'acide peuvent être préparés par tout moyen connu de l'homme du métier à partir de l'acide correspondant, par exemple par utilisation des réactions typiques acides/bases. Par exemple, le procédé pour faire un ester implique typiquement la condensation d'un composé acide avec un composé comprenant un groupe hydroxyle tel que par exemple un alcool, ou avec un composé de type oxirane. Les sels d'ammonium peuvent être préparés à partir de tout acide susmentionné, avec l'ammoniaque ou avec une amine primaire, secondaire ou tertiaire. Les amines peuvent éventuellement comprendre au moins un groupe fonctionnel tel qu'un groupe hydroxy (alcanolamines), un groupe alkyle en C1-C4. Les sels d'ammonium (zwitterions) peuvent également être préparés par modification du pH d'une solution contenant par exemple des acides N-alkylaminoalkylphosphoniques, des acides N,N-dialkylaminoalkylphosphoniques, des acides N-alkylaminoalkylsulfoniques ou encore des acides N,N-dialkylaminoalkylsulfoniques.

De préférence, le catalyseur est un sel d'ammonium d'un acide sulfonique (l'acide sulfonique étant tel que décrit ci-dessus), un sel d'ammonium d'un acide phosphonique (l'acide phosphonique étant tel que décrit ci-dessus), un sel d'ammonium d'un organophosphonate acide (l'organophosphonate acide étant tel que décrit ci-dessus), ou un sel d'ammonium d'un organophosphate acide (organophosphate acide étant tel que décrit ci-dessus).

A titre d'amines pour la préparation des sels d'ammonium, on peut par exemple citer le 2-amino-2-méthyl-1-propanol, la triéthylamine, l'aniline, la pyridine, le diméthylaminoéthanol, les alkypyridines, la diisopropanolamine, la diméthyléthanolamine, la triéthanolamine, les oxazolidines, les oxazolidines bicycliques, les amidines, les diazabicyclooctanes, les guanidines, les N-alkyl morpholine, les aminopyridine, les aminoalkylpyridines, les aminopyrrolidines, l'indazole, l'imidazole, le pyrazole, la pyrazine, la pyrimidine, la purine, l'imidazoline, la pyrazoline, la pipérazine, l'aminomorpholine, les aminoalkylmorpholines, et leurs mélanges. De préférence, les amines sont des amines tertiaires.

A titre de dérivés d'acide, on peut par exemple citer le NACURE ® 3327 ou le NACURE ® 3525 (acide dinonylnaphtalène disulfonique bloqué par une amine, à 25% de matière active dans l'isopropanol et l'isobutanol) commercialisé par KING INDUSTRIES, le NACURE ® 1557 ou le NACURE ® 1953 (acide dinonylnaphtalène sulfonique bloqué par une amine, à 25% de matière active dans un mélange butanol et 2-butoxyéthanol) commercialisé par KING INDUSTRIES, le NACURE ® 5225 ou NACURE ® 5528 ou NACURE ® 5925 (acide dodécylbenzène sulfonique bloqué par une amine, à 25% de matière active dans l'isopropanol) commercialisé par KING INDUSTRIES, le NACURE ® 2107 ou NACURE ® 2500 (acide para-toluène sulfonique bloqué par une amine, à 25% ou 26% de matière active dans l'isopropanol) commercialisé par KING INDUSTRIES, le NACURE ® 2501 ou NACURE ® 2530 (acide para-toluène sulfonique bloqué par une amine, à 25% de matière active dans un mélange isopropanol et méthanol) commercialisé par KING INDUSTRIES, le NACURE ® 4167 (dialkyle phosphate bloqué par une amine organique, à 25% de matière active dans un mélange isopropanol et isobutanol) commercialisé par KING INDUSTRIES, le NACURE ® 4575 (phosphate acide bloqué par une amine, à 25% de matière active dans un mélange méthanol et butanol) commercialisé par KING INDUSTRIES.

De préférence, le catalyseur est choisi dans le groupe constitué des composés organo-métalliques (en particulier les complexes de coordinations à base d'aluminium), de l'acide orthophosphorique, des organophosphates acides (de préférence mono- ou dialkyle phosphate acide en C1-C22 et leurs mélanges), des sels d'ammonium (en particulier d'acide sulfonique ou d'organophosphate acide), et de leurs mélanges. De façon encore plus préférée, le catalyseur est choisi dans le groupe constitué de l'acide orthophosphorique, des organophosphates acides (de préférence mono- ou dialkyle phosphate acide en C1-C22 et leurs mélanges), des sels d'ammonium (en particulier d'acide sulfonique ou d'organophosphate acide).

La teneur massique en catalyseur dans la composition B va de 0,01% à 95%, de préférence de 1% à 90%, préférentiellement de 5% à 90%, plus préférentiellement de 10% à 80%, encore plus préférentiellement de 10% à 70%, avantageusement de 20% à 60%, en particulier de 20% à 50% en poids, par rapport au poids total de la composition B.

Dans le cadre de l'invention, et sauf mention contraire, la teneur massique en catalyseur est la teneur en matière sèche (dite matière active).

La teneur en catalyseur dans la composition B peut par exemple être l'une des teneurs suivantes : 0,01%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, ou 80%.

De préférence, lorsque le catalyseur est choisi parmi les organo-métalliques, la teneur en catalyseur dans la composition B va de 20% à 90%, de préférence de 30% à 60%, avantageusement de 45% à 55% en poids par rapport au poids total de la composition B.

De préférence, lorsque le catalyseur est choisi parmi les acides, et notamment les acides inorganiques, la teneur en catalyseur dans la composition B va de 2% à 60%, de préférence de 5% à 50%, en particulier de 5% à 30%, avantageusement de 5% à 20% en poids par rapport au poids total de la composition B.

De préférence, lorsque le catalyseur est choisi parmi les dérivés d'acides, et notamment les sels d'ammonium d'acides sulfoniques ou les sels d'ammonium d' organophosphates acides, la teneur en catalyseur dans la composition B va de 5% à 60%, de préférence de 10% à 50%, avantageusement de 15% à 40%, en particulier de 20% à 30% en poids par rapport au poids total de la composition B.

### 2. ***Composé C***

La composition B susmentionnée comprend au moins un composé C choisi parmi :

- un composé C1 ayant une masse moléculaire moyenne en nombre allant de 300 g/mol à 50 000 g/mol ; et
- un composé C2 ayant une tension de vapeur à 20°C supérieure ou égale à 0,08 kPa ;
- et leurs mélanges.

Selon un mode de réalisation, la composition B comprend :

- un composé C1 ;
- un mélange de composés C1 différents ;
- un composé C2 ;
- un mélange de composés C2 différents ; ou

- un mélange d'au moins un composé C1 et d'au moins un composé C2.

Le composé C1 a de préférence une masse moléculaire moyenne en nombre allant de 1 000 g/mol à 50 000 g/mol, de préférence de 1 000 g/mol à 20 000 g/mol, en particulier de 2 000 g/mol à 20 000 g/mol, préférentiellement de 3 000 g/mol à 20 000 g/mol, par exemple de 4 000 g/mol à 18 000 g/mol, avantageusement de 5 000 g/mol à 10 000 g/mol, et notamment de 7 000 g/mol à 9 000 g/mol.

La masse moléculaire moyenne en nombre du composé C1 peut être mesurée par des méthodes bien connues de l'homme du métier, par exemple par chromatographie d'exclusion stérique en utilisant des étalons de type polystyrène.

Le composé C1 a de préférence une viscosité à 23°C allant de 10 mPa.s à 100 000 mPa.s, en particulier de 500 à 50 000 mPa.s, de préférence de 500 à 20 000 mPa.s, préférentiellement de 500 à 15 000 mPa.s, avantageusement de 500 à 10 000 mPa.s, par exemple de 1 000 à 5 000 mPa.s, de préférence de 1 000 à 3 000 mPa.s.

Selon l'invention, le composé C1 peut être choisi dans le groupe constitué des polyols, des résines tackifiantes, des organosilanes, des polymères mono- ou disilylés, des esters de polyol, des polyétheramines, et de leurs mélanges.

De préférence, le composé C1 peut être choisi dans le groupe constitué des polyols, des résines tackifiantes, des organosilanes, des polymères mono- ou disilylés, des esters de polyol, et de leurs mélanges.

De préférence, le composé C1 peut être choisi dans le groupe constitué des polyols, des résines tackifiantes, des organosilanes, des polymères mono- ou poly-silylés, des esters de polyol, et de leurs mélanges.

Selon l'invention, le composé C1 peut être un composé réactif ou non réactif. On entend par réactif, en ce qu'il comprend au moins une fonction pouvant réagir avec la(les) fonction(s) alkoxysilane du polymère silylé de la composition A, lors de leur mélange. Par exemple, les polyols, les résines tackifiantes, les esters de polyol sont des composés non réactifs. Par exemple, les organosilanes et les polymères mono- ou disilylés sont des composés réactifs.

L'utilisation de composé C1 réactif permet avantageusement de conduire à des compositions adhésives après mélange ayant une meilleur tenue en température.

Selon un mode de réalisation, le composé C1 est un polyol choisi dans le groupe constitué des polyéther polyols, des polyester polyols, des polytétrahydrofurane polyols, des polyacrylate polyols, des polycarbonate polyols, des polyéther carbonate polyols, des polyester carbonate polyols, des polyacétal polyols, des poly(ester-amide) polyols, des polythioéther polyols, des polyoléfine polyols, et de leurs mélanges, de préférence le composé C1 étant choisi parmi les polyéther polyols, les polyester polyols et leurs mélanges.

Dans le cadre de l'invention, on entend par « polyol », tout composé hydrocarboné, linéaire ou ramifié, cyclique ou acyclique, saturé ou insaturé, aromatique ou aliphatique, comprenant au moins deux fonctions hydroxyle (OH). Le polyol peut être éventuellement substitué par un groupe fonctionnel, et/ou comprendre un ou plusieurs groupes divalents choisi parmi les groupes éthers (-O-), et carboxyle (-C(=O)O- ou -OC(=O)-).

Les polyols peuvent être choisis parmi les diols, les triols, et leurs mélanges.

Selon un mode de réalisation, le composé C1 est un polyol choisi dans le groupe constitué des polyols ayant un $I_{OH}$ allant de 5 à 500 mg KOH/g, de préférence de 5 à 250 mg KOH/g, préférentiellement de 6 à 50 mg KOH/g, en particulier de 10 à 28 mg KOH/g.

L'indice hydroxyle d'un polyol $I_{OH}$ représente le nombre de fonctions hydroxyles par gramme de polyol, et est exprimé sous la forme du nombre équivalent de milligrammes de potasse (KOH) utilisés dans le dosage des fonctions hydroxyles, déterminé expérimentalement par titrimétrie selon la norme ISO 14900 :2001. Dans le cas d'un mélange de polyols, l'$I_{OH}$ peut également être calculé à partir des $I_{OH}$ connus de chacun des polyols, et de leur teneur pondérale respectivement dans ledit mélange.

Les polyacétal polyols peuvent par exemple être ceux préparés par réaction entre un glycol (tel que par exemple le diéthylène glycol) avec le formaldéhyde. Des polyacétals peuvent également être préparés par polymérisation d'acétals cycliques.

Les polyoléfine polyols peuvent être les homopolymères et copolymères de butadiène comprenant des groupes hydroxyles terminaux.

Les polycarbonate polyols peuvent être ceux obtenus par réaction entre au moins un diol comprenant de 2 à 10 atomes de carbone (tel que par exemple le 1,3-propanediol, le 1,4-butanediol, le 1,6-hexanediol, le diéthylène glycol ou le tétraéthylène glycol) avec au moins un diaryl carbonate comprenant de 3 à 20 atomes de carbone, tel que par exemple le diphényl carbonate, ou avec le phosgène.

Les polyester polyols peuvent être :

- les polyester polyols d'origine naturelle tel que l'huile de ricin ;
- les polyester polyols issus d'une polymérisation avec ouverture de cycle d'au moins une lactone cyclique (comprenant de préférence de 3 à 7 atomes de carbone) avec au moins un diol, tels que les polycaprolactone polyols ;
- les polyester polyols résultant de la condensation entre :

  ◦ au moins un acide dicarboxylique ou d'au moins un de ses anydrides ou diesters correspondants ; et

◦ au moins un diol.

Le(s) acide(s) dicarboxylique(s) utilisable(s) pour la synthèse des polyester polyols susmentionnés comprennent de préférence de 3 à 40 atomes de carbone, et préférentiellement de 6 à 10 atomes de carbone.
De préférence, le(s) acide(s) dicarboxylique(s) utilisable(s) pour la synthèse des polyester polyols susmentionnés est(sont) choisi(s) dans le groupe constitué de l'acide malonique, de l'acide succinique, de l'acide fumarique, de l'acide glutarique, de l'acide adipique, de l'acide 1,3- ou 1,4-cyclohexane dicarboxylique, de l'acide 3-méthyl-1,5-pentanedicarboxylique, de l'acide 1,10-décanedicarboxylique, de l'acide 1,12-dodécanedicarboxylique, de l'acide 1,18-octadécanedicarboxylique, de l'acide méthyltétrahydrophthalique, de l'acide hexahydrophthalique, de l'acide tétrahydrophthalique, de l'acide azélaique, de l'acide sébacique et de leurs mélanges.
Le(s) diol(s) utilisable(s) pour la synthèse des polyester polyols susmentionnés peu(ven)t être choisi(s) parmi les polyalkylène diols, les polyoxyalkylène-diols, et leurs mélanges, la partie alkylène (saturée) de ces composés, étant de préférence linéaire ou ramifiée, comprend de préférence de 2 à 40 atomes de carbone, préférentiellement de 2 à 8 atomes de carbone.
De préférence, le(s) diol(s) utilisable(s) pour la synthèse des polyester polyols susmentionnés est(sont) choisi(s) dans le groupe constitué de l'éthylène glycol, du diéthylène glycol, du triéthylène glycol, du néopentyl glycol, du 1,6-hexanediol, du butanediol, du propylène glycol, du dipropylène glycol, du tétraéthylène glycol, du tripropylène glycol, du 3-méthyl-1,5-pentanediol, du 2,2-diméthyl-1,3-propanediol, et de leurs mélanges.
Parmi les polyester polyols, on peut par exemple citer les produits suivants de fonctionnalité hydroxyle égale à 2 :

- TONE ® 0240 (disponible auprès de UNION CARBIDE) qui est une caprolactone de masse moléculaire moyenne en nombre d'environ 2 000 Da, de $I_{OH}$ égal à 56, et un point de fusion d'environ 50°C ;
- DYNACOLL ® 7381 (disponible auprès d'EVONIK) dont la masse moléculaire moyenne en nombre est d'environ 3 500 Da, de $I_{OH}$ égal à 30, et ayant un point de fusion d'environ 65°C ;
- DYNACOLL ® 7360 (disponible auprès d'EVONIK) résultant de la condensation de l'acide adipique avec l'hexanediol, dont la masse moléculaire moyenne en nombre est d'environ 3 500 Da, de $I_{OH}$ égal à 30, et ayant un point de fusion d'environ 55°C ;
- DYNACOLL ® 7330 (disponible auprès d'EVONIK) dont la masse moléculaire moyenne en nombre est d'environ 3 500 Da, de $I_{OH}$ égal à 30, et ayant un point de fusion d'environ 85°C ;
- DYNACOLL ® 7363 (disponible auprès d'EVONIK) résultant de la condensation de l'acide adipique avec l'hexanediol, dont la masse moléculaire moyenne en nombre est d'environ 5 500 Da, de $I_{OH}$ égal à 21, et ayant un point de fusion d'environ 57°C.

Dans le cadre de l'invention, on entend par « fonctionnalité hydroxyle d'un polyester polyol», le nombre moyen de fonction hydroxyle par mole de polyester polyol.
Les polyester polyols peuvent être amorphes ou cristallins, de préférence amorphes.
De préférence, les polyester polyols sont ceux obtenus par réaction de condensation entre l'acide adipique et un mélange du néopentyl glycol, de l'éthylène glycol et du 1,6-hexanediol ; ou entre l'acide adipique et le 3-méthyl-1,5-pentanediol.
Les polyéther polyols peuvent être des dérivés oxyalkylés de diols (tels que par exemple l'éthylène glycol, le propylène glycol, le néopentyl glycol), de triols (tels que par exemple le glycérol, le triméthylolpropane, l'hexane-1,2,6-triol), ou de tétrols (tel que par exemple le pentaérythritol). Les polyéther polyols peuvent être obtenus par polymérisation de l'oxyde d'alkylène correspondant en présence d'un catalyseur.
De préférence, les polyéther polyols sont des polypropylène glycols (ou PPG), ayant en particulier une fonctionnalité hydroxyle égale à 2 ou 3, et de préférence un indice de polymolécularité allant de 1 à 1,6, de préférence de 1 à 1,4.
Dans le cadre de l'invention, on entend par « indice de polymolécularité », le rapport entre la masse moléculaire moyenne en poids et la masse moléculaire moyenne en nombre, déterminé notamment par CPG.
Parmi les polypropylène glycols ayant une fonctionnalité hydroxyle égale à 2, on peut citer :

- le VORANOL ® EP 1900 : PPG difonctionnel de masse moléculaire moyenne en nombre d'environ 4 008 g/mol, et d'indice hydroxyle $I_{OH}$ égal à 28 mg KOH/g ;
- l'ACCLAIM ® 8200 : PPG difonctionnel de masse moléculaire moyenne en nombre de 8 016 g/mol, et d'indice hydroxyle $I_{OH}$ égal à 14 mg KOH/g ;
- l'ACCLAIM ® 12200 : PPG difonctionnel de masse moléculaire moyenne en nombre de 11 222 g/mol, et d'indice hydroxyle $I_{OH}$ égal à 10 mg KOH/g ;
- l'ACCLAIM ® 18200 : PPG difonctionnel de masse moléculaire moyenne en nombre de 17 265 g/mol, et d'indice hydroxyle $I_{OH}$ égal à 6,5 mg KOH/g.

Parmi les polypropylène glycols ayant une fonctionnalité hydroxyle égale à 3, on peut citer :

- le VORANOL ® CP 755 : PPG trifonctionnel de masse moléculaire moyenne en nombre d'environ 710 g/mol, et d'indice hydroxyle $I_{OH}$ égal à 237 mg KOH/g ;
- le VORANOL ® CP 3355 : PPG trifonctionnel de masse moléculaire moyenne en nombre d'environ 3544 g/mol, et d'indice hydroxyle $I_{OH}$ égal à 47,5 mg KOH/g ;
- l'ACCLAIM ® 6300 : PPG trifonctionnel de masse moléculaire moyenne en nombre d'environ 5 948 g/mol, et d'indice hydroxyle $I_{OH}$ égal à 28,3 mg KOH/g.

Dans le cadre de l'invention, on entend par « fonctionnalité hydroxyle d'un polyéther polyol», le nombre moyen de fonction hydroxyle par mole de polyéther polyol.

Selon un mode de réalisation préféré, les polyéther polyols ont une fonctionnalité égale à 2, et une masse moléculaire moyenne en nombre allant de préférence de 3 000 à 20 000 g/mol, préférentiellement de 4 000 à 19 000 g/mol, en particulier de 5 000 à 15 000 g/mol, et avantageusement de 7 000 à 13 000 g/mol.

Selon un mode de réalisation préféré, les polyéther polyols ont une fonctionnalité égale à 3, et une masse moléculaire moyenne en nombre allant de préférence de 500 à 20 000 g/mol, préférentiellement de 500 à 10 000 g/mol, en particulier de 500 à 5 000 g/mol, et avantageusement de 500 à 4 000 g/mol.

Selon un mode de réalisation préféré, les polyéther polyols ont un indice hydroxyle $I_{OH}$ allant de 5 à 500 mg KOH/g, de préférence de 6 à 200 mg KOH/g, préférentiellement de 6 à 100 mg KOH/g, en particulier de 6 à 50 mg KOH/g, avantageusement de 6 à 40 mg KOH/g, et par exemple de 6 mg KOH/g à 20 mg KOH/g.

Selon un mode de réalisation, le composé C1 est choisi parmi les organosilanes, en particulier choisi dans le groupe constitué des aminosilanes, des mercaptosilanes, des glycidoxysilanes, des vinylsilanes, des époxy silanes, des (méth)acrylate silanes, des glycoxysilanes, des anhydro silanes, et de leurs mélanges.

Dans le cadre de l'invention, on entend par « organosilane », un composé comprenant un groupe organique lié à l'atome Si par le biais d'une liaison Si-C.

De préférence, les organosilanes comprennent au moins un, de préférence au moins deux voire trois, groupement(s) alcoxy relié(s) à l'atome Si par le biais de liaison(s) Si-O.

Les organosilanes peuvent être des monomères ou des oligomères.

Parmi les organosilanes, on peut par exemple citer le 3-aminopropyl méthyl diméthoxysilane, le 3-aminopropyl triméthoxysilane (par exemple disponible sous la dénomination SILQUEST ® A1110 auprès de la société MOMENTIVE), le 3-glycidoxypropyl triméthoxysilane (par exemple disponible sous la dénomination SILQUEST ® A-187 auprès de la société MOMENTIVE), le 3-mercaptopropyl triméthoxysilane (par exemple disponible sous la dénomination SILQUEST ® A-189 auprès de la société MOMENTIVE), le mercaptopropyltriéthoxysilane, le mercaptopropylméthyldiméthoxysilane, le mercaptopropylméthyldiéthoxysilane, le mercaptométhyltriméthoxysilane, le mercaptométhyltriéthoxysilane, le N-aminoéthyl-3-aminopropyl triméthoxysilane, le 3-méthacryloxypropyltriméthoxysilane (par exemple disponible sous la dénomination SILQUEST ® A-174NT auprès de la société MOMENTIVE), tris-(3-triméthoxysilylpropyl) isocyanurate (par exemple disponible sous la dénomination SILQUEST ® Y-11597 auprès de la société MOMENTIVE), le bis-(3-triéthoxysilylpropyl)polysulfide (par exemple disponible sous la dénomination SILQUEST ® A-1289 auprès de la société MOMENTIVE), le bis-(3-triéthoxysilyl)disulfide (par exemple disponible sous la dénomination SILQUEST ® A-1589 auprès de la société MOMENTIVE), le béta-(3,4-epoxycyclohexyl)éthyltriméthoxysilane (par exemple disponible sous la dénomination SILQUEST ® A-186 auprès de la société MOMENTIVE), le bis(triéthoxysilyl)éthane (par exemple disponible sous la dénomination SILQUEST ® Y-9805 auprès de la société MOMENTIVE), le gamma-isocyanatopropyltrimethoxysilane (par exemple disponible sous la dénomination SILQUEST ® A-LINK 35 auprès de la société MOMENTIVE), le (méthacryloxyméthyl)tri(m)éthoxysilane (par exemple disponibles sous les dénominations GENIOSIL ® XL 33, ou GENIOSIL ® XL 36 auprès de la société WACKER), le (méthacryloxyméthyl)(m)éthyldimethoxysilane (par exemple disponibles sous les dénominations GENIOSIL ® XL 32, ou GENIOSIL ® XL34 auprès de la société WACKER), l'(isocyanatométhyl)méthyldiméthoxysilane (par exemple disponible sous la dénomination GENIOSIL ® XL 42 auprès de la société WACKER), l'(isocyanatométhyl)triméthoxysilane (par exemple disponible sous la dénomination GENIOSIL ® XL 43 auprès de la société WACKER), le (méthacryloxyméthyl)méthyldiéthoxysilane, le 2-acryloxyéthylméthyldiméthoxysilane, le 2-méthacryloxyéthyltriméthoxysilane, le 3-acryloxypropylméthyldiméthoxysilane, le 2-acryloxyéthyltriméthoxysilane, le 2-méthacryloxyéthyltriéthoxysilane, le 3-acryloxypropyltriméthoxysilane, le 3-acryloxypropyltripropoxysilane, le 3-méthacryloxypropyltriéthoxysilane, le 3-méthacryloxypropyltriacétoxysilane, le 3-méthacryloxypropylméthyldiméthoxysilane, le glycoxysilane issu de la réaction entre le 2-méthyl-1,3-propanediol et le vinyl triméthoxysilane, et leurs mélanges.

Selon un mode de réalisation, le composé C1 est choisi parmi les résines tackifiantes ayant en particulier une masse moléculaire moyenne en nombre allant de 100 g/mol à 6 000 g/mol, de préférence de 300 g/mol à 4 000 g/mol.

La résine tackifiante peut par exemple être toute résine tackifiante susmentionnée pour la composition A de l'invention.

En particulier, la résine tackifiante est une résine de type (iii) mentionnée précédemment, notamment des

esters de colophane. On peut par exemple citer la SYLVALITE ® RE 100 (ester de colophane et de pentaérythritol, de masse moléculaire moyenne en nombre d'environ 1 700 Da, Tg=48°C) commercialisée par ARIZONA CHEMICAL, ou la SYLVATAC ® RE 12 (ester liquide de colophane, Tg=-24°C) commercialisée par ARIZONA CHEMICAL.

Selon un mode de réalisation, le composé C1 est choisi parmi les esters de polyol. Les esters de polyol peuvent être préparés par exemple par réaction d'estérification de polyol, par exemple de tétrol, tel que par exemple le pentaérythritol.

A titre d'ester de polyol, on peut par exemple citer le tétravalérate de pentaérythritol.

Selon un mode de réalisation, le composé C1 est choisi parmi les polymères monosilylés, les polymères disilylés et leurs mélanges.

Les polymères disilylés peuvent être tous ceux cités précédemment pour la composition A susmentionnée, en particulier les polymères de formules (II), (III), (IV), or (V) susmentionnées.

De préférence, les polymères monosilylés comprennent un groupe de formule (I) susmentionnée.

De préférence, les polymères monosilylés répondent à l'une des formules suivantes, ou à leur mélange :

- formule (IX) :

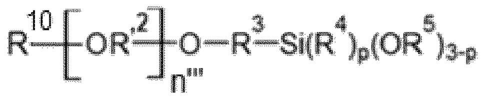

(IX)

dans laquelle :

- $R^{10}$ représente un radical divalent hydrocarboné comprenant de 1 à 60 atomes de carbone qui peut être aliphatique, aromatique ou alkyl aromatique, linéaire, ramifié ou cyclique,
- $R^3$ représente un radical divalent alkylène linéaire ou ramifié comprenant de 1 à 6 atomes de carbone,
- $R'^2$ représente un radical divalent alkylène linéaire ou ramifié comprenant de 2 à 4 atomes de carbone,
- $R^4$ et $R^5$, identiques ou différents, représentent chacun un radical alkyle linéaire ou ramifié comprenant de 1 à 4 atomes de carbone, $R^4$ pouvant éventuellement être engagé dans un cycle, de préférence $R^4$ est un groupe méthyle,
- n''' est un nombre entier nul ou non nul tel que la masse moléculaire moyenne en nombre du bloc polyéther de formule $-[OR'^2]_{n'''}-$ va de 0 g/mole à 20 000 g/mole,
- p est un nombre entier égal à 0, 1 ou 2.
- $R^{10}$ et n''' sont tels que la masse moléculaire moyenne en nombre du polymère monosilylé est d'au moins 1000 g/mol ;

- formule (X) :

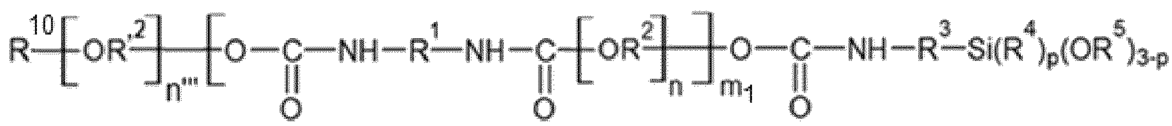

(X)

dans laquelle :

- $R^{10}$ représente un radical divalent hydrocarboné comprenant de 1 à 60 atomes de carbone qui peut être aliphatique, aromatique ou alkyl aromatique, linéaire, ramifié ou cyclique,
- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ et $R'^2$, identiques ou différents, représentent chacun un radical divalent alkylène linéaire ou ramifié comprenant de 2 à 4 atomes de carbone,
- $R^4$ et $R^5$, identiques ou différents, représentent chacun un radical alkyle linéaire ou ramifié comprenant de 1 à

4 atomes de carbone, $R^4$ pouvant éventuellement être engagé dans un cycle, de préférence $R^4$ est un groupe méthyle,

- n est un nombre entier tel que la masse moléculaire moyenne en nombre du bloc polyéther de formule $-[OR^2]_n-$ va de 300 g/mole à 40 000 g/mol,
- n''' est un nombre entier nul ou non nul tel que la masse moléculaire moyenne en nombre du bloc polyéther de formule $-[OR'^2]_{n'''}-$ va de 0 à 20 000 g/mol,
- $m_1$ est un nombre entier nul ou non nul,
- p est un nombre entier égal à 0, 1 ou 2.
- $R^{10}$ et les indices $m_1$, n et n''' sont tels que la masse moléculaire moyenne en nombre du polymère monosilylé est d'au moins 1000 g/mol.

De préférence, dans les formules (IX) et (X) ci-dessus, p est un nombre entier égal à 0 ou 1. Plus préférentiellement, p est égal à 1.

De préférence, les polymères monosilylés possèdent une masse moléculaire moyenne en nombre Mn allant de 1 000 à 55 000 g/mol, de préférence de 2 000 à 45 000 g/mol, plus préférentiellement de 3 000 à 35 000 g/mol.

Parmi les polymères monosilylés de formule (IX), on peut par exemple citer :

- le SAT ® 145 commercialisé par KANEKA : polymère monosilylé comprenant une chaîne principale de type polyéther et un groupement terminal - méthyldiméthoxysilane hydrolysable. Il répond en particulier à un polymère de formule (IX) dans laquelle $R^3$ est un groupe propylène et p = 1 ;
- le SAX ® 015 commercialisé par KANEKA : polymère monosilylé comprenant une chaîne principale de type polyéther et un groupement terminal -triméthoxysilane hydrolysable. Il répond en particulier à un polymère de formule (IX) dans laquelle $R^3$ est un groupe propylène et p = 0 ;

Parmi les polymères monosilylés de formule (X), on peut par exemple citer :

- le GENIOSIL ® XM20 commercialisé par WACKER : polymère monosilylé possédant une masse moléculaire moyenne en nombre d'environ 6 000 g/mol. Il comprend une chaîne principale de type polyéther et un groupement terminal méthylène-méthyldiméthoxysilane hydrolysable. Il répond en particulier à un polymère de formule (X) dans laquelle $m_1$ = 0 et p = 1 ;
- le GENIOSIL ® XM25 commercialisé par WACKER : polymère monosilylé possédant une masse moléculaire moyenne en nombre d'environ 6 000 g/mol. Il comprend une chaîne principale de type polyéther et un groupement terminal propylène-méthyldiméthoxysilane hydrolysable. Il répond en particulier à un polymère de formule (X) dans laquelle $m_1$ = 0 et p = 0.

Dans le cadre de l'invention, et sauf mention contraire, on entend par « polyétheramines », des composés comprenant une chaîne principale polyéther, et au moins une fonction amine (voire au moins deux fonctions amine).

Selon un mode de réalisation, le composé C1 est choisi parmi les polyétheramines.

Parmi les polyétheramines, on peut en particulier citer les JEFFAMINE commercialisées par la société HUNTSMAN, tel que par exemple la polyétherdiamine de formule : $H_2N-CH_2-CH_2-O-CH_2-CH_2-O-CH_2-CH_2-NH_2$ ayant une alcalinité primaire de 13,49 méq/g (disponible par exemple sous la dénomination commerciale JEFFAMINE® ED 148 auprès de la société HUNTSMAN).

Le composé C2 a de préférence une tension de vapeur à 20°C supérieure ou égale à 0,08 kPa, préférentiellement comprise entre 0,08 kPa et 13 kPa, encore plus préférentiellement entre 0,08 kPa et 8 kPa, en particulier entre 0,1 kPa et 5 kPa.

De préférence, le composé C2 a une température d'ébullition inférieure ou égale à 171°C à pression atmosphérique, de préférence inférieure ou égale à 110°C, avantageusement inférieure ou égale à 85°C, en particulier inférieure ou égale à 79°C.

Le composé C2 est choisi parmi les alcools, par exemple parmi l'isopropanol, l'isobutanol, le butanol, le méthanol, le 2-butoxyéthanol, et leurs mélanges.

Avantageusement, le composé C2 est évaporé lors de l'application de la composition adhésive sur une couche support.

Selon un mode de réalisation préféré, lorsque le catalyseur est un dérivé d'acide tel que décrit ci-dessus, le composé C est un composé C2.

Selon un mode de réalisation préféré, lorsque le catalyseur n'est pas un dérivé d'acide tel que décrit ci-dessus, le composé C est un composé C1.

De préférence, lorsque le catalyseur est un acide inorganique, tel que par exemple l'acide orthophosphorique,

le composé C n'est pas choisi parmi les polyols.

Selon un mode de réalisation, le ratio catalyseur(s) : composé(s) C dans la composition B va de 0,01 : 99,99 à 95 : 5, de préférence de 5 : 95 à 95 : 5, en particulier de 5 : 95 à 60 : 40, préférentiellement de 10 : 90 à 50 : 50, avantageusement de 20 : 80 à 50 : 50.

La teneur en composé(s) C dans la composition B peut aller de 5% à 99,99%, de préférence de 10% à 99%, par exemple de 10% à 95%, préférentiellement de 20% à 90%, encore plus préférentiellement de 30% à 80%, avantageusement de 40% à 70% en poids par rapport au poids total de la composition B.

La présence du(des) composé(s) C permet la dilution du catalyseur dans la composition B, et donc avantageusement d'augmenter la valeur du point éclair de ladite composition B. Ceci a notamment pour effet d'avantageusement améliorer la sécurité du procédé de préparation d'article auto-adhésif.

En outre, la présence du(des) composé(s) C, en particulier dans des teneurs supérieures ou égales à 50% en poids de la composition B, permet avantageusement de diminuer les risques de toxicité, lors de l'emploi par exemple de catalyseur organo-métallique.

Par ailleurs, la présence du(des) composé(s) C dans la composition B, permet avantageusement une meilleure dispersion du(des) catalyseur(s) au sein de la composition adhésive (obtenue après mélange des compositions A et B). Cette meilleure dispersion conduit avantageusement à l'enduction d'une couche adhésive uniforme ne présentant pas de problème de formation de grains et/ou de gels qui altèrent la qualité optique des enductions finales, ou qui gênent l'application sans défaut de l'enduction sur les surfaces à coller.

De plus, la présence du(des) composé(s) C dans la composition B, permet avantageusement d'ajouter de très faibles quantités de catalyseur.

Le(s) composé(s) C est(sont) avantageusement inerte(s) vis-à-vis du catalyseur, c'est-à-dire qu'il(s) ne réagit(ssent) pas avec le catalyseur.

### 3. Additifs

La composition B peut comprendre de l'eau. L'eau peut provenir des composés de la composition B, et/ou peut être ajoutée à la composition B.

La teneur en eau dans la composition B peut varier de 0,05% à 50% en masse, de préférence de 0,1% à 30% en masse, préférentiellement de 0,5% à 15% en masse, avantageusement de 0,5% à 10% en masse, en particulier de 0,5% à 5% en masse par rapport à la masse totale de la composition B.

Selon un mode de réalisation, la composition B comprend de l'eau, en particulier lorsque le composé C comprend au moins un composé C1 qui n'est pas un organosilane ni un polymère mono- ou disilylé.

Selon un mode de réalisation, la composition B comprend de l'eau, en particulier lorsque le composé C est un composé C2.

Selon un mode de réalisation, la composition B est exempte d'eau. Par « exempte d'eau », on entend une teneur en eau inférieure ou égale à 200 ppm, de préférence inférieure ou égale à 100 pm, par exemple inférieure ou égale à 50 ppm, voire inférieure ou égale à 20 ppm. De préférence, la composition B est exempte d'eau, lorsque le composé C comprend au moins un composé C1 choisi parmi les organosilanes, les polymère mono- ou disilylés, et leurs mélanges.

La teneur en eau peut par exemple être mesurée par un dosage Karl Fisher selon la norme ISO 760.

L'eau contenue dans la composition B peut être sous forme liquide ou gazeuse, ou encapsulée, ou absorbée, ou contenue dans la structure chimique d'un composant qui peut la rendre libre et disponible ultérieurement.

L'eau peut être issue d'un ou plusieurs composants de ladite composition B.

La composition B peut comprendre au moins un additif, tel que ceux mentionnés pour la composition A précédemment. En particulier, la composition B peut contenir un additif qui participera à une réticulation autre que celle impliquant les fonctions silanes, en présence ou non d'un autre composant de la composition A.

La composition B peut comprendre au moins une charge, de préférence à une teneur inférieure ou égale à 15%, de préférence inférieure ou égale à 10% en poids par rapport au poids total de la composition B.

De préférence, la composition B ne comprend pas de charge.

La composition B peut contenir un composé choisi parmi $NH_4F$, $Bu_4NF$, HF, $BF_3$, $Et_2NSF_3$, $HSO_3F$, un polymère de type polyéther polyol PPG comprenant au moins un groupe fluoré, un composé possédant au moins une liaison Si-F, et leurs mélanges.

### 4. Composition B

Selon un mode de réalisation, la composition B a une viscosité à 23°C qui va de 3 mPa.s à 50 000 mPa.s, de préférence de 600 mPa.s à 25 000 mPa.s, préférentiellement de 800 mPa.s à 16 000 mPa.s, avantageusement de 1 000 mPa.s à 5 000 mPa.s, par exemple de 1 100 mPa.s à 2 000 mPa.s, en particulier de 1 200 mPa.s à 1 500 mPa.s.

Selon un mode de réalisation, la composition B a une viscosité à une température variant de 40°C à 160°C, préférablement de 60°C à 100°C, qui va de 50 mPa.s à 500 000 mPa.s, de préférence de 600 mPa.s à 100 000 mPa.s, préférentiellement de 1 200 mPa.s à 50 000 mPa.s, avantageusement de 1 200 mPa.s à 10 000 mPa.s, par exemple de 1 200 mPa.s à 5 000 mPa.s.

Les constituants de la composition B sont de préférence choisis de sorte que la composition B est avantageusement stable dans le temps. De préférence, la composition B est telle que le ratio

$$(V_{final} - V_{initial})/V_{initial}$$

est inférieur ou égal à 30%, de préférence inférieur ou égal à 20%, préférentiellement inférieur ou égal à 10%, avec :

- $V_{final}$ étant la viscosité de la composition B après chauffage à 40 °C pendant 28 jours, mesurée à 23°C ;
- $V_{initial}$ étant la viscosité de la composition B avant ledit chauffage, mesurée à 23°C.

Le catalyseur est avantageusement choisi de sorte à être soluble dans le(s) composé(s) C susmentionné(s), pour former avantageusement une composition B homogène, notamment lors du stockage à 23°C ou après le chauffage à 40°C pendant 28 jours. Par homogène, on entend le fait qu'il n'y ait pas de déphasage (floculation ou sédimentation) entre le(s) catalyseur(s) et le(s) composé(s) C dans la composition B.

***Composition adhésive multicomposante***

La composition adhésive multicomposante, de préférence bicomposante, peut comprendre une ou des composition(s) additionnelle(s) en plus des compositions A et B, ladite(lesdites) composition(s) additionnelle(s) pouvant comprendre tout type de composé(s). Par exemple, la composition adhésive multicomposante peut comprendre une composition D additionnelle comprenant au moins une résine tackifiante, par exemple choisie parmi celles décrites ci-dessus pour les compositions A et B. La composition multicomposante selon l'invention peut également comprendre une composition D comprenant de l'eau. L'eau peut être sous forme liquide ou gazeuse, ou encapsulée, ou absorbée, ou contenue dans la structure chimique d'un composant. L'eau peut être issue d'un ou plusieurs composants qui peut la rendre libre et disponible ultérieurement.

Selon un mode de réalisation, la composition adhésive selon l'invention est une composition bicomposante constituée des compositions A et B susmentionnées.

Le catalyseur dans la composition adhésive multicomposante est le catalyseur issu de la composition B.

La teneur totale en catalyseur dans la composition adhésive multicomposante, et de préférence bicomposante, selon l'invention peut être choisie parmi l'une des teneurs suivantes : 0,01%, 0,02%, 0,03%, 0,04%, 0,05%, 0,06%, 0,07%, 0,08%, 0,09%, 0,1%, 0,2%, 0,3%, 0,4%, 0,5%, 0,6%, 0,7%, 0,8%, 0,9%, 1%, 1,1%, 1,2%, 1,3%, 1,4%, 1,5%, 1,6%, 1,7%, 1,8%, 1,9%, 2,0%, 2,1%, 2,2%, 2,3%, 2,4%, 2,5%, 2,6%, 2,7%, 2,8%, 2,9%, 3,0%, 3,1%, 3,2%, 3,3%, 3,4%, 3,5%, 3,6%, 3,7%, 3,8%, 4,0%, 4,1%, 4,2%, 4,3%, 4,4%, 4,5%, 4,6%, 4,7%, 4,8%, 4,9%, 5%, 5,1%, 5,2%, 5,3%, 5,4%, 5,5%, 5,6%, 5,7%, 5,8%, 5,9%, 6%, 6,1%, 6,2%, 6,3%, 6,4%, 6,5%, 6,6%, 6,7%, 6,8%, 6,9%, 7%, 7,1%, 7,2%, 7,3%, 7,4%, 7,5%, 7,6%, 7,7%, 7,8%, 7,9%, 8%, 8,1%, 8,2%, 8,3%, 8,4%, 8,5%, 8,6%, 8,7%, 8,8%, 8,9%, 9%, 9,1%, 9,2%, 9,3%, 9,4%, 9,5%, 9,6%, 9,7%, 9,8%, 9,9%, ou 10% en poids par rapport au poids total de la composition adhésive multicomposante.

La teneur totale en catalyseur dans la composition adhésive multicomposante, et de préférence bicomposante, selon l'invention peut aller de 0,01% à 10%, de préférence de 0,01% à 5%, préférentiellement de 0,05% à 4%, avantageusement de 0,1% à 3%, en particulier de 0,5% à 2%, en poids par rapport au poids total de ladite composition adhésive bicomposante.

La composition adhésive multicomposante, de préférence bicomposante, selon l'invention peut comprendre au moins un co-catalyseur (différent du catalyseur issu de la composition B).

Selon un mode de réalisation, lorsque le catalyseur est choisi parmi les acides et leurs dérivés, sa teneur totale dans la composition adhésive multicomposante, de préférence bicomposante, est inférieure ou égale à 1%, de préférence inférieure ou égale à 0,5%, avantageusement inférieure ou égale à 0,2%, préférentiellement inférieure ou égale à 0,1%, voire inférieure ou égale à 0,05%, par rapport au poids total de ladite composition.

De préférence, dans la composition adhésive multicomposante, de préférence bicomposante susmentionnée, le ratio massique composition A : composition B va de 99,95 : 0,05 à 90 : 10, de préférence de 99,95 : 0,05 à 95 : 5, préférentiellement de 99,5 : 0,5 à 95 : 5, avantageusement de 99 : 1 à 95 : 5.

Le ratio composition A : composition B selon l'invention peut être choisi parmi l'un des ratios suivants : 99,95 : 0,05, 99,5 : 0,5, 99 : 1, 98 : 2, 97 : 3, 96 : 4 ou encore 95 : 5.

Selon un mode de réalisation préféré, la composition adhésive multicomposante, de préférence bicomposante,

est une composition thermofusible sensible à la pression, également connue sous la dénomination anglaise « Hot Melt Pressure Sensitive Adhesive » (ou HMPSA).

Typiquement, les compositions adhésives thermofusibles sensibles à la pression sont des compositions solides ou ayant une viscosité élevée (pâteux) à température ambiante, qui sont déposées (ou enduites) sur un support à l'état liquide, et assurent à ce dernier après refroidissement un pouvoir collant (ou pégosité) immédiat à température ambiante (souvent désigné sous le terme technique de « tack »), lequel permet avantageusement son adhésion instantanée sur un substrat sous l'effet d'une pression légère et brève.

Les HMPSA se distinguent notamment des adhésifs thermofusibles, « hot melt adhésives » ou HM qui sont des compositions qui confèrent au support qui en est revêtu un caractère relativement dur, et dénué de « tack » à température ambiante.

La composition adhésive multicomposante, de préférence bicomposante selon l'invention, est avantageusement réticulable à chaud et/ou à l'humidité.

Selon un mode de réalisation préféré, la composition adhésive multicomposante, de préférence bicomposante, selon l'invention, comprend :

- une composition A comprenant :

  ◦ au moins un polymère silylé, de préférence de formule (II), (III), (IV), ou (V), avantageusement un polymère de formule (III), en particulier un polymère de formule (III) dans laquelle $m_1$ est égal à 0, $R^4$ et $R^5$ représentent un groupe méthyle, p est égal à 1, et $R^3$ représente un méthylène ; et
  ◦ au moins une résine tackifiante, de préférence choisie parmi les résines obtenues par polymérisation d'hydrocarbures terpéniques et de phénols, en présence de catalyseur(s) de Friedel-Crafts ;

- une composition B comprenant :

  ◦ au moins un composé C1 choisi dans le groupe constitué des polyétheramines, des polyols et de leurs mélanges, en particulier le composé C1 est choisi parmi les polyéther polyols tels que par exemple, polypropylène glycols ayant en particulier une fonctionnalité hydroxyle égale à 2 ou 3, et de préférence un indice de polymolécularité allant de 1 à 1,6, de préférence de 1 à 1,4 ; et
  ◦ un catalyseur choisi parmi les composés organo-métalliques, en particulier à base d'aluminium, tel que par exemple les chélates d'aluminium,
  ◦ éventuellement de l'eau, de préférence en une teneur inférieure à 10% en poids, par exemple inférieure à 1% en poids par rapport au poids total de la composition B ;

le ratio composition A : composition B allant de préférence de 99 : 1 à 95 : 5, préférentiellement de 99 : 1 à 98 : 2, et la teneur totale en catalyseur allant de préférence de 0,5% à 5%, de préférence la teneur totale en catalyseur est de 1%, 2% ou 3% en poids par rapport au poids total de ladite composition adhésive,
ladite composition adhésive étant de préférence une composition adhésive thermofusible sensible à la pression.
De préférence, dans ce mode de réalisation, la teneur en composé(s) C1 va de 30% à 75%, de préférence de 40% à 70% en poids par rapport au poids total de la composition B, et la teneur en catalyseur va de 25% à 70%, de préférence de 30% à 60% en poids par rapport au poids total de la composition B.

Selon un mode de réalisation, la composition adhésive multicomposante, de préférence bicomposante, selon l'invention comprend :

- une composition A comprenant :

  ◦ au moins un polymère silylé, de préférence de formule (II), (III), (IV), ou (V), avantageusement un polymère de formule (III), en particulier un polymère de formule (III) dans laquelle $m_1$ est égal à 0, $R^4$ et $R^5$ représentent un groupe méthyle, p est égal à 1, et $R^3$ représente un méthylène ; et
  ◦ au moins une résine tackifiante, de préférence choisie parmi les résines obtenues par polymérisation d'hydrocarbures terpéniques et de phénols, en présence de catalyseur(s) de Friedel-Crafts ;

- une composition B comprenant :

  ◦ au moins un composé C1 choisi parmi les polymères mono- ou disilylés et/ ou leurs mélanges, en particulier les polymères monosilylés de formule (X) susmentionnée, dans laquelle de préférence $m_1$ = 0, $R^3$ est un groupe méthylène et p = 1; et

◦ un catalyseur choisi parmi les composés organo-métalliques, en particulier à base d'aluminium, tel que par exemple les chélates d'aluminium,

le ratio composition A : composition B allant de préférence de 99 : 1 à 95 : 5, préférentiellement de 99 : 1 à 98 : 2, et la teneur totale en catalyseur allant de préférence de 0,5% à 5%, de préférence la teneur totale en catalyseur est de 1%, 2% ou 3% en poids par rapport au poids total de ladite composition adhésive,
ladite composition adhésive étant de préférence une composition adhésive thermofusible sensible à la pression.
De préférence, dans ce mode de réalisation, la teneur en composé(s) C1 va de 30% à 75%, de préférence de 40% à 70% en poids par rapport au poids total de la composition B, et la teneur en catalyseur va de 25% à 70%, de préférence de 30% à 60% en poids par rapport au poids total de la composition B.

Selon un mode de réalisation, la composition adhésive multicomposante, de préférence bicomposante, selon l'invention comprend :

- une composition A comprenant :

  ◦ au moins un polymère silylé, de préférence de formule (II), (III), (IV), ou (V), avantageusement un polymère de formule (III), en particulier un polymère de formule (III) dans laquelle $m_1$ est égal à 0, $R^4$ et $R^5$ représentent un groupe méthyle, p est égal à 1, et $R^3$ représente un méthylène ; et
  ◦ au moins une résine tackifiante, de préférence choisie parmi les résines obtenues par polymérisation d'hydrocarbures terpéniques et de phénols, en présence de catalyseur(s) de Friedel-Crafts ;

- une composition B comprenant :

  ◦ au moins un composé C1 choisi parmi les résines tackifiantes, de préférence choisie parmi les colophanes d'origine naturelle ou modifiées ; et
  ◦ un catalyseur choisi parmi les acides, en particulier les acides inorganiques tels que par exemple l'acide orthophosphorique,

le ratio composition A : composition B allant de préférence de 99,5 : 0,5 à 98 : 2, et la teneur totale en catalyseur étant de préférence inférieure ou égale à 1%, préférentiellement inférieure ou égale à 0,5%, avantageusement inférieure ou égale à 0,2%, par exemple inférieure ou égale à 0,1% par rapport au poids total de ladite composition adhésive,
ladite composition adhésive étant de préférence une composition adhésive thermofusible sensible à la pression.
De préférence, dans ce mode de réalisation, la teneur en composé(s) C1 va de 50% à 95%, de préférence de 70% à 95% en poids par rapport au poids total de la composition B, et la teneur en catalyseur va de 5% à 50%, de préférence de 5% à 30% en poids par rapport au poids total de la composition B.

Selon un mode de réalisation, la composition adhésive multicomposante, de préférence bicomposante, selon l'invention comprend :

- une composition A comprenant :

  ◦ au moins un polymère silylé, de préférence de formule (II), (III), (IV), ou (V), avantageusement un polymère de formule (III), en particulier un polymère de formule (III) dans laquelle $m_1$ est égal à 0, $R^4$ et $R^5$ représentent un groupe méthyle, p est égal à 1, et $R^3$ représente un méthylène ; et
  o au moins une résine tackifiante, de préférence choisie parmi les résines obtenues par polymérisation d'hydrocarbures terpéniques et de phénols, en présence de catalyseur(s) de Friedel-Crafts ;

- une composition B comprenant :

  ◦ au moins un composé C1 choisi parmi les polyols, en particulier choisi parmi les polyéther polyols tels que par exemple les polypropylène glycols ayant en particulier une fonctionnalité hydroxyle égale à 2 ou 3, de préférence 3; et
  ◦ un catalyseur choisi parmi les acides, en particulier les organophosphates acides,
  ◦ éventuellement de l'eau, de préférence en une teneur inférieure à 10% en poids, par exemple inférieure à 2% en poids par rapport au poids total de la composition B ;

le ratio composition A : composition B allant de préférence de 99,5 : 0,5 à 98 : 2, et la teneur totale en catalyseur étant de préférence inférieure ou égale à 1%, préférentiellement inférieure ou égale à 0,5%, avantageusement inférieure ou égale à 0,2% en poids par rapport au poids total de ladite composition adhésive,
ladite composition adhésive étant de préférence une composition adhésive thermofusible sensible à la pression. De préférence, dans ce mode de réalisation, la teneur en composé(s) C1 va de 40% à 90%, de préférence de 50% à 80% en poids par rapport au poids total de la composition B, et la teneur en catalyseur va de 10% à 60%, de préférence de 20% à 50% en poids par rapport au poids total de la composition B.

Selon un mode de réalisation, la composition adhésive multicomposante, de préférence bicomposante, selon l'invention comprend :

- une composition A comprenant :

  ◦ au moins un polymère silylé, de préférence de formule (II), (III), (IV), ou (V), avantageusement un polymère de formule (III), en particulier un polymère de formule (III) dans laquelle $m_1$ est égal à 0, $R^4$ et $R^5$ représentent un groupe méthyle, p est égal à 1, et $R^3$ représente un méthylène ; et
  ◦ au moins une résine tackifiante, de préférence choisie parmi les résines obtenues par polymérisation d'hydrocarbures terpéniques et de phénols, en présence de catalyseur(s) de Friedel-Crafts ;

- une composition B comprenant :

  ◦ au moins un composé C2, par exemple choisi parmi les alcools ;
  ◦ un catalyseur choisi parmi les dérivés d'acides, en particulier parmi les sels d'ammonium d'acides, par exemple les sels d'ammonium d'acides sulfoniques ou les sels d'ammonium d'acides organophosphates ;
  ◦ éventuellement de l'eau, de préférence en une teneur inférieure à 40% en poids, et de préférence supérieure à 2% en poids par rapport au poids total de la composition B ;

le ratio composition A : composition B allant de préférence de 99,98 : 0,02 à 98 : 2, et la teneur totale en catalyseur étant de préférence inférieure ou égale à 2%, préférentiellement inférieure ou égale à 1%, avantageusement inférieure ou égale à 0,5% en poids par rapport au poids total de ladite composition adhésive,
ladite composition adhésive étant de préférence une composition adhésive thermofusible sensible à la pression. De préférence, dans ce mode de réalisation, la teneur en composé(s) C2 va de 40% à 90%, de préférence de 50% à 80% en poids par rapport au poids total de la composition B, et la teneur en catalyseur va de 10% à 50%, de préférence de 15% à 40% en poids par rapport au poids total de la composition B.

La composition adhésive multicomposante, de préférence bicomposante, avant réticulation, peut être solide à 23°C, ou avoir une viscosité à 23°C supérieure ou égale à 100 000 mPa.s.
La composition adhésive multicomposante, de préférence bicomposante, avant réticulation, peut avoir une viscosité à 100°C, inférieure ou égale à 50 000 mPa.s, de préférence inférieure ou égale à 20 000 mPa.s.
La composition adhésive selon l'invention conduit avantageusement à des vitesses de réticulation élevées. Ces vitesses de réticulation élevées permettent avantageusement d'éviter le passage dans un four, ou diminuer le temps de séjour dans le four de réticulation à la température et/ou humidité lors de la préparation d'articles auto-adhésifs, et ainsi d'atteindre un temps de séjour court dans le four, à savoir par exemple inférieur à 5 min, de préférence inférieurà 1 min, préférentiellement inférieur à 30 secondes, et avantageusement inférieurs à 10 secondes. La composition adhésive selon l'invention conduit donc avantageusement à des cadences de production industrielles élevées.
La composition adhésive selon l'invention présente avantageusement de bonnes propriétés auto-adhésives après réticulation.
Les compositions A et B de ladite composition adhésive (avant mélange) sont stables au stockage, à la température et/ou à l'humidité. La plus grande stabilité dans le temps permet avantageusement un maintien en stockage plus long et une manipulation avec un risque moindre de réaction, dégradation ou réticulation des compositions A et B, entre leur production et leur application à chaud.
La composition adhésive selon l'invention permet avantageusement la formation d'une couche adhésive uniforme ne présentant pas de problème de formation non contrôlée et inhomogène de grains ou de gels, et/ou permet avantageusement une réticulation homogène sur l'ensemble de la couche support.
La composition adhésive peut avantageusement comprendre une teneur élevée en catalyseur, sans engendrer des phénomènes de prise en masse dans les conduits de circulation des composants de l'adhésif lors de la production d'articles auto-adhésifs.
De préférence, la composition adhésive selon l'invention est conditionnée dans un kit comprenant au moins

deux compartiments séparés, à savoir un premier compartiment pour la composition A, et un second compartiment pour la composition B, et éventuellement d'autre(s) compartiment(s) pour des compositions additionnelles.

***Kit***

La présente invention concerne également un kit comprenant au moins la composition A et la composition B susmentionnées dans deux compartiments séparés. Les compartiments peuvent par exemple être des fûts, des cartouches, des saches ... Lorsque la composition adhésive multicomposante comprend d'autres compositions, celles-ci sont contenus d'autres compartiments du kit.

***Article auto-adhésif***

La présente invention a également pour objet un article auto-adhésif comprenant une couche support revêtue d'une couche auto-adhésive, ladite couche auto-adhésive consistant en une composition adhésive selon l'invention à l'état réticulé.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires.

L'article auto-adhésif est un article auto-adhésif sensible à la pression.

Ces articles ont notamment pour but d'être appliqués sur une surface à coller afin de rapprocher, de maintenir, de fixer, ou simplement d'immobiliser, d'exposer des formes, logos, images ou informations. Ces articles peuvent être utilisés dans de nombreux domaines, tels que le domaine médical, l'habillement, l'emballage, l'automobile (par exemple pour la pose de logos, le lettrage, l'insonorisation intérieure, l'habillage intérieur, les collages dans l'habitacle) ou la construction (par exemple pour l'isolation phonique et thermique, l'assemblage de fenêtres). Ils peuvent être façonnés en fonction de leur application finale, par exemple sous la forme de rubans, tels que les rubans à usage industriel, les rubans de bricolage ou à usage de fixation sur chantiers, les rubans simple ou double face, ou sous la forme d'étiquettes, de bandages, de pansements, de patchs ou de films graphiques.

Selon un mode de réalisation, l'article auto-adhésif est un système multicouche auto-adhésif, et en particulier une étiquette ou un ruban auto-adhésif, pouvant être à simple ou double face.

Le matériau utilisable pour la couche support peut par exemple être tout type de support rigide ou souple. On peut par exemple citer les supports de type mousses, feutrines, support non tissés, plastiques, membranes, les papiers ou un film d'un matériau polymère à une ou plusieurs couches.

La couche support est en matériau par exemple choisi parmi les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes ; le polystyrène ; le caoutchouc naturel ou synthétique ; les copolymères vinyliques, tels que le polychlorure de vinyle, plastifié ou non plastifié, et les poly(acétate de vinyle) ; les copolymères oléfiniques, tels que les copolymères éthylène/méthacrylate, les copolymères éthylène/acétate de vinyle, les copolymères acrylonitrile/butadiène/styrène, et les copolymères éthylène/propylène ; les polymères et les copolymères acryliques ; les polyuréthanes ; les polyéthers ; les polyesters ; et les mélanges de ceux-ci. De préférence, la couche support est à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

Selon un mode de réalisation, l'article auto-adhésif obtenu à partir de la composition adhésive selon l'invention comprend une couche support permanente revêtue d'une couche adhésive. De préférence, la couche adhésive est en outre revêtue d'un film plastique ou papier protecteur anti-adhérent, de préférence siliconé.

A titre d'alternative au film protecteur anti-adhérent, la face arrière de la couche support permanente qui n'est pas revêtue de la couche adhésive, peut avoir une surface anti-adhérente, par exemple une couche protectrice siliconée.

Selon un mode de réalisation, la couche support permanente est revêtue sur ses deux faces par une composition adhésive, qui peut être identique ou différente, au moins une des deux compositions adhésives étant selon l'invention.

De préférence, la couche support présente une épaisseur allant de 10 microns à 50 mm, de préférence encore allant de 10 microns à 20 mm, de préférence allant de 20 microns à 10 mm, de préférence encore allant de 20 microns à 1 mm.

Dans certains cas spécifiques, il est nécessaire de procéder à un traitement de surface de la couche support pour augmenter l'accroche de la couche adhésive lors de l'étape d'enduction sur celle-ci.

L'article auto-adhésif selon l'invention peut ainsi coller deux substrats. Le substrat sur lequel l'article auto-adhésif est destiné à être appliqué (désigné par « substrat à coller ») peut être flexible ou rigide. En particulier, il peut présenter les mêmes propriétés de flexibilité que la couche support décrite ci-dessus, de manière à être enroulé et conditionné sous la forme d'une bobine, par exemple telle que décrite précédemment. Alternativement, le substrat à coller peut être rigide. Dans ce cas, le substrat ne peut être enroulé et conditionné sous la forme d'une bobine, par

exemple telle que décrite précédemment. Le substrat à coller peut par exemple être choisi parmi le béton, le papier, les substrats de type polyoléfines...

Selon un mode de réalisation, l'article auto-adhésif comprend en outre une couche anti-adhérente protectrice (« release liner » en anglais).

Selon un mode de réalisation, ladite couche anti-adhérente est appliquée sur la couche adhésive, après réticulation de la composition adhésive.

La couche support peut être recouverte sur une de ses deux faces, la face arrière qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

L'article auto-adhésif selon l'invention peut être susceptible d'être obtenu par le procédé comprenant les étapes suivantes :

(a) le mélange des compositions A et B de la composition adhésive selon l'invention telle que définie précédemment à une température allant de 40°C à 130°C ; puis
(b) l'enduction par la composition adhésive obtenue à l'étape (a) d'une surface porteuse ; puis
(c) la réticulation de la composition adhésive enduite, par chauffage à une température allant de 50°C à 200°C en particulier dans un environnement gazeux où des molécules d'eau sont présentes entre 10 et 200 g par $m^3$ de gaz;
(d) le contre collage ou le transfert de la couche adhésive réticulée sur une couche support ou sur un film protecteur anti-adhérent, ladite couche support ou film anti-adhérent pouvant être le revers de la surface porteuse.

Par « surface porteuse » au sens de la présente invention, il faut comprendre soit un convoyeur à bande recouvert d'une couche anti-adhérente, soit un film protecteur anti-adhérent (« release liner » en anglais), soit une couche support. Ainsi, la surface porteuse est amenée à devenir partie intégrante de l'article auto-adhésif, soit comme film protecteur anti-adhérent, soit comme couche support.

Dans le cas où la surface porteuse n'est pas une couche support, le procédé d'obtention de l'article auto-adhésif selon l'invention comprend l'étape (d) de transfert de la couche adhésive réticulée sur une couche support.

Dans le cas où la surface porteuse est une couche support, le procédé d'obtention de l'article auto-adhésif selon l'invention peut comprendre l'étape (d) de contre collage de la couche adhésive sur un film protecteur anti-adhérent.

Selon une variante préférée de l'invention, l'étape (d) du procédé sus-décrit consiste en un transfert de la couche adhésive réticulée sur une couche support souple (pouvant être un film plastique) après refroidissement de la couche adhésive réticulée à une température inférieure à la température de dégradation ou de ramollissement du matériau composant la couche support.

Selon un mode de réalisation, l'article auto-adhésif selon l'invention est susceptible d'être obtenu par le procédé tel que décrit précédemment, ne comprenant pas d'étape de prétraitement de la surface de la couche support. Ces prétraitements visent à modifier chimiquement et/ou physiquement ladite surface, pour accroitre l'énergie superficielle et/ou la rugosité de ladite surface, et ainsi améliorer l'adhérence de la couche adhésive sur ladite surface. A titre d'exemple, de traitements de surface connus, on peut citer un traitement plasma, corona, une abrasion ou encore l'application sur ladite surface d'un agent chimique d'accroche (dit aussi primaire) capable de conférer au substrat revêtu dudit agent une énergie de surface élevée.

Selon un mode de réalisation, le procédé de fabrication de l'article auto-adhésif selon l'invention comprend en outre une étape (e) d'enduction d'une seconde couche de composition adhésive selon l'invention sur la couche support suivie d'une étape (f) de réticulation de la composition adhésive enduite à l'étape (e) par chauffage à une température allant de 20 à 200°C. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle met en oeuvre un grammage de composition adhésive allant de 3 à 5000g/$m^2$.

Le grammage de composition adhésive nécessaire pour la fabrication d'étiquettes auto-adhésives peut aller de 10 à 100 g/$m^2$, de préférence de 20 à 50 g/$m^2$. Celui nécessaire pour la fabrication de rubans auto-adhésifs peut varier dans un domaine beaucoup plus large allant de 3 à 5000 g/$m^2$, de préférence de 15 à 250 g/$m^2$ par face.

Selon un mode de réalisation, la composition adhésive enduite est en outre soumise, lors de l'étape (c) à un traitement dans une atmosphère humide caractérisée par son niveau d'humidité. De préférence, l'atmosphère humide est une atmosphère dans laquelle de 2 à 100% des molécules sont des molécules d'eau, de préférence de 3 à 50%, de préférence encore de 3 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre

de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97'.

L'étape de réticulation thermique a notamment pour effet la création - entre les chaînes polymériques à terminaisons alcoxysilanes hydrolysables de la composition adhésive et sous l'action de l'humidité atmosphérique - des liaisons de type siloxane qui conduisent à la formation d'un réseau polymérique tri-dimensionnel. La composition adhésive ainsi réticulée est en particulier un adhésif sensible à la pression qui confère à la couche support qui en est revêtue le pouvoir adhésif et le tack désirables.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou sur au moins une partie des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

L'article auto-adhésif selon l'invention peut être utilisé dans une méthode de collage comprenant les étapes suivantes :

a) retirer la couche protectrice anti-adhérente, lorsqu'une telle couche est présente ;
b) appliquer l'article auto-adhésif sur une surface d'un produit; et
c) appliquer une pression sur ledit article.

A l'étape b), l'article auto-adhésif est appliqué de manière à ce que la partie auto-adhésive de l'article (formée par la couche auto-adhésive) soit face à la surface du produit.

Selon un mode de réalisation dans lequel l'article auto-adhésif est un article double face, la méthode de collage comprend en outre une étape dans laquelle soit une seconde surface d'un produit est appliquée sur l'article collé sur la première surface d'un produit, soit l'article collé sur la première surface d'un produit est appliqué sur une seconde surface d'un produit.

***Procédé d'application***

La présente invention concerne également un procédé d'application à chaud de la composition adhésive (80) multicomposante, de préférence bicomposante, telle que définie précédemment, sur un support (96), à l'aide d'une installation d'application à chaud (20) de ladite composition adhésive, l'installation comprenant :

- une buse (50) d'application de la composition adhésive multicomposante ;
- une ligne (88a) d'alimentation de la composition Ade la composition adhésive multicomposante à appliquer sous forme fluide ;
- une ligne (66a) d'alimentation de la composition B de la composition adhésive multicomposante à appliquer sous forme fluide ;
- une ligne (88) d'alimentation de la buse (50) avec la composition adhésive multicomposante à appliquer sous forme fluide ;
- un mélangeur (30) pour le mélange d'au moins les compositions A et B de la composition adhésive multicomposante;

le procédé comprenant :

- l'approvisionnement de la ligne (88a) d'alimentation avec au moins la composition A de la composition adhésive multicomposante ;
- l'approvisionnement de la ligne (66a) d'alimentation avec au moins la composition B de la composition adhésive multicomposante ;
- le mélange d'au moins la composition A et la composition B de la composition multicomposante à l'aide d'un mélangeur (30) ;
- l'application à chaud de la composition adhésive multicomposante mélangée (80) sur un support à l'aide de la buse d'application (50).

L'installation selon l'invention peut comprendre d'autre(s) ligne(s) d'alimentation, notamment d'autre(s) ligne(s) d'alimentation du mélangeur (30), avec d'autre(s) composition(s) additionnelle(s) de la composition multicomposante. Par exemple, si la composition adhésive selon l'invention est une composition tricomposante, l'installation peut comprendre une ligne d'alimentation (95), notamment du mélangeur (30), avec une composition additionnelle D (en plus des compositions A et B susmentionnées).

Le mélangeur peut être un mélangeur statique ou un mélangeur dynamique.

De préférence, le mélangeur statique ou dynamique doit pouvoir être régulé en température. De préférence, le mélangeur est un mélangeur dynamique, permettant avantageusement un mélange à fort cisaillement, et l'obtention d'une meilleure homogénéité de la composition adhésive résultante du mélange d'au moins les compositions A et B de la composition multicomposante.

Le mélangeur (30) peut être disposé entre les lignes d'alimentation d'au moins les compositions A (88a) et B (66a), et la ligne d'alimentation (88), et peut permettre le mélange homogène des compositions constituant la composition adhésive multicomposante.

Le procédé selon l'invention comprend le mélange d'au moins la composition A et la composition B de la composition multicomposante à l'aide d'un mélangeur (30). L'étape de mélange peut être un mélange de la composition A avec la composition B, et éventuellement avec une ou plusieurs composition(s) additionnelle(s) de la composition multicomposante.

L'installation peut comprendre un dispositif de chauffage en ligne (22), en amont du point de mélange d'au moins la composition A avec la composition B, et incluant un mélangeur statique (30) et un câble inducteur (26) entourant le mélangeur statique.

Le procédé d'application peut comprendre, préalablement à l'application à chaud, le chauffage d'au moins les compositions A et B jusqu'à la température d'application, par l'alimentation électrique d'un câble inducteur du dispositif (26) de chauffage en ligne (22).

L'installation peut comprendre des moyens de chauffage (44) aptes à être disposés au niveau d'un réservoir de stockage (82) comprenant la composition A ou la composition B ou une autre composition additionnelle de la composition multicomposante, pour élever ladite composition à une température de pompage, de préférence au moins la composition A est élevée à une température de pompage comprise entre 50°C et 140°C, de préférence comprise entre 80°C et 120°C, plus préférentiellement entre 90°C et 110°C.

De préférence, la composition adhésive multicomposante est appliquée (après mélange d'au moins les compositions A et B) à une température comprise entre 50°C et 140°C, de préférence comprise entre 80°C et 120°C, plus préférentiellement entre 90°C et 110°C.

La figure 1 montre un mode de réalisation d'une installation susceptible de mettre en oeuvre le procédé proposé d'application de composition adhésive selon l'invention.
La figure 2 montre un mode de réalisation du mélangeur dynamique utilisé dans le procédé proposé.
La figure 3 montre un mode de réalisation du mélangeur statique utilisé dans le procédé proposé.
La figure 4 montre une olive de réduction de section au point de mélange des composants.
La figure 5 montre un dispositif de chauffage comprenant le mélangeur statique de la figure 3.
La figure 1 montre une représentation schématique d'un mode de réalisation de l'installation 20.

Selon un mode de réalisation, du fait du au moins double approvisionnement, la composition B (66), est séparée de la composition A (68), jusqu'à un mélangeur (30) disposé entre les lignes d'alimentation d'au moins les compositions A (88a) et B (66a) et la ligne d'alimentation (88) de la composition adhésive multicomposante à appliquer. En d'autres termes, le mélangeur (30) est en ligne et permet la réalisation d'une étape de mélange homogène des compositions (66) et (68) approvisionnées séparément. L'injection de la composition B (66) dans la composition A (68) est réalisée au niveau du mélangeur (30), tel qu'illustré par exemple sur la figure 1, pour permettre le mélange immédiat de ces compositions.

Les différentes compositions constituant la composition adhésive multicomposante selon l'invention peuvent être séparées totalement, c'est-à-dire que chaque composition est approvisionnée séparément à l'installation d'application à chaud (20). En particulier, l'injection de la composition A (68), de la composition B (66), et d'éventuelle(s) composition(s) additionnelle(s) de la composition adhésive multicomposante, est réalisée au niveau du mélangeur (30).

L'installation selon l'invention peut comprendre plusieurs mélangeurs (non représenté sur les figures). L'installation peut par exemple comprendre au moins un mélangeur en amont du mélangeur (30), ou en aval du mélangeur (30), de préférence en amont.

Selon un mode de réalisation, l'installation selon l'invention comprend au moins deux mélangeurs, de préférence en ligne, un premier mélangeur (M) permettant le mélange d'au moins les compositions A (68) et B (66) approvisionnées séparément audit mélangeur (M), et au moins un mélangeur (30) permettant par exemple le mélange entre le mélange obtenu au mélangeur (M) avec au moins une composition additionnelle (par exemple notée D) de la composition multicomposante, avant son application. Dans ce cas, l'installation comprend également une ligne d'alimentation de la composition additionnelle (par exemple D) jusqu'au mélangeur (30). L'injection de la composition D dans le mélange de la composition A et de la composition B réalisé dans le mélangeur (M) en amont, est dans ce cas réalisée au niveau du mélangeur (30).

Selon un autre mode de réalisation, l'installation selon l'invention comprend au moins deux mélangeurs, de préférence en ligne, un premier mélangeur (M) permettant le mélange d'au moins la composition A (68) avec au moins une autre composition additionnelle (par exemple notée D) de la composition multicomposante approvisionnées séparément, et au moins un mélangeur (30) permettant par exemple le mélange entre le mélange obtenu en sortie du premier mélange (M) avec au moins la composition B, avant son application. Dans ce cas, l'installation comprend également une ligne d'alimentation de la composition additionnelle (par exemple notée D) jusqu'au mélangeur (M). L'injection d'au moins la composition B dans le mélange de la composition A et d'au moins la composition D réalisé dans le mélangeur (M) en amont, est dans ce cas réalisé au niveau du mélangeur (30). Un tel mode de réalisation peut également correspondre au pré-mélange de la composition B (66) (au lieu de la composition A) avec au moins une autre composition additionnelle dans un mélangeur (M), suivi du mélange du mélange obtenu dans le mélangeur (M) avec la composition A (au lieu de la composition B).

Quel que soit le mode de réalisation, les constituants de la composition A peuvent être mélangés un par un, ou tous ensemble, ou par mélange de plusieurs constituants avec d'autre(s) constituant(s). Il en va de même de la composition B, et d'éventuelle(s) composition(s) additionnelle(s) de la composition adhésive multicomposante. Ainsi, l'installation peut prévoir des mélangeurs supplémentaires en amont des lignes d'alimentation (88a), (66a), et des lignes d'alimentation de la (des) composition(s) additionnelle(s).

Dans l'installation selon l'invention, la composition A (68) peut être chauffée dans le réservoir de stockage (82) à l'aide d'un moyen de chauffage (44), sans provoquer la réticulation de la composition A (68) du fait de la séparation de la composition B (66), comprenant au moins le catalyseur de réticulation. Le chauffage dans le réservoir de stockage (82), représenté sous forme de fût, permet en particulier de diminuer la viscosité de la composition A (68), pour faciliter le pompage dans l'installation (20), tel qu'à l'aide d'une pompe (46), avant tout contact avec la composition B (66) séparée.

Ce moyen de chauffage (44) (étant de préférence un plateau chauffant) contribue notamment à la mise en température d'application de la composition A (68). La température d'application correspond notamment à une température où la composition adhésive à appliquer présente une viscosité suffisamment faible pour permettre l'application, autrement dit l'enduction, de la composition adhésive multicomposante mélangée (80) sur la surface (96). En effet, après le mélange des compositions B (66) et A (68), la composition adhésive multicomposante (80) est constituée et peut être appliquée à chaud sur le support (96) à l'aide d'une buse d'application (50). Une température d'application de la composition adhésive multicomposante (80) peut ainsi correspondre à une température où la viscosité de la composition adhésive multicomposante est inférieure ou égale à 50 Pa.s, de préférence inférieure ou égale à 10 Pa.s. A titre d'exemple, la composition adhésive multicomposante (80) peut présenter une viscosité de 5 $\pm$ 1 Pa.s à une température d'application allant de 60°C à 120°C. A la suite de l'application de la composition adhésive multicomposante (80) sur la surface (96), le support enduit (98) est soumis à une température contrôlée, et éventuellement à un taux d'humidité contrôlé, pour permettre la réticulation de la composition adhésive multicomposante. La température contrôlée peut être obtenue à l'aide d'un four ou d'une enceinte. La température contrôlée correspond à une température de réticulation de la composition adhésive multicomposante (80) et est par exemple comprise entre 50°C et 200°C, de préférence entre 80°C et 160°C, en particulier entre 100°C et 150°C.

De manière analogue la composition B (66) peut elle aussi être chauffée avant son mélange avec la composition A (68) sans risque de réticulation avant leur mélange. Il en va de même de toute(s) composition(s) de la composition multicomposante selon l'invention.

Le chauffage de l'ensemble des compositions B (66) et A (68) séparées avant leur mélange permet notamment d'amener ces composants à la température d'application sans risque de réticulation avant leur mélange dans le mélangeur (30).

En permettant une réduction du temps de séjour à chaud de la composition adhésive multicomposante (80), le procédé proposé peut effectuer la mise en température d'application de la composition adhésive multicomposante (80), même dans le cas où la température d'application est incluse dans la plage de température de réticulation de la composition adhésive multicomposante (80). Selon la température prévue d'application incluse dans la plage de température de réticulation, le temps de séjour à chaud de la composition adhésive multicomposante (80) en mouvement peut alors être adapté. Le temps de séjour à chaud de la composition adhésive multicomposante en mouvement peut notamment être modulé avec le débit de la composition adhésive multicomposante (80) et le volume de la ligne d'alimentation (88) depuis le point de mélange des compositions séparées B (66), A (68) et la buse d'application (50). Par exemple, pour une composition adhésive multicomposante (80) à appliquer à 100°C et présentant une plage de température de réticulation de 100°C à 120°C avec des temps de réticulation d'une à quelques minutes (cas sans apport additionnel d'humidité dans le four car eau déjà présente dans la composition B), le débit de la composition adhésive multicomposante (80) en ligne peut être ajusté afin que la réaction de réticulation reste limitée pour ne pas encrasser

l'installation avec de la composition adhésive réticulée.

Selon un mode de réalisation, l'apport en composition B peut également être modulé lors de l'arrêt, voulu ou non, de la ligne de production de l'article adhésif.

La progression de la réaction de réticulation peut être appréciée en référence au taux de conversion de la réaction de réticulation dans l'installation déterminé selon l'équation suivante :

$$(1) \qquad X = \frac{\dot{m}_0 - \dot{m}_t}{\dot{m}_0}$$

où X est le taux de conversion sans unité, $\dot{m}_0$ est le débit massique de composition adhésive multicomposante non réticulée au niveau du réservoir de stockage (82) sous forme de fût ; $\dot{m}_t$ est le débit massique de composition adhésive non réticulé au niveau de la buse (50).

Le débit de la composition adhésive multicomposante (80) en ligne peut être ainsi être ajusté pour que, selon la cinétique de réaction et selon la température, le taux de conversion de la réaction de réticulation de la composition adhésive permette l'enduction d'une couche adhésive homogène. Le débit de la composition adhésive (80) dans le dispositif de chauffage en ligne est par exemple compris entre 80 $g.min^{-1}$et 1500 $g.min^{-1}$, soit environ de 4,8 à 90 Kg par heure, tel que égal à $120g.min^{-1}$, soit environ de 7 Kg par heures. Ce débit est notamment fonction de la longueur du four de réticulation, de l'épaisseur de la couche adhésive et de la largeur d'enduction.

Pour permettre un mélange des composants avec un débit élevé, le mélangeur (30) et éventuellement le(s) mélangeur(s) (M) peut être adapté à un mélangeur très efficace et l'utilisation de plusieurs systèmes d'alimentation et de mélangeage pour alimenter le système d'enduction. Le mélangeur (30) peut être un mélangeur dynamique (40) tel qu'illustré en figure 2. Alternativement, la figure 3 montre une vue en perspective de la structure interne d'un mode de réalisation du mélangeur (30) en mélangeur statique (36). Les mélangeurs statiques sont notamment connus pour être utilisés dans l'industrie du moulage par injection afin d'homogénéiser la matière avant l'injection dans un moule. Le mélangeur statique (36) en ligne (88) peut comprendre au moins un élément de mélange présentant des surfaces de déflexion (32) du fluide visant à obtenir un mélange homogène du fluide sur une courte distance et avec un faible cisaillement. Les éléments de mélange peuvent présenter une densité de surface supérieure ou égale à $5*10^3m^{-1}$, de préférence comprise entre $5*10^3m^{-1}$et $10*10^3m^{-1}$. La densité de surface correspond à une quantité de surfaces de déflexion par volume et est donc exprimé en $m^2/m^3$, i.e. en $m^{-1}$. Le mélangeur statique (36) peut en outre être pourvu d'une olive (52) au niveau du point d'injection de la composition B (66) dans la ligne (88), tel qu'illustré en figure 4. Cette olive (52) réduisant la section de passage libre (54) pour la composition B (66) augmente alors localement sa vitesse d'écoulement lors de son mélange avec la composition A (68) le faisant successivement passer d'un régime laminaire, à un régime intermédiaire ou turbulent au passage de l'olive, facilitant la dispersion de la composition B (66) dans la composition A (68), puis à un régime laminaire. En effet, au point de contact, ou point de mélange, le catalyseur de réticulation se retrouve localement à une forte concentration augmentant fortement la cinétique de réaction avec la composition A (68). L'augmentation locale de la vitesse de défilement permet alors de limiter le temps de contact, au point d'injection, entre la composition B (66) et la composition A (68) avant leur mélange plus homogène, et donc moins réactif localement.

Tel qu'illustré en traits discontinus en figure 3, le mélangeur statique présente l'ensemble des éléments de mélange comme comprenant des surfaces de déflexion (32) disposés dans un fourreau (34). Le fourreau (34) forme un conduit de circulation de la composition adhésive (80). Le mélangeur (36) étant disposé en ligne, le fourreau (34), en tant que conduit de circulation du mélangeur (36), est une portion de la ligne (88).

Le mélangeur statique (36) peut présenter la particularité de comporter un matériau conducteur électriquement. Dans ce document, on entend par un matériau conducteur électriquement, un matériau présentant une résistivité inférieure à 10 $\Omega$.m, de préférence inférieur $10^{-6}\Omega$.m. Cette particularité permet l'ajout d'une fonction de chauffage par induction au mélangeur (36). Cet ajout d'une fonction de chauffage au mélangeur (36) peut aussi être réalisé lorsque le mélangeur est un mélangeur dynamique. Toutefois, les compositions B(66) et A (68) pouvant être chauffées à la température d'application sans risque de réticulation, l'ajout de la fonction de chauffage présente particulièrement l'intérêt de maintenir la température d'application au niveau du mélangeur (36).

En référence à la figure 5, le mélangeur (36) sous forme de mélangeur statique peut être en partie inclus dans un dispositif de chauffage en ligne (22), ce dispositif (22) comprenant un câble inducteur entourant le mélangeur statique. Le dispositif de chauffage en ligne est de préférence disposé en amont du point de mélange des compositions B (66) et A (68), une partie mélangeur statique (36) étant disposée en aval du point de mélange. Le champ magnétique généré par le câble inducteur (26) entourant le mélangeur statique (36) est alors susceptible d'induire un courant électrique, connu sous le nom de courant de Foucault, dans le conducteur électrique du mélangeur statique (36). Les courants de Foucault induits dans le conducteur électrique entraînent un dégagement de chaleur par effet Joule qui se diffuse à la composition adhésive multicomposante (80) par l'intermédiaire des composants du mélangeur statique (36). Le câble

inducteur (26) est par exemple alimenté à l'aide d'un courant électrique à haute fréquence, de préférence supérieure ou égale à 1 MHz, telle qu'à 15 MHz.

Selon un mode de réalisation préféré du dispositif de chauffage en ligne (22), le fourreau (34) est en matériau isolant électriquement. Dans ce document, on entend par matériau isolant électriquement un matériau présentant une résistivité supérieure ou égale à $10^6\Omega$.m. Le matériau isolant du fourreau (34) est par exemple du verre ou un prépolymère dépourvu de charges conductrices. Selon ce mode de réalisation préféré, les éléments de mélange 38 sont réalisés en matériau conducteur électriquement pour permettre le chauffage par induction du mélangeur statique (36). En effet, comme indiqué précédemment, le câble inducteur (26) est susceptible, avec une alimentation électrique en courant alternatif, d'induire un courant de Foucault dans tout conducteur électrique placé dans le champ magnétique produit. L'induction des courants de Foucault se réalise alors directement dans les éléments de mélange (38) au niveau des surfaces de déflexion (32), et non pas au niveau du fourreau 34 placé entre le câble inducteur et les éléments de mélange (38). La réalisation d'une induction et d'un effet Joule au niveau des surfaces de déflexion (32) permet un chauffage plus efficace de la composition adhésive (80) qui rentre en contact directement avec ces surfaces de déflexion (32), sans intermédiaire.

Selon un mode de réalisation moins avantageux, le fourreau (34) est en matériau conducteur, de sorte que l'induction de courant de Foucault ne pénètre que le fourreau (34) et pas les éléments de mélange (38). L'effet Joule se produit alors au niveau du fourreau (34), et la chaleur se diffuse à la composition adhésive multicomposante (80) par conduction grâce à l'intermédiaire des surfaces de déflexion (32). Dans ce mode de réalisation moins avantageux proposé, l'échange thermique est moins efficace du fait de l'utilisation d'un intermédiaire pour conduire la chaleur.

Selon un mode de réalisation préféré du procédé proposé (20), la buse d'application (50) peut aussi être chauffée. Le chauffage de la buse (50) contribue alors à la mise en température d'application de la composition adhésive (80). Ainsi selon ce mode de réalisation, la buse (50) d'application fait partie du dispositif de chauffage (22) à la température d'application. Le chauffage de la buse (50) permet d'apporter de l'énergie thermique en fin de ligne (88) pour amener la composition adhésive à la température finale d'application. Cette température finale d'application n'étant atteinte qu'en fin de ligne (88), le temps de séjour à cette température est court, limitant alors les risques de réticulation de la composition adhésive. Selon ce mode de réalisation, les compositions B (66) et A (68) peuvent être chauffées à une température un peu plus faible, par exemple de 10°C ou moins, que la température finale d'application. La température de la composition adhésive multicomposante (80) dans le mélangeur statique (30) étant plus faible que la température d'application, la durée de réticulation à cette température est plus faible et les risques de bouchon en ligne sont alors encore diminués.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

Les exemples suivants sont donnés à titre purement illustratif de l'invention et ne sauraient être interprétés pour en limiter la portée.

## EXEMPLES

Ingrédients utilisés:

- ACCLAIM ® 8200, disponible auprès de COVESTRO : polypropylène glycol diol de masse moléculaire moyenne en nombre de 8 016 g/mol, un indice hydroxyle IOH de 14 mgKOH/g ;
- GENIOSIL ® STP-E30, disponible auprès de WACKER : polypropylène glycol chapeauté par une fonction alpha silane de type methyl diméthoxy de masse moléculaire moyenne en nombre d'environ 14493 g/mol;
- GENIOSIL ® XL-33, disponible auprès de WACKER : méthacryloxyméthyltriméthoxysilane
- SYLVATAC RE-12, disponible auprès de KRATON: ester de colophane liquide à température ambiante, un indice d'acide de 12 mgKOH/g, une température de transition vitreuse de -25°C ;
- MESAMOLL, disponible auprès de LANXESS : phényl alkyle sulfonique ester, plastifiant ;
- K-KAT ® 5218, disponible auprès de la société KING INDUSTRIES : catalyseur de type chélate d'aluminium ;
- Acide orthophosphorique : disponible auprès de Febex, pureté de 99% ;
- DERTOPHENE ® H150, disponible auprès de DRT : résine tackifiante de type terpène phénolique ;
- IRGANOX ® 1010, disponible auprès de BASF : antioxydant de type phénol encombré ;
- IRGANOX ® 245, disponible auprès de BASF : antioxydant de type phénol encombré ;
- IRGANOX ® B561, disponible auprès de BASF : mélange d'antioxydant de type phénol encombré et de type phosphite encombré.

Le polymère P1 est le GENIOSIL ® STP-E30, disponible auprès de WACKER.

**Exemple 1 : préparation des compositions adhésives**

**Exemple 1a : préparation de la composition A**

La composition A de la composition adhésive a été préparée en introduisant tout d'abord la résine tackifiante DERTOPHENE ® H150 dans un réacteur en verre sous vide et chauffé à environ 160°C. Puis, une fois la résine bien fondue, la composition de polymère(s), les antioxydants (et autres composés éventuels) ont été ajoutés. Une fois le mélange homogène, le réacteur n'est plus chauffé et est maintenu avec une agitation volumique modérée jusqu'à un refroidissement du mélange à une température de l'ordre de 80°C . Le réacteur a ensuite été vidé et la composition adhésive a été stockée pendant une semaine en cartouche aluminium pour la préserver de l'humidité atmosphérique et prévenir toute réticulation non désirée.

Tableau de la composition A:

| | **A1** |
|---|---|
| Dertophène H150 | 46,1% |
| Irqanox 1010 | 0,8% |
| Irqanox B561 | 1,5% |
| Irqanox 245 | 0,2% |
| Polymère P1 | 51,0% |
| Geniosil XL33 | 0,4% |
| *Les pourcentages sont des pourcentages massiques par rapport à la* masse *totale de la composition A.* | |

**Exemple 1b : préparation des compositions B**

Les compositions B (B1, B2) de la composition adhésive ont été préparées en introduisant tout d'abord le(s) composé(s) C (tels que définis précédemment) dans un réacteur en verre sous azote et à 23°C. Puis, le(s) catalyseur(s) a(ont) été ajouté(s) sous azote. Ces compositions B peuvent être stockées en bidon ou en sache de polyéthylène, de polypropylène ou en sache triplex aluminium thermoscellée sous azote

Tableau des compositions B :

| | **B1** | **B2** |
|---|---|---|
| K-KAT 5218 (catalyseur) | 50 | |
| Acclaim 8200 | 50 | |
| Acide orthophosphorique (99%) (catalyseur) | | 5 |
| Sylvatac RE12 | | 75 |
| Mesamoll | | 20 |
| *Les pourcentages sont des pourcentages massiques par rapport à la* masse *totale de la composition B.* | | |

**Exemple 1c : préparations des compositions adhésives**

Les compositions adhésives E1, et E2 ont été préparées par mélange des parties A et B détaillées dans le tableau ci-dessous.

La partie A est préchauffée 1 heure à 80°C, puis ajoutée dans un bol en polypropylène, enfin est ajoutée la partie B qui se trouve à température ambiante. On place le bol en polypropylène dans un mélangeur de laboratoire speed-mixer avec les conditions d'agitation suivantes : 2000t/min pendant 5 minutes. 5 grammes de la quantité du mélange résultant sont prélevés pour effectuer immédiatement le test décrit dans l'exemple 2a. Simultanément, le reste du mélange est prélevé pour effectuer l'opération décrite dans l'exemple 2b dans les 3 minutes suivant la fin du mélangeage.

| | Composition E1 (invention) | Composition E2 (invention) |
|---|---|---|
| Composition B | B1 | B2 |
| Teneur totale du catalyseur dans la composition adhésive finale (% massique) | 1% | 0,1 % |
| Ratio A : B | 98 : 2 | 98 : 2 |

**Exemple 1d : préparations des compositions adhésives comparatives F (F1 et F2)**

Les compositions comparatives F1 et F2 ont été préparées par mélanges des différents ingrédients, comme décrit dans l'exemple 1a. Une fois préparée, les compositions F1 et F2 ont été stockées une semaine. Les compositions sont décrites dans le tableau suivant.

Tableau des compositions F:

| | **F1** | **F2** |
|---|---|---|
| Dertophène H150 | 45,4% | 45,2% |
| Irganox 1010 | 0,8% | 0,8% |
| Irganox B561 | 1,5% | 1,5% |
| Irganox 245 | 0,2% | 0,2% |
| Polymère P1 | 50,2% | 50,0% |
| Geniosil XL33 | 0,4% | 0,4% |
| Acclaim 8200 | 1% | 1% |
| K-KAT 5218 | 0,5% | 1% |
| *Les pourcentages sont des pourcentages massiques par rapport à la masse totale de la composition F (F1 ou F2).* | | |

Ces compositions adhésives F1 et F2 sont des compositions mono-composantes. Elles comprennent les mêmes ingrédients que la composition E1 selon l'invention.

**Exemple 2 : tests**

**Exemple 2a : méthode de mesure du temps de réticulation (temps de formation de peau, dit en anglais « skinning time »)**

Pour chacune des compositions, le temps de formation d'une peau à la surface d'un film à 100 °C dans une salle climatisée à 23°C et 50% +/- 5% d'humidité relative a été mesuré selon la méthode suivante :
Une première mesure approximative du temps de formation de peau a été effectuée. Pour cela :

- Préchauffage d'une plaque chauffante à 100°C (± 5°C) au minimum 30 minutes avant le lancement du test.
- Pesée d'un échantillon à température ambiante de 5 g de la composition à tester dans une coupelle aluminium.
- Vérification de la température de surface de la plaque à 100°C (avec un pistolet IR).
- Pose de la coupelle contenant l'échantillon sus-décrit sur la plaque chauffante à 100°C.
- Déclenchement du chronomètre.

Toutes les 30 secondes, une pointe métallique a été enfoncée superficiellement à la surface de l'échantillon. Il se forme un fil très fin qui s'étire beaucoup quand on approche du « skinning time (ST) » (qui correspond au début de formation d'une peau en surface), le fil se transforme en un petit tube qui se rompt très rapidement. Il est considéré que la peau est formée lorsque l'on déplace la pointe métallique de gauche à droite sans rompre ce tube collé à la pointe.

Dans un second temps, trois mesures complémentaires ont été effectuées afin d'affiner la mesure du temps de formation de peau obtenue par la première estimation. Pour cela, pour chacune des mesures complémentaires, il a été procédé comme précédemment : préparation d'un nouvel échantillon de 5g à partir de la même composition comme

décrit dans l'exemple 1, dépôt de la coupelle contenant l'échantillon sur une plaque chauffante à 100°C, puis déclenchement du chronomètre. 30 secondes avant le temps de formation peau trouvé lors du premier essai, la surface de l'échantillon a été vérifié toutes les 5 secondes comme précédemment jusqu'à déterminer le temps de formation de peau exact de l'échantillon. Le temps moyen de formation de peau de l'échantillon exprimé en minutes ou secondes:

Temps de formation de peau $\pm$ 3 x $\sigma$ où $\sigma$ représente l'écart type (ce qui correspond à un intervalle de confiance de 99,9%).

Les résultats se trouvent dans le tableau 1 ci-après.

**Exemple 2b : préparation d'une couche support PET revêtue de la composition adhésive réticulée, à raison d'un grammage de 50 g/$m^2$**

On utilise comme couche support une feuille rectangulaire de PolyEthylèneTéréphtalate (PET) d'épaisseur 50 $\mu$m et de dimensions 20 cm sur 40 cm. On dépose le mélange finale de l'adhésif (exemple 1d et 1c) à une température entre 80 et 100°C. Dans le cas de la composition adhésive F1, on préchauffe à une température proche de 100°C une cartouche obtenue dans l'exemple 1d, d'où l'on extrude un cordon qui est déposé près du bord de la feuille parallèlement à sa largeur. Dans le cas des compositions adhésives E1 et E2, le cordon est déposé immédiatement après le mélange opéré en exemple 1c. Le cordon est ensuite réparti sur la totalité de la surface de la feuille, de manière à obtenir une couche uniforme et d'épaisseur sensiblement constante. On utilise pour cela un tire-film (également dénommé filmographe) qui est déplacé à une vitesse de l'ordre de 10 mètres par minutes du bord de la feuille au bord opposé. On dépose ainsi une couche de composition adhésive ayant une épaisseur de l'ordre de 50 $\mu$m, correspondant à un grammage de 50 g/$m^2$ environ. La feuille de PET ainsi revêtue est alors placée dans une étuve à 120°C durant 8 minutes pour la réticulation de la composition adhésive, puis contrecollée sur une couche anti-adhérente protectrice consistant en une feuille de film siliconé, rectangulaire et de mêmes dimensions.

**Exemple 2c : test de pelage à 180°C sur inox poncé**

Le pouvoir adhésif est évalué par le test de pelage (ou peel) à 180° tel que décrit dans la méthode FINAT n° 1, publiée dans le Manuel Technique FINAT 6$^{ème}$ édition, 2001, sur polyoléfine. FINAT est la fédération internationale des fabricants et transformateurs d'étiquettes auto-adhésives. Le principe de ce test est le suivant.

Immédiatement après sa réticulation une éprouvette sous forme de bande rectangulaire (25 mm x 175 mm) est découpée dans la couche support PET revêtue de la composition réticulée selon l'exemple 2b. Cette éprouvette est, après sa préparation, stockée soit durant 24 heures à une température de 23°C et dans une atmosphère à 50 % d'humidité relative (« J+1 »), soit durant 14 jours à une température de 50°C (« J+14 »). Elle est ensuite fixée sur les 2/3 de sa longueur (après enlèvement de la portion de couche anti-adhérente protectrice correspondante) sur un substrat constitué d'une plaque d'acier inoxydable. L'assemblage obtenu est laissé 20 minutes à température ambiante (23°C). Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

**Exemple 2d : résultats**

Tableau 1 : résultats

| | Composition F1 mono-composante (comparative) | Composition F2 monocomposante (comparative) | Composition E1 (invention) | Composition E2 (invention) |
|---|---|---|---|---|
| Composition B | - | - | B1 | B2 |
| Teneur totale du catalyseur dans la composition adhésive finale (% massique) | 0,5% | 1% | 1% | 0,1% |
| Ratio A : B | Non applicable | Non applicable | 98: 2 | 98 : 2 |

(suite)

| | Composition F1 mono-composante (comparative) | Composition F2 monocomposante (comparative) | Composition E1 (invention) | Composition E2 (invention) |
|---|---|---|---|---|
| Aspect visuel | Moins de 100 défauts* / $m^2$ | Plus de 500 défauts* / $m^2$ | Moins de 20 défauts* / $m^2$ | Moins de 20 défauts* / $m^2$ |
| Temps de formation de peau à 100°C (en secondes) | 200 | non mesuré car trop de défauts | 90 | 37 |
| Test de pelage (N/inch) sur inox | | | | |
| J+1 à 23°C | 24,5 | non mesuré car trop de défauts | 23,6 | 22,7 |
| J+14 après stockage à 50°C (mesure effectuée à 23°C) | 18,0 | non mesuré car trop de défauts | 20,6 | 21,1 |
| * : les défauts peuvent être des grains, ou des gels plus gros. | | | | |

Les résultats montrent que les compositions E1 et E2 conduisent avantageusement à un temps de formation de peau inférieur à celui de la composition F1 comparative, ainsi qu'un bon aspect visuel. Par ailleurs, la composition monocomposante F2 comprenant 1% de catalyseur ne permet pas d'obtenir un HMPSA d'aspect satisfaisant. C'est-à-dire que l'enduction PSA comprend trop de défauts d'aspects qui sont inacceptables pour l'utilisateur final. Par ailleurs, une concentration trop élevée de catalyseur en formulation monocomposante de type F1 ou F2 représente un risque en ce qui concerne la stabilité de l'adhésif dans son packaging au cours du stockage avec une formation de gels, et de peau prématurée en surface. Tous ces défauts formés dans le packaging sont susceptibles de créer des problèmes lors de l'application, tels que des relargages non contrôlés de produit plus ou moins solides ou gélifiés, et des bouchages de conduits ou de la buse d'application, entraînant des manques de matière ou des défauts d'épaisseurs dans l'enduction finale..

En outre, les tests de pelage après stockages d'une journée à 23°C, ou de 14 jours à 50°C, montrent que les compositions E1 et E2 permettent à l'article adhésif d'atteindre de bonnes performances finales.

Ainsi, les compositions E1 et E2 conduisent avantageusement à des temps de réticulation plus courts, et permettent donc de préparer des articles auto-adhésifs avec une cadence de production industrielle plus élevée.

## Revendications

**1.** Composition adhésive multicomposante, de préférence thermofusible sensible à la pression, comprenant :

- une composition A comprenant :
  - ◦ au moins un polymère silylé comprenant au moins un groupe alkoxysilane hydrolysable ;
  - ◦ au moins une résine tackifiante ;
- une composition B comprenant :
  - ◦ au moins un catalyseur ;
  - ◦ au moins un composé C choisi parmi :
    - ▪ un composé C1 ayant une masse moléculaire moyenne en nombre allant de 300 g/mol à 500 000 g/mol, ladite masse moléculaire moyenne en nombre étant mesurée par chromatographie d'exclusion stérique en utilisant des étalons de type polystyrène ; et
    - ▪ un composé C2 ayant une tension de vapeur à 20°C supérieure ou égale à 0,08 kPa ;
    - ▪ et leurs mélanges ;

le ratio massique composition A : composition B allant de 99,98 : 0,02 à 60 : 40, de préférence de 99,95 : 0,05 à 60 : 40, et préférentiellement de 99,95 : 0,05 à 80 : 20, et encore plus préférentiellement de 99,95 : 0,05 à

90 : 10 ;
la teneur totale en catalyseur allant de 0,01% à 10%, de préférence de 0,01% à 5% en poids par rapport au poids total de ladite composition adhésive.

**2.** Composition selon la revendication 1, dans laquelle le polymère silylé comportant au moins un groupe alkoxysilane hydrolysable, de la composition A, est choisi parmi les polymères de formules (II), (III), (IV), ou (V) telles que définies ci-dessous, et leurs mélanges :

$$(R^5O)_{3-p}(R^4)_pSi\text{-}R^0\text{-}[OR^2]_n\text{-}R^0\text{-}Si(R^4)p(OR^5)_{3-p} \qquad (II)$$

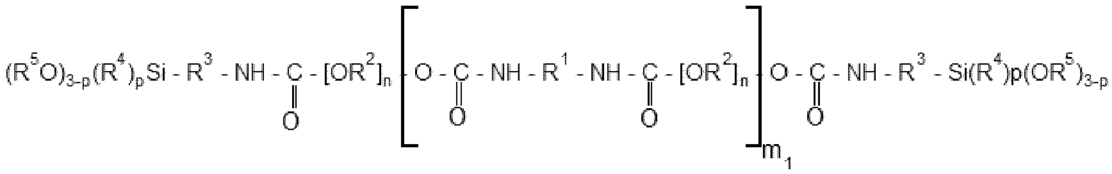

(III)

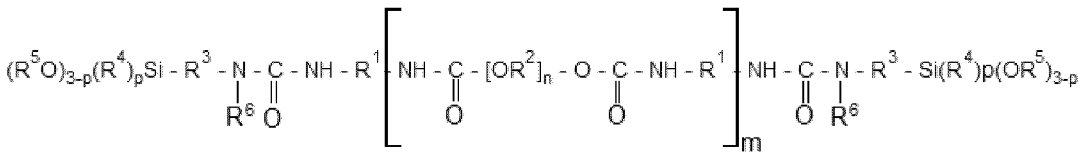

(IV)

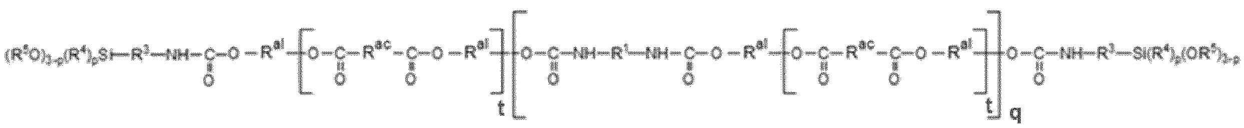

(V)

dans lesquelles :

- $R^1$ représente un radical divalent hydrocarboné comprenant de 5 à 15 atomes de carbone qui peut être aromatique ou aliphatique, linéaire, ramifié ou cyclique,
- $R^0$ représente un radical divalent alkylène linéaire ou ramifié comprenant de 3 à 6 atomes de carbone,
- $R^3$ représente un radical divalent alkylène linéaire ou ramifié comprenant de 1 à 6 atomes de carbone, de préférence $R^3$ représentant méthylène ou n-propylène,
- $R^2$ représente un radical divalent alkylène linéaire ou ramifié comprenant de 2 à 4 atomes de carbone,
- $R^4$ et $R^5$, identiques ou différents, représentent chacun un radical alkyle linéaire ou ramifié comprenant de 1 à 4 atomes de carbone,
- $R^6$ représente un atome d'hydrogène, un radical phényle, un radical alkyle linéaire, ramifié ou cyclique comprenant de 1 à 6 atomes de carbone, ou un radical 2-succinate de formule :

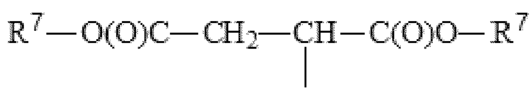

dans laquelle $R^7$ est un radical alkyle linéaire ou ramifié comprenant de 1 à 6 atomes de carbone,
- n est un nombre entier tel que la masse moléculaire moyenne en nombre du bloc polyéther de formule $-[OR^2]_n-$ va de 300 g/mol à 40 000 g/mol dans les polymères de formules (II), (III) et (IV),
- $m_1$ est zéro ou un nombre entier,
- n et $m_1$ sont tels que la masse moléculaire moyenne en nombre du polymère de formule (III) va de 500 g/mol à 50 000 g/mol, de préférence de 700 g/mol à 20 000 g/mol,

- m est un nombre entier différent de zéro,
- n et m sont tels que la masse moléculaire moyenne en nombre du polymère de formule (IV) va de 500 g/mol à 50 000 g/mol, de préférence de 700 g/mol à 20 000 g/mol,
- p est un nombre entier égal à 0, 1 ou 2, p étant de préférence 0 ou 1,
- $R^{al}$ représente un radical hydrocarboné divalent issu d'un diol par remplacement de chacun des deux groupes hydroxyles par une valence libre;
- $R^{ac}$ représente un radical hydrocarboné divalent issu d'un acide dicarboxylique par remplacement de chacun des deux groupes carboxyles -COOH par une valence libre;
- t est un nombre tel que le polyester diol de formule (VI) :

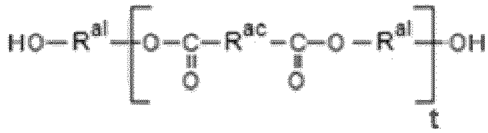

(VI)

a un indice d'hydroxyle $I_{OH}$ compris entre 4 et 60 mg KOH/g ;
- q est un nombre entier différent de zéro,
- t et q sont tels que la masse moléculaire moyenne en nombre du polymère de formule (V) est comprise entre 400 g/mol et 50 000 g/mol.

**3.** Composition selon la revendication 2, dans laquelle le polymère silylé, de la composition A, est choisi parmi :

- un polymère de formule (III) dans laquelle :

  - $m_1$ est un nombre entier égal à 0,
  - p = 1,
  - $R^4$ et $R^5$ représentent chacun un radical méthyle,
  - $R^3$ représente un radical divalent méthylène,
  - la masse moléculaire moyenne en nombre dudit polymère va de 5 000 à 30 000 g/mol, préférentiellement de 10 000 à 20 000 g/mol, en particulier de 14 000 g/mol à 15 000 g/mol.

- un polymère de formule (III) dans laquelle :

  - $m_1$ est un nombre entier différent de 0,
  - p = 0,
  - $R^3$ représente un radical divalent propylène,
  - $R^5$ représente un radical méthyle,
  - la masse moléculaire moyenne en nombre dudit polymère va de 5 000 à 30 000 g/mol, préférentiellement de 10 000 à 30 000 g/mol, en particulier de 15 000 à 25 000 g/mol.

- un polymère de formule (V) dans laquelle :

  - q est un nombre entier différent de 0,
  - p = 0,
  - $R^3$ représente un radical divalent propylène
  - $R^5$ représente un radical méthyle,
  - la masse moléculaire moyenne en nombre dudit polymère va de 5 000 à 30 000 g/mol, préférentiellement de 10 000 à 30 000 g/mol, en particulier de 15 000 à 25 000 g/mol.

**4.** Composition selon l'une quelconque des revendications 1 à 3, dans laquelle la composition A comprend en outre au moins un additif, par exemple choisi dans le groupe constitué des plastifiants, des solvants, des pigments, des colorants, des promoteurs d'adhérence, des absorbeurs d'humidité, des stabilisants UV, des antioxydants, des paillettes, des matériaux fluorescents, des additifs rhéologiques, des charges, des agents ignifugeants, des cires, et de leurs mélanges.

**5.** Composition selon l'une quelconque des revendications 1 à 4, dans laquelle le catalyseur est choisi dans le groupe

constitué des amines, des composés organo-métalliques, des acides et de leurs dérivés, et de leurs mélanges.

**6.** Composition selon la revendication 5, dans laquelle les amines sont choisies dans le groupe constitué de la triéthylamine, de la tributylamine, de la tétraméthylguanidine, du 1,8-diazabicyclo[5.4.0]-7-undécène, du 1,4-diazabicyclo[2.2.2]octane, du 1,5-diazabicyclo[4.3.0]non-5-ène, de la N,N-bis(N,N-diméthyl-2-aminoéthyl)méthylamine, de la N,N-diméthylcyclohexaylamine, de la N,N-diméthylphénylamine, de la N-éthylmorpholine, et de leurs mélanges.

**7.** Composition selon la revendication 5, dans laquelle les acides sont choisis parmi :

- les catalyseurs acides organiques, tels que par exemple choisis parmi les acides sulfoniques, les acides carboxyliques, les organophosphates acides, les organophosphonates acides, les acides phosphoniques, et leurs mélanges,
- les catalyseurs acides inorganiques, tels que par exemple choisis parmi l'acide phosphorique ou orthophosphorique, l'acide phosphoreux, l'acide hypophosphoreux, ou l'acide sulfurique, en particulier l'acide orthophosphorique,
- et leurs mélanges.

**8.** Composition selon la revendication 7, dans laquelle les organophosphates acides sont choisis dans le groupe constitué des mono- ou dialkyle phosphates acides en C1-C22 et de leurs mélanges, tel que par exemple le phosphate de butyle, le phosphate de dibutyle, le phosphate de di-(2-éthylhexyle), le phosphate de 2-éthylhexyle et leurs mélanges ; des phosphates de mono-, ou diaryle, et de leurs mélanges, tel que par exemple le phosphate de monophényle, le phosphate de diphényle et leurs mélanges ; des alkyle-phényle phosphates ; et de leurs mélanges.

**9.** Composition selon la revendication 7, dans laquelle les acides sulfoniques sont choisis parmi les acides N-alkylaminoalkylsulfoniques et les acides N,N-dialkylaminoalkylsulfoniques, tels que par exemple l'acide 2-(N-Morpholino)éthanesulfonique, l'acide 3-(N-morpholino)propanesulfonique, l'acide 4-[N-morpholino]butanesulfonique, l'acide 1,4-pipérazinediéthanesulfonique, l'acide N-2-hydroxyéthylpipérazine-N'-2-éthanesulfonique, l'acide 2-(N-morpholino)éthanesulfonique, l'acide N-Morpholinométhanesulfonique, l'acide N-(2-hydroxyéthyl)pipérazine-N'-méthanesulfonique, l'acide pipérazine-N,N'-bis(méthanesulfonique), l'acide cyclohexylaminométhanesulfonique, l'acide N-[tris(hydroxyméthyl)méthyl]-aminométhanesulfonique, l'acide N,N-bis(2-hydroxyéthyl)aminométhanesulfonique ; l'acide para-toluène sulfonique ; l'acide benzène sulfonique ; l'acide méthanesulfonique ; l'acide dodécylbenzène sulfonique ; l'acide dodécylbenzène disulfonique ; l'acide dinonylnaphtalène disulfonique ; l'acide dinonylnaphtalène sulfonique ; l'acide trifluorométhylsulfonique ; et leurs mélanges.

**10.** Composition selon la revendication 5, dans laquelle les dérivés d'acide sont des anhydrides d'acide, des esters d'acide, ou des sels d'ammonium d'acide.

**11.** Composition selon l'une quelconque des revendications 1 à 10, dans laquelle le composé C1 est choisi dans le groupe constitué des polyols, des polyétheramines, des résines tackifiantes, des organosilanes, des polymères mono ou poly-silylés, des esters de polyol, et de leurs mélanges.

**12.** Composition selon l'une quelconque des revendications 1 à 11, dans laquelle le composé C2 est choisi parmi les alcools, par exemple parmi l'isopropanol, l'isobutanol, le butanol, le méthanol, le 2-butoxyéthanol, et leurs mélanges.

**13.** Composition selon l'une quelconque des revendications 1 à 12, dans laquelle le ratio catalyseur(s) : composé(s) C dans la composition B va de 0,01 : 99,99 à 95 : 5, de préférence de 5 : 95 à 95 : 5, en particulier de 5 : 95 à 60 : 40, préférentiellement de 10 : 90 à 50 : 50, avantageusement de 20 : 80 à 50 : 50.

**14.** Composition selon l'une quelconque des revendications 1 à 13, dans laquelle la composition B comprend de l'eau en une teneur allant de 0,05% à 50%, de préférence de 0,1% à 30%, préférentiellement de 0,5% à 15%, en particulier de 0,5% à 10% en masse par rapport à la masse totale de la composition B.

**15.** Composition selon l'une quelconque des revendications 1 à 14, dans laquelle la teneur totale en catalyseur va de 0,01% à 10%, préférentiellement de 0,05% à 4%, avantageusement de 0,1% à 3%, en particulier de 0,5% à 2%, en poids par rapport au poids total de ladite composition.

**16.** Composition selon l'une quelconque des revendications 1 à 15, dans laquelle le ratio massique composition A : composition B va de 99,95 : 0,05 à 90 : 10, de préférence de 99,95 : 0,05 à 95 : 5, préférentiellement de 99,5 : 0,5

à 95 : 5, avantageusement de 99 : 1 à 95 : 5.

**17.** Article auto-adhésif comprenant une couche support revêtue d'une couche auto-adhésive, ladite couche auto-adhésive consistant en une composition, selon l'une quelconque des revendications 1 à 16, à l'état réticulé.

**18.** Procédé d'application à chaud de la composition adhésive (80) multicomposante telle que définie selon l'une quelconque des revendications 1 à 16, sur un support (96), à l'aide d'une installation d'application à chaud (20) de ladite composition adhésive, l'installation comprenant :

- une buse (50) d'application de la composition adhésive multicomposante ;
- une ligne (88a) d'alimentation de la composition A de la composition adhésive multicomposante à appliquer sous forme fluide ;
- une ligne (66a) d'alimentation de la composition B de la composition adhésive multicomposante à appliquer sous forme fluide ;
- une ligne (88) d'alimentation de la buse (50) avec la composition adhésive multicomposante (80) à appliquer sous forme fluide ;
- un mélangeur (30) pour le mélange d'au moins les compositions A et B de la composition adhésive multicomposante;

le procédé comprenant :

- l'approvisionnement de la ligne (88) d'alimentation avec au moins la composition A de la composition adhésive multicomposante ;
- l'approvisionnement de la ligne (66a) d'alimentation avec au moins la composition B de la composition adhésive multicomposante ;
- le mélange d'au moins la composition A et la composition B de la composition multicomposante à l'aide d'un mélangeur (30) ;
- l'application à chaud de la composition adhésive multicomposante mélangée (80) sur un support à l'aide de la buse d'application (50).

**19.** Procédé selon la revendication 18, dans lequel le mélangeur est un mélangeur statique ou un mélangeur dynamique.

**20.** Procédé selon l'une quelconque des revendications 18 ou 19, dans lequel l'installation comprend plusieurs mélangeurs.

**Patentansprüche**

**1.** Mehrkomponentige Klebstoffzusammensetzung, vorzugsweise Schmelzhaftklebstoffzusammensetzung, umfassend:

- eine Zusammensetzung A, umfassend:
  - ◦ mindestens ein Silylpoylymer mit mindestens einer hydrolysierbaren Alkoxysilangruppe;
  - ◦ mindestens ein Klebrigmacherharz;
- eine Zusammensetzung B, umfassend:
  - ◦ mindestens einen Katalysator;
  - ◦ mindestens eine Verbindung C, ausgewählt aus:
    - ▪ einer Verbindung C1 mit einer zahlenmittleren Molmasse im Bereich von 300 g/mol bis 500.000 g/mol, wobei die zahlenmittlere Molmasse durch Größenausschlusschromatographie unter Verwendung von Polystyrol-Standards gemessen wird; und
    - ▪ einer Verbindung C2 mit einem Dampfdruck bei 20 °C größer oder gleich 0,08 kPa;
    - ▪ und Mischungen davon;

wobei das Massenverhältnis von Zusammensetzung A zu Zusammensetzung B im Bereich von 99,98:0,02 bis

60:40, vorzugsweise von 99,95:0,05 bis 60:40 und bevorzugt von 99,95:0,05 bis 80:20 und noch weiter bevorzugt von 99,95:0,05 bis 90:10 liegt;
der Gesamtgehalt an Katalysator im Bereich von 0,01 bis 10 Gew.-% und vorzugsweise von 0,01 bis 5 Gew.-%, bezogen auf das Gesamtgewicht der Klebstoffzusammensetzung, liegt.

**2.** Zusammensetzung nach Anspruch 1, wobei das Silylpolymer mit mindestens einer hydrolysierbaren Alkoxysilangruppe von Zusammensetzung A aus den Polymeren der Formeln (II), (III), (IV) oder (V) gemäß nachstehender Definition und Mischungen davon ausgewählt ist:

$$(R^5O)_{3-p}(R^4)_pSi\text{-}R^0\text{-}[OR^2]_n\text{-}R^0\text{-}Si(R^4)p(OR^5)_{3-p} \qquad (II)$$

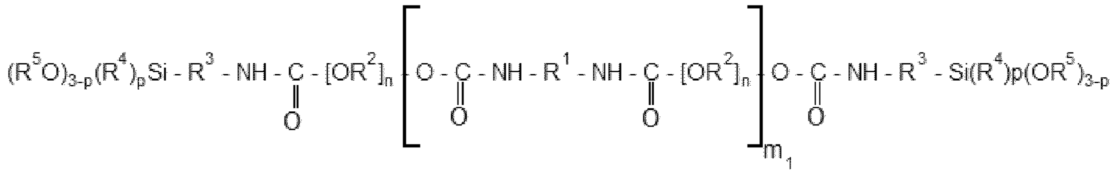

(III)

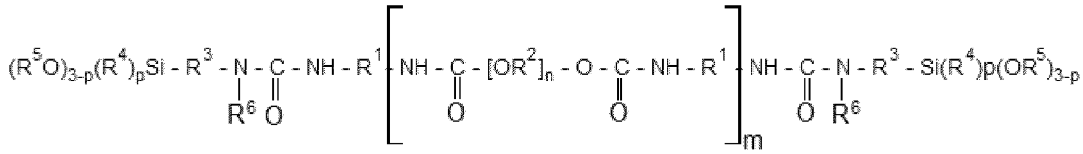

(IV)

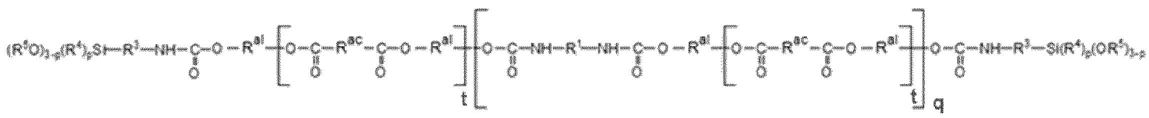

(V)

in denen:

- $R^1$ für einen zweiwertigen Kohlenwasserstoffrest mit 5 bis 15 Kohlenstoffatomen, der aromatisch oder aliphatisch, linear, verzweigt oder cyclisch sein kann, steht,
- R° für einen linearen oder verzweigten zweiwertigen Alkylenrest mit 3 bis 6 Kohlenstoffatomen steht,
- $R^3$ für einen linearen oder verzweigten zweiwertigen Alkylenrest mit 1 bis 6 Kohlenstoffatomen steht, wobei $R^3$ vorzugsweise für Methylen oder n-Propylen steht,
- $R^2$ für einen linearen oder verzweigten zweiwertigen Alkylenrest mit 2 bis 4 Kohlenstoffatomen steht,
- $R^4$ und $R^5$, die gleich oder verschieden sind, jeweils für einen linearen oder verzweigten Alkylrest mit 1 bis 4 Kohlenstoffatomen stehen,
- $R^6$ für ein Wasserstoffatom, einen Phenylrest, einen linearen, verzweigten oder cyclischen Alkylrest mit 1 bis 6 Kohlenstoffatomen oder einen 2-Succinatrest der Formel:

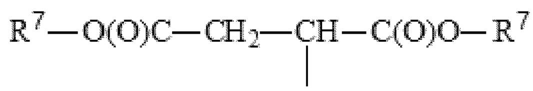

steht, in der $R^7$ für einen linearen oder verzweigten Alkylrest mit 1 bis 6 Kohlenstoffatomen steht,
- n eine solche ganze Zahl ist, dass in den Polymeren der Formeln (II), (III) und (IV) die zahlenmittlere Molmasse des Polyetherblocks der Formel -$[OR^2]_n$- im Bereich von 300 g/mol bis 40.000 g/mol liegt,
- $m_1$ null oder eine ganze Zahl ist,
- n und $m_1$ so beschaffen sind, dass die zahlenmittlern Molmasse des Polymers der Formel (III) im Bereich von

500 g/mol bis 50.000 g/mol, vorzugsweise von 700 g/mol bis 20.000 g/mol, liegt,
- m eine ganze Zahl ist, die von null verschieden ist,
- n und m so beschaffen sind, dass die zahlenmittlere Molmasse des Polymers der Formel (IV) im Bereich von 500 g/mol bis 50.000 g/mol, vorzugsweise von 700 g/mol bis 20.000 g/mol, liegt,
- p eine ganze Zahl mit einem Wert von 0, 1 oder 2 ist, wobei p vorzugsweise 0 oder 1 ist,
- $R^{al}$ für einen zweiwertigen Kohlenwasserstoffrest steht, der sich von einem Diol durch Ersatz jeder der beiden Hydroxylgruppen durch eine freie Valenz ableitet;
- $R^{ac}$ für einen zweiwertigen Kohlenwasserstoffrest steht, der sich von einer Dicarbonsäure durch Ersatz jeder der beiden Carboxylgruppen -COOH durch eine freie Valenz ableitet;
- t eine solche Zahl ist, dass das Polyesterdiol der Formel (VI):

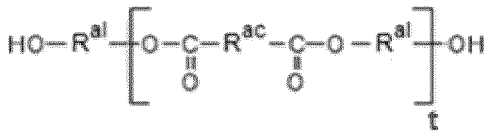

(VI)

eine Hydroxylzahl $I_{OH}$ zwischen 4 und 60 mg KOH/g aufweist;
- q eine ganze Zahl ist, die von null verschieden ist,
- t und q so beschaffen sind, dass die zahlenmittlere Molmasse des Polymers der Formel (V) zwischen 400 g/mol und 50.000 g/mol liegt.

**3.** Zusammensetzung nach Anspruch 2, wobei das Silylpolymer von Zusammensetzung A ausgewählt ist aus:

- einem Polymer der Formel (III), in der:

  - $m_1$ für eine ganze Zahl mit einem Wert von 0 steht,
  - p = 1,
  - $R^4$ und $R^5$ jeweils für einen Methylrest stehen,
  - $R^3$ für einen zweiwertigen Methylenrest steht,
  - die zahlenmittlere Molmasse des Polymers im Bereich von 5000 bis 30.000 g/mol, bevorzugt von 10.000 bis 20.000 g/mol, insbesondere von 14.000 bis 15.000 g/mol, liegt,

- einem Polymer der Formel (III), in der:

  - $m_1$ eine ganze Zahl ist, die von 0 verschieden ist,
  - p = 0,
  - $R^3$ für einen zweiwertigen Propylenrest steht,
  - $R^5$ für einen Methylrest steht,
  - die zahlenmittlere Molmasse des Polymers im Bereich von 5000 bis 30.000 g/mol, bevorzugt von 10.000 bis 30.000 g/mol, insbesondere von 15.000 bis 25.000 g/mol, liegt,

- einem Polymer der Formel (V), in der:

  - q eine ganze Zahl ist, die von 0 verschieden ist,
  - p = 0,
  - $R^3$ für einen zweiwertigen Propylenrest steht,
  - $R^5$ für einen Methylrest steht,
  - die zahlenmittlere Molmasse des Polymers im Bereich von 5000 bis 30.000 g/mol, bevorzugt von 10.000 bis 30.000 g/mol, insbesondere von 15.000 bis 25.000 g/mol, liegt.

**4.** Zusammensetzung nach einem der Ansprüche 1 bis 3, wobei die Zusammensetzung A außerdem mindestens ein Additiv umfasst, das beispielsweise aus der Gruppe bestehend aus Weichmachern, Lösungsmitteln, Pigmenten, Farbstoffen, Haftvermittlern, Feuchtigkeitsabsorbern, UV-Stabilisatoren, Antioxidantien, Flitter, fluoreszierenden Materialien, Rheologieadditiven, Füllstoffen, Flammschutzmitteln, Wachsen und Mischungen davon ausgewählt ist.

**5.** Zusammensetzung nach einem der Ansprüche 1 bis 4, wobei der Katalysator aus der Gruppe bestehend aus Aminen, metallorganischen Verbindungen, Säuren und Derivaten davon und Mischungen davon ausgewählt ist.

6. Zusammensetzung nach Anspruch 5, wobei die Amine aus der Gruppe bestehend aus Triethylamin, Tributylamin, Tetramethylguanidin, 1,8-Diazabicyclo[5.4.0]-7-undecen, 1,4-Diazabicyclo[2.2.2]octan, 1,5-Diazabicyclo[4.3.0]non-5-en, N,N-Bis(N,N-dimethyl-2-aminoethyl)methylamin, N,N-Dimethylcyclohexylamin, N,N-Dimethylphenylamin, N-Ethylmorpholin und Mischungen davon ausgewählt sind.

7. Zusammensetzung nach Anspruch 5, wobei die Säuren ausgewählt sind aus:

- organischen Säurekatalysatoren, die beispielsweise aus Sulfonsäuren, Carbonsäuren, sauren Organophosphaten, sauren Organophosphonaten, Phosphonsäuren und Mischungen davon ausgewählt sind,
- anorganischen Säurekatalysatoren, die beispielsweise aus Phosphorsäure oder Orthophosphorsäure, phosphoriger Säure, hypophosphoriger Säure oder Schwefelsäure, insbesondere Orthophosphorsäure, ausgewählt sind,
- und Mischungen davon.

8. Zusammensetzung nach Anspruch 7, wobei die sauren Organophosphate ausgewählt sind aus der Gruppe bestehend aus sauren C1-C22-Mono- oder Dialkylphosphaten und Mischungen davon, beispielsweise Butylphosphat, Dibutylphosphat, Bis(2-ethylhexyl)phosphat, 2-Ethylhexylphosphat und Mischungen davon; Mono- oder Diarylphosphaten und Mischungen davon, beispielsweise Monophenylphosphat, Diphenylphosphat und Mischungen davon; Alkylphenylphosphaten; und Mischungen davon.

9. Zusammensetzung nach Anspruch 7, wobei die Sulfonsäuren ausgewählt sind aus N-Alkylaminoalkylsulfonsäuren und N,N-Dialkylaminoalkylsulfonsäuren, beispielsweise 2-(N-Morpholino)ethansulfonsäure, 3-(N-Morpholino)propansulfonsäure, 4-[N-Morpholino]butansulfonsäure, 1,4-Piperazindiethansulfonsäure, N-2-Hydroxyethylpiperazin-N'-2-ethansulfonsäure, 2-(N-Morpholino)ethansulfonsäure, N-Morpholinomethansulfonsäure, N-(2-Hydroxyethyl)piperazin-N'-methansulfonsäure, Piperazin-N,N'-bis(methansulfonsäure), Cyclohexylaminomethansulfonsäure, N-[Tris(hydroxymethyl)methyl]aminomethansulfonsäure, N,N-Bis(2-hydroxyethyl)aminomethansulfonsäure; para-Toluolsulfonsäure; Benzolsulfonsäure; Methansulfonsäure; Dodecylbenzolsulfonsäure; Dodecylbenzoldisulfonsäure; Dinonylnaphthalindisulfonsäure; Dinonylnaphthalinsulfonsäure; Trifluormethylsulfonsäure; und Mischungen davon.

10. Zusammensetzung nach Anspruch 5, wobei es sich bei den Säurederivaten um Säureanhydride, Säureester oder Säureammoniumsalze handelt.

11. Zusammensetzung nach einem der Ansprüche 1 bis 10, wobei die Verbindung C1 ausgewählt ist aus der Gruppe bestehend aus Polyolen, Polyetheraminen, Klebrigmacherharzen, Organosilanen, Monosilyl- oder Polysilylpolymeren, Polyolestern und Mischungen davon.

12. Zusammensetzung nach einem der Ansprüche 1 bis 11, wobei die Verbindung C2 ausgewählt ist aus Alkoholen, beispielsweise aus Isopropanol, Isobutanol, Butanol, Methanol, 2-Butoxyethanol und Mischungen davon.

13. Zusammensetzung nach einem der Ansprüche 1 bis 12, wobei das Verhältnis von Katalysator(en) zu Verbindung(en) C in der Zusammensetzung B im Bereich von 0,01:99,99 bis 95:5, vorzugsweise von 5:95 bis 95:5, insbesondere von 5:95 bis 60:40, bevorzugt von 10:90 bis 50:50, vorteilhafterweise von 20:80 bis 50:50, liegt.

14. Zusammensetzung nach einem der Ansprüche 1 bis 13, wobei die Zusammensetzung B Wasser in einem Gehalt im Bereich von 0,05 bis 50 Massen-%, vorzugsweise von 0,1 bis 30 Massen-%, bevorzugt von 0,5 bis 15 Massen-%, insbesondere von 0,5 bis 10 Massen-%, bezogen auf die Gesamtmasse von Zusammensetzung B, umfasst.

15. Zusammensetzung nach einem der Ansprüche 1 bis 14, wobei der Gesamtgehalt an Katalysator im Bereich von 0,01 bis 10 Gew.-%, bevorzugt von 0,05 bis 4 Gew.-%, vorteilhafterweise von 0,1 bis 3 Gew.-%, insbesondere von 0,5 bis 2 Gew.-%, bezogen auf das Gesamtgewicht der Zusammensetzung, liegt.

16. Zusammensetzung nach einem der Ansprüche 1 bis 15, wobei das Massenverhältnis von Zusammensetzung A zu Zusammensetzung B im Bereich von 99,95:0,05 bis 90:10, vorzugsweise von 99,95:0,05 bis 95:5, bevorzugt von 99,5:0,5 bis 95:5, vorteilhafterweise von 99:1 bis 95:5, liegt.

17. Selbstklebeartikel, umfassend eine Trägerschicht, die mit einer selbstklebenden Schicht beschichtet ist, wobei die selbstklebende Schicht aus einer Zusammensetzung nach einem der Ansprüche 1 bis 16 im vernetzten Zustand

besteht.

**18.** Verfahren zum Heißaufbringen der mehrkomponentigen Klebstoffzusammensetzung (80) gemäß einem der Ansprüche 1 bis 16 auf einen Träger (96) mit Hilfe einer Anlage (20) zum Heißaufbringen der Klebstoffzusammensetzung, wobei die Anlage Folgendes aufweist:

- eine Düse (50) zum Aufbringen der mehrkomponentigen Klebstoffzusammensetzung;
- eine Leitung (88a) zum Zuführen der Zusammensetzung A der mehrkomponentigen Klebstoffzusammensetzung, die in fließfähiger Form aufzubringen ist;
- eine Leitung (66a) zum Zuführen der Zusammensetzung B der mehrkomponentigen Klebstoffzusammensetzung, die in fließfähiger Form aufzubringen ist;
- eine Leitung (88) zum Versorgen der Düse (50) mit der mehrkomponentigen Klebstoffzusammensetzung (80), die in fließfähiger Form aufzubringen ist;
- einen Mischer (30) zum Mischen mindestens der Zusammensetzungen A und B der mehrkomponentigen Klebstoffzusammensetzung;

wobei das Verfahren Folgendes umfasst:

- Versorgen der Zuführungsleitung (88) mit mindestens der Zusammensetzung A der mehrkomponentigen Klebstoffzusammensetzung;
- Versorgen der Zuführungsleitung (66a) mit mindestens der Zusammensetzung B der mehrkomponentigen Klebstoffzusammensetzung;
- Mischen von mindestens Zusammensetzung A und Zusammensetzung B der mehrkomponentigen Zusammensetzung mit Hilfe eines Mischers (30);
- Heißaufbringen der gemischten mehrkomponentigen Klebstoffzusammensetzung (80) auf den Träger mit Hilfe der Aufbringungsdüse (50).

**19.** Verfahren nach Anspruch 18, wobei es sich bei dem Mischer um einen statischen Mischer oder einen dynamischen Mischer handelt.

**20.** Verfahren nach Anspruch 18 oder 19, wobei die Anlage mehrere Mischer aufweist.

## Claims

**1.** Multicomponent adhesive composition, preferably a hot-melt pressure-sensitive adhesive composition, comprising:

- a composition A comprising:
    - ◦ at least one silyl polymer comprising at least one hydrolyzable alkoxysilane group;
    - ◦ at least one tackifying resin;
- a composition B comprising:
    - ◦ at least one catalyst;
    - ◦ at least one compound C chosen from:
        - ▪ a compound C1 with a number-average molecular mass ranging from 300 g/mol to 500 000 g/mol, said number-average molecular mass being measured by size exclusion chromatography using polystyrene standards; and
        - ▪ a compound C2 with a vapor pressure at 20°C of greater than or equal to 0.08 kPa;
        - ▪ and mixtures thereof;

the composition A:composition B mass ratio ranging from 99.98:0.02 to 60:40, preferably from 99.95:0.05 to 60:40, and preferentially from 99.95:0.05 to 80:20, and even more preferentially from 99.95:0.05 to 90:10;
the total content of catalyst ranging from 0.01% to 10% by weight and preferably from 0.01% to 5% by weight relative to the total weight of said adhesive composition.

**2.** Composition according to Claim 1, in which the silyl polymer including at least one hydrolyzable alkoxysilane group, of composition A, is chosen from the polymers of formulae (II), (III), (IV) or (V) as defined below, and mixtures thereof:

$$(R^5O)_{3-p}(R^4)_pSi\text{-}R^0\text{-}[OR^2]_n\text{-}R^0\text{-}Si(R^4)p(OR^5)_{3-p} \qquad (II)$$

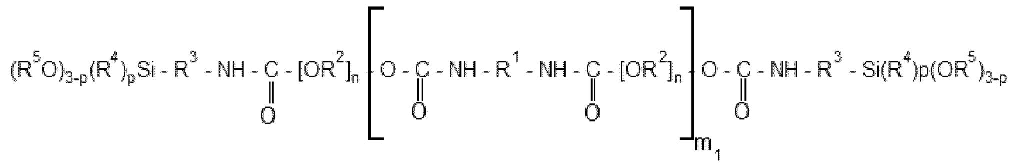

(III)

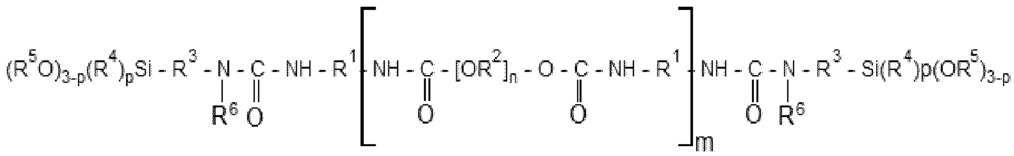

(IV)

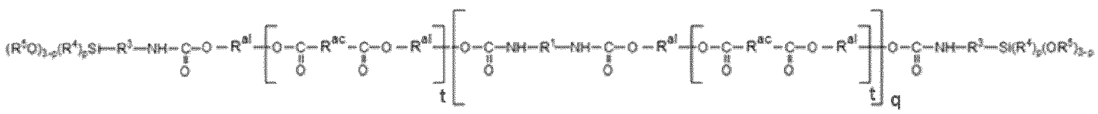

(V)

in which:

- $R^1$ represents a divalent hydrocarbon-based radical comprising from 5 to 15 carbon atoms, which may be aromatic or aliphatic, linear, branched or cyclic,
- $R^0$ represents a linear or branched divalent alkylene radical comprising from 3 to 6 carbon atoms,
- $R^3$ represents a linear or branched divalent alkylene radical comprising from 1 to 6 carbon atoms, $R^3$ preferably representing methylene or n-propylene,
- $R^2$ represents a linear or branched divalent alkylene radical comprising from 2 to 4 carbon atoms,
- $R^4$ and $R^5$, which may be identical or different, each represent a linear or branched alkyl radical comprising from 1 to 4 carbon atoms,
- $R^6$ represents a hydrogen atom, a phenyl radical, a linear, branched or cyclic alkyl radical comprising from 1 to 6 carbon atoms, or a 2-succinate radical of formula:

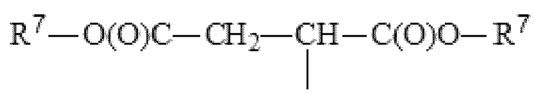

in which $R^7$ is a linear or branched alkyl radical comprising from 1 to 6 carbon atoms,
- n is an integer such that the number-average molecular mass of the polyether block of formula $-[OR^2]_n-$ ranges from 300 g/mol to 40 000 g/mol in the polymers of formulae (II), (III) and (IV),
- $m_1$ is zero or an integer,
- n and $m_1$ are such that the number-average molecular mass of the polymer of formula (III) ranges from 500 g/mol to 50 000 g/mol, preferably from 700 g/mol to 20 000 g/mol,
- m is an integer other than zero,
- n and m are such that the number-average molecular mass of the polymer of formula (IV) ranges from 500 g/mol to 50 000 g/mol, preferably from 700 g/mol to 20 000 g/mol,
- p is an integer equal to 0, 1 or 2, p preferably being 0 or 1,
- $R^{al}$ represents a divalent hydrocarbon-based radical derived from a diol by replacement of each of the two hydroxyl groups with a free valency;

- $R^{ac}$ represents a divalent hydrocarbon-based radical derived from a dicarboxylic acid by replacement of each of the two carboxyl groups -COOH with a free valency;
- t is a number such that the polyester diol of formula (VI):

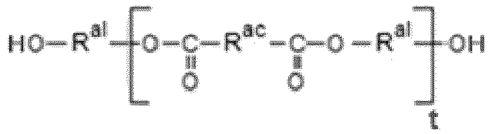

(VI)

has a hydroxyl number $I_{OH}$ of between 4 and 60 mg KOH/g;
- q is an integer other than zero,
- t and q are such that the number-average molecular mass of the polymer of formula (V) is between 400 g/mol and 50 000 g/mol.

3. Composition according to Claim 2, in which the silyl polymer, of composition A, is chosen from:

- a polymer of formula (III) in which:

  - $m_1$ is an integer equal to 0,
  - p = 1,
  - $R^4$ and $R^5$ each represent a methyl radical,
  - $R^3$ represents a divalent methylene radical,
  - the number-average molar mass of said polymer ranges from 5000 to 30 000 g/mol, preferentially from 10 000 to 20 000 g/mol, in particular from 14 000 to 15 000 g/mol.

- a polymer of formula (III) in which:

  - $m_1$ is an integer other than 0,
  - p = 0,
  - $R^3$ represents a divalent propylene radical,
  - $R^5$ represents a methyl radical,
  - the number-average molecular mass of said polymer ranges from 5000 to 30 000 g/mol, preferentially from 10 000 to 30 000 g/mol, in particular from 15 000 to 25 000 g/mol.

- a polymer of formula (V) in which:

  - q is an integer other than 0,
  - p = 0,
  - $R^3$ represents a divalent propylene radical,
  - $R^5$ represents a methyl radical,
  - the number-average molecular mass of said polymer ranges from 5000 to 30 000 g/mol, preferentially from 10 000 to 30 000 g/mol, in particular from 15 000 to 25 000 g/mol.

4. Composition according to any one of Claims 1 to 3, in which composition A also comprises at least one additive, chosen, for example, from the group consisting of plasticizers, solvents, pigments, dyes, adhesion promoters, moisture absorbers, UV stabilizers, antioxidants, glitter flakes, fluorescent materials, rheological additives, fillers, flame retardants, waxes, and mixtures thereof.

5. Composition according to any one of Claims 1 to 4, in which the catalyst is chosen from the group consisting of amines, organometallic compounds, acids and derivatives thereof, and mixtures thereof.

6. Composition according to Claim 5, in which the amines are chosen from the group consisting of triethylamine, tributylamine, tetramethylguanidine, 1,8-diazabicyclo[5.4.0]-7-undecene, 1,4-diazabicyclo[2.2.2]octane, 1,5-diazabicyclo[4.3.0]non-5-ene, N,N-bis(N,N-dimethyl-2-aminoethyl)methylamine, N,N-dimethylcyclohexylamine, N,N-dimethylphenylamine, N-ethylmorpholine, and mixtures thereof.

**7.** Composition according to Claim 5, in which the acids are chosen from:

- organic acid catalysts chosen, for example, from sulfonic acids, carboxylic acids, organophosphate acids, organophosphonate acids, phosphonic acids, and mixtures thereof,
- inorganic acid catalysts chosen, for example, from phosphoric or orthophosphoric acid, phosphorous acid, hypophosphorous acid, or sulfuric acid, in particular orthophosphoric acid,
- and mixtures thereof.

**8.** Composition according to Claim 7, in which the organophosphate acids are chosen from the group consisting of C1-C22 mono- or dialkyl phosphate acids and mixtures thereof, for instance butyl phosphate, dibutyl phosphate, bis(2-ethylhexyl) phosphate, 2-ethylhexyl phosphate, and mixtures thereof; mono- or diaryl phosphates, and mixtures thereof, for instance monophenyl phosphate, diphenyl phosphate and mixtures thereof; alkyl phenyl phosphates; and mixtures thereof.

**9.** Composition according to Claim 7, in which the sulfonic acids are chosen from N-alkylaminoalkylsulfonic acids and N,N-dialkylaminoalkylsulfonic acids, for instance 2-(N-morpholino)ethanesulfonic acid, 3-(N-morpholino)propanesulfonic acid, 4-[N-morpholino]butanesulfonic acid, 1,4-piperazinediethanesulfonic acid, N-2-hydroxyethylpiperazine-N'-2-ethanesulfonic acid, 2-(N-morpholino)ethanesulfonic acid, N-morpholinomethanesulfonic acid, N-(2-hydroxyethyl)piperazine-N'-methanesulfonic acid, piperazine-N,N'-bis(methanesulfonic acid), cyclohexylaminomethanesulfonic acid, N-[tris(hydroxymethyl)methyl]aminomethanesulfonic acid, N,N-bis(2-hydroxyethyl)aminomethanesulfonic acid; para-toluenesulfonic acid; benzenesulfonic acid; methanesulfonic acid; dodecylbenzenesulfonic acid; dodecylbenzenedisulfonic acid; dinonylnaphthalenedisulfonic acid; dinonylnaphthalenesulfonic acid; trifluoromethylsulfonic acid; and mixtures thereof.

**10.** Composition according to Claim 5, in which the acid derivatives are acid anhydrides, acid esters, or acid ammonium salts.

**11.** Composition according to any one of Claims 1 to 10, in which compound C1 is chosen from the group consisting of polyols, polyetheramines, tackifying resins, organosilanes, monosilyl or polysilyl polymers, polyol esters, and mixtures thereof.

**12.** Composition according to any one of Claims 1 to 11, in which compound C2 is chosen from alcohols, for example from isopropanol, isobutanol, butanol, methanol, 2-butoxyethanol, and mixtures thereof.

**13.** Composition according to any one of Claims 1 to 12, in which the catalyst(s):compound(s) C ratio in composition B ranges from 0.01:99.99 to 95:5, preferably from 5:95 to 95:5, in particular from 5:95 to 60:40, preferentially from 10:90 to 50:50, advantageously from 20:80 to 50:50.

**14.** Composition according to any one of Claims 1 to 13, in which composition B comprises water in a content ranging from 0.05% to 50%, preferably from 0.1% to 30%, preferentially from 0.5% to 15%, in particular from 0.5% to 10% by mass relative to the total mass of composition B.

**15.** Composition according to any one of Claims 1 to 14, in which the total content of catalyst ranges from 0.01% to 10%, preferentially from 0.05% to 4%, advantageously from 0.1% to 3%, in particular from 0.5% to 2%, by weight relative to the total weight of said composition.

**16.** Composition according to any one of Claims 1 to 15, in which the composition A:composition B mass ratio ranges from 99.95:0.05 to 90:10, preferably from 99.95:0.05 to 95:5, preferentially from 99.5:0.5 to 95:5, advantageously from 99:1 to 95:5.

**17.** Self-adhesive article comprising a support layer coated with a self-adhesive layer, said self-adhesive layer consisting of a composition according to any one of Claims 1 to 16, in cured form.

**18.** Process for the hot application of the multicomponent adhesive composition (80), as defined in any one of Claims 1 to 16, to a support (96), by means of an installation (20) for the hot application of said adhesive composition, the installation comprising:

- a nozzle (50) for applying the multicomponent adhesive composition;

- a line (88a) for feeding composition A of the multicomponent adhesive composition to be applied in fluid form;
- a line (66a) for feeding composition B of the multicomponent adhesive composition to be applied in fluid form;
- a line (88) for feeding the nozzle (50) with the multicomponent adhesive composition (80) to be applied in fluid form;
- a mixer (30) for mixing at least compositions A and B of the multicomponent adhesive composition;

the process comprising:

- supplying the feed line (88) with at least composition A of the multicomponent adhesive composition;
- supplying the feed line (66a) with at least composition B of the multicomponent adhesive composition;
- mixing at least composition A and composition B of the multicomponent composition using a mixer (30);
- hot application of the mixed multicomponent adhesive composition (80) onto a support with the aid of the application nozzle (50).

**19.** Process according to Claim 18, in which the mixer is a static mixer or a dynamic mixer.

**20.** Process according to either of Claims 18 and 19, in which the installation comprises several mixers.

Fig.1

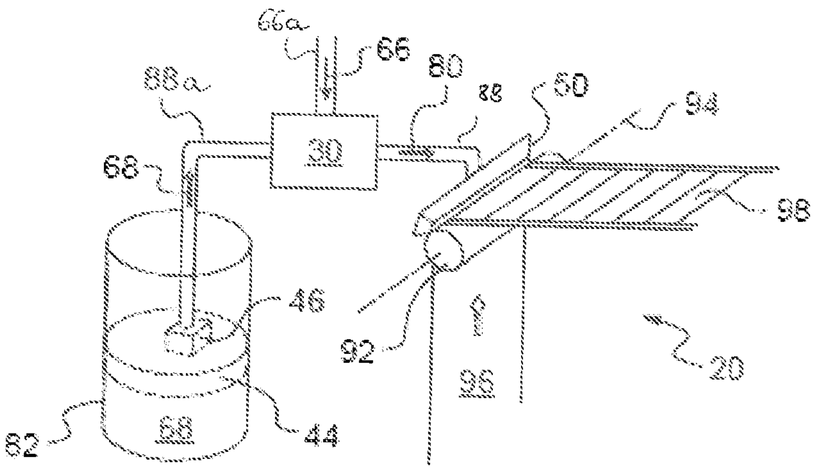


Fig.2

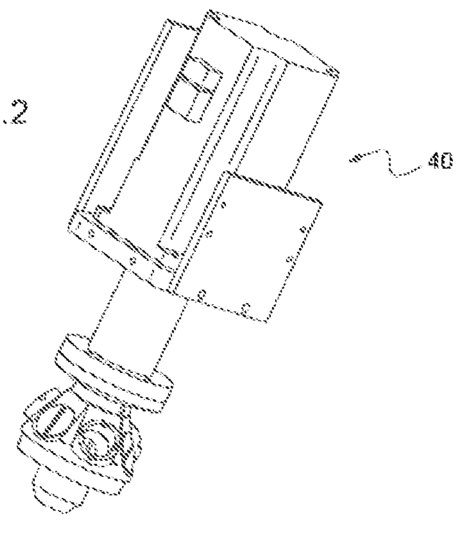

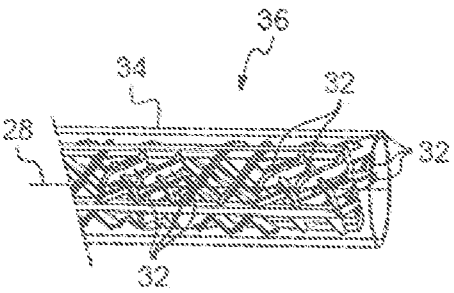


Fig.3

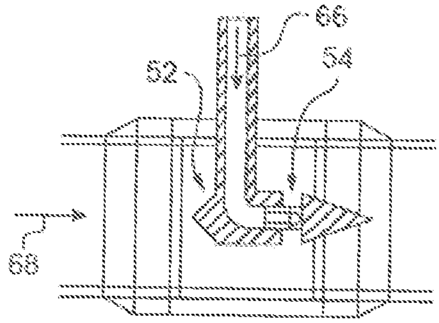


Fig.4

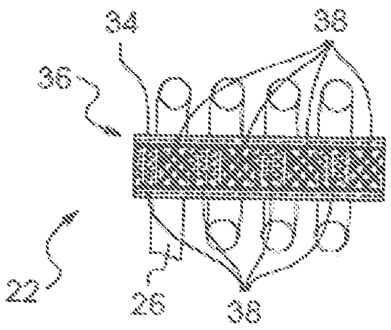


Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2889349 A
- EP 2886201 A
- EP 2336208 A
- WO 2009106699 A
- EP 1829928 A
- WO 2013136108 A
- EP 2865694 A
- EP 2865728 A
- FR 1591172


### Littérature non-brevet citée dans la description


- *CHEMICAL ABSTRACTS,* 107-21-1
- *CHEMICAL ABSTRACTS,* 4457-71-0
- *CHEMICAL ABSTRACTS,* 2157-31-5
- *CHEMICAL ABSTRACTS,* 53120-74-4
- *CHEMICAL ABSTRACTS,* 81554-20-3
- *CHEMICAL ABSTRACTS,* 126-30-7
- *CHEMICAL ABSTRACTS,* 115-76-4
- *CHEMICAL ABSTRACTS,* 78-26-2
- *CHEMICAL ABSTRACTS,* 115-84-4
- *CHEMICAL ABSTRACTS,* 14690-00-7
- *CHEMICAL ABSTRACTS,* 31952-16-6
- *CHEMICAL ABSTRACTS,* 24765-57-9
- *CHEMICAL ABSTRACTS,* 15208-19-2
- *CHEMICAL ABSTRACTS,* 49623-11-2
- *CHEMICAL ABSTRACTS,* 80220-07-1
- *CHEMICAL ABSTRACTS,* 928-40-5
- *CHEMICAL ABSTRACTS,* 4089-71-8
- *CHEMICAL ABSTRACTS,* 82111-97-5
- *CHEMICAL ABSTRACTS,* 23433-04-7
- *CHEMICAL ABSTRACTS,* 1117-86-8
- *CHEMICAL ABSTRACTS,* 23433-05-8
- *CHEMICAL ABSTRACTS,* 27143-31-3
- *CHEMICAL ABSTRACTS,* 109359-36-6
- *CHEMICAL ABSTRACTS,* 75656-41-6
- *CHEMICAL ABSTRACTS,* 3207-95-2
- *CHEMICAL ABSTRACTS,* 76779-60-7
- *CHEMICAL ABSTRACTS,* 85018-58-2
- *CHEMICAL ABSTRACTS,* 42789-13-9
- *CHEMICAL ABSTRACTS,* 40326-00-9
- *CHEMICAL ABSTRACTS,* 13686-96-9
- *CHEMICAL ABSTRACTS,* 85018-64-0
- *CHEMICAL ABSTRACTS,* 85018-65-1
- *CHEMICAL ABSTRACTS,* 85018-63-9
- *CHEMICAL ABSTRACTS,* 35449-36-6
- *CHEMICAL ABSTRACTS,* 48074-20-0
- *CHEMICAL ABSTRACTS,* 128705-94-2
- *CHEMICAL ABSTRACTS,* 112548-49-9
- *CHEMICAL ABSTRACTS,* 109217-58-5
- *CHEMICAL ABSTRACTS,* 48074-21-1
- *CHEMICAL ABSTRACTS,* 85018-66-2
- *CHEMICAL ABSTRACTS,* 35449-37-7
- *CHEMICAL ABSTRACTS,* 13006-29-6
- *CHEMICAL ABSTRACTS,* 1119-87-5
- *CHEMICAL ABSTRACTS,* 33666-71-6
- *CHEMICAL ABSTRACTS,* 85018-68-4
- *CHEMICAL ABSTRACTS,* 85018-69-5
- *CHEMICAL ABSTRACTS,* 85018-70-8
- *CHEMICAL ABSTRACTS,* 5658-47-9
- *CHEMICAL ABSTRACTS,* 80158-99-2
- *CHEMICAL ABSTRACTS,* 62870-49-9
- *CHEMICAL ABSTRACTS,* 38146-95-1
- *CHEMICAL ABSTRACTS,* 39516-24-0
- *CHEMICAL ABSTRACTS,* 39516-27-3
- *CHEMICAL ABSTRACTS,* 22092-59-7
- *CHEMICAL ABSTRACTS,* 20999-41-1
- *CHEMICAL ABSTRACTS,* 91635-53-9
- **ROBERT M. EVANS.** *Polyurethane Sealants,* ISBN 087762-998-6
- **W. WAGNER et al.** *International Steam Tables - Properties of Water and Steam based on the Industrial Formulation IAPWS-IF97*